(19) Europäisches Patentamt / European Patent Office / Office européen des brevets

(11) **EP 3 950 108 B1**

(12) **EUROPEAN PATENT SPECIFICATION**

(45) Date of publication and mention
of the grant of the patent:
**07.08.2024  Bulletin 2024/32**

(21) Application number: **20781750.3**

(22) Date of filing: **27.03.2020**

(51) International Patent Classification (IPC):
**C08F 220/06** (2006.01)     **C08F 220/10** (2006.01)
**C08F 220/44** (2006.01)     **C08L 33/20** (2006.01)
**H01M 4/13** (2010.01)       **H01M 4/139** (2010.01)
**H01M 4/62** (2006.01)       **H01G 11/38** (2013.01)
**H01B 1/20** (2006.01)       **H01B 1/24** (2006.01)
**C08K 3/01** (2018.01)       **C11D 3/37** (2006.01)

(52) Cooperative Patent Classification (CPC):
(C-Sets available)
**C11D 3/3769; C08F 8/48; C08F 220/44;**
**C09D 127/16; C09D 133/20; H01B 1/24;**
**H01G 11/38; H01M 4/139; H01M 4/62;** Y02E 60/10

(Cont.)

(86) International application number:
**PCT/JP2020/013883**

(87) International publication number:
**WO 2020/203714 (08.10.2020 Gazette 2020/41)**

(54) **DISPERSANT, DISPERSED MATERIAL, RESIN COMPOSITION, MIXTURE SLURRY, ELECTRODE FILM, AND NON-AQUEOUS ELECTROLYTE SECONDARY BATTERY**

DISPERGIERMITTEL, DISPERGIERTES MATERIAL, HARZZUSAMMENSETZUNG, MISCHUNGSSCHLAMM, ELEKTRODENFILM UND SEKUNDÄRBATTERIE MIT WASSERFREIEM ELEKTROLYT

DISPERSANT, MATÉRIAU DISPERSÉ, COMPOSITION DE RÉSINE, SUSPENSION DE MÉLANGE, FILM D'ÉLECTRODE ET BATTERIE RECHARGEABLE À ÉLECTROLYTE NON AQUEUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2019  JP 2019066507**
**10.05.2019  JP 2019089540**
**20.06.2019  JP 2019114283**
**29.07.2019  JP 2019138688**
**15.01.2020  JP 2020004142**
**27.01.2020  JP 2020010631**

(43) Date of publication of application:
**09.02.2022  Bulletin 2022/06**

(73) Proprietors:
• **artience Co., Ltd.**
**Tokyo 104-8377 (JP)**
• **Toyocolor Co., Ltd.**
**Tokyo, 104-0031 (JP)**

(72) Inventors:
• **SUZUKI, Yuta**
**Tokyo 104-0031 (JP)**
• **AOTANI, Yu**
**Tokyo 104-0031 (JP)**
• **MORITA, Yu**
**Tokyo 104-0031 (JP)**
• **HIRABAYASHI, Honami**
**Tokyo 104-0031 (JP)**
• **HOSHINO, Tomohiko**
**Tokyo 104-0031 (JP)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(74) Representative: **Becker, Eberhard**
**Becker Kurig & Partner**
**Patentanwälte mbB**
**Bavariastraße 7**
**80336 München (DE)**

(56) References cited:
**WO-A1-2012/091001**   **WO-A1-2018/235722**
**CN-A- 104 538 635**   **JP-A- 2006 073 495**
**JP-A- 2013 206 759**   **JP-A- 2013 206 759**
**JP-A- 2014 203 555**   **JP-A- 2016 186 894**
**JP-A- S62 221 433**   **JP-A- S62 221 433**

(52) Cooperative Patent Classification (CPC): (Cont.)

C-Sets
**C08F 8/48, C08F 120/44;**
**C09D 127/16, C08K 3/01, C08L 33/20;**
**C09D 127/16, C08K 3/041, C08L 33/20;**
**C09D 133/20, C08K 3/04;**
C08F 220/44, C08F 220/06, C08F 212/08;
C08F 220/44, C08F 220/1808;
C08F 220/44, C08F 220/20;
C08F 220/44, C08F 220/34;
C08F 220/44, C08F 220/40, C08F 220/06;
C08F 220/44, C08F 222/40;
C08F 220/44, C08F 226/06

**Description**

[Technical Field]

The present invention relates to a dispersant, a dispersed material, a resin composition, a mixture slurry, an electrode film, and a non-aqueous electrolyte secondary battery.

[Background Art]

Generally, it is known that, when inks and the like are produced, it is difficult to stably disperse pigments at a high concentration, which causes various problems in the production process and the product itself. For example, a dispersed material containing a pigment composed of fine particles often exhibits high viscosity, which not only makes it difficult to remove and transport a product from a dispersing machine, but also causes gelation during storage in the bad case, and it is difficult to use it. Furthermore, poor conditions such as decreased gloss and poor leveling occur on the surface of a colored obj ect.

Thus, a dispersant is generally used to maintain a good dispersion state. The dispersant has a structure including a part that adsorbs to a pigment and a part that has a high affinity for a dispersion medium, and the performance of the dispersant is determined by the balance of these two functional parts.

Generally, when the surface of a pigment is strongly hydrophobic, an adsorption mechanism using a hydrophilic and hydrophobic interaction according to the surface of the pigment is used in order to adsorb a dispersant to the pigment, and when there is a functional group on the surface of the pigment, an adsorption mechanism using an acid/base on the surface is used.

In addition, as a method of producing a film electrode of a lithium ion battery, a method of forming a mixture slurry containing a conductive material, an active material and a dispersant into a film is known.

Since the capacity of a lithium ion secondary battery largely depends on a positive electrode active material and a negative electrode active material, which are main materials, various materials therefor have been actively researched, but the charging capacities of the active materials that have been put into practical use have all reached a value close to the theoretical value thereof, and improvements therein have neared their limit. Therefore, since the capacity can be simply increased if the amount of an active material filled into a battery is increased, there have been attempts to reduce the amount of a conductive material or a binder added that does not directly contribute to the capacity.

Regarding this, a conductive material has a function of forming a conductive path inside the battery and preventing disconnection of the conductive path due to expansion and contraction of the active material by connecting active material particles, and in order to maintain the performance with a small amount of addition, it is effective to form an efficient conductive network using nanocarbons having a large specific surface area, specifically carbon nanotubes (CNT). However, since a nanocarbon having a large specific surface area has a strong cohesive force, there is a problem that it is difficult to favorably disperse it in a mixture slurry or an electrode.

For example, regarding the dispersion of carbon black and carbon nanotubes (hereinafter referred to as a CNT), Patent Literature 1 and 2 disclose a method of producing a dispersed material using a polymer dispersant such as a polyvinyl alcohol (hereinafter referred to as a PVA) or polyvinylpyrrolidone (hereinafter referred to as a PVP). However, polymer dispersants such as PVA and PVP exhibit an effect in polar solvents such as N-methyl-2-pyrrolidone and water, but do not exhibit an effect of dispersion in other dispersion mediums.

On the other hand, Patent Literature 3 discloses an electrode binder composition of a non-aqueous electrolyte solution type battery containing a polymer having a large number of repeating units derived from a monomer containing a nitrile group and having a weight average molecular weight of 500,000 to 2,000,000. According to Patent Literature 3, it is reported that a binding force improves as the polymer has an increasing molecular weight, and it is possible to increase the lifespan of the battery. Patent Literature 4 discloses a binder composition containing water and a water-soluble polymer containing nitrile group-containing monomer units and ethylenically unsaturated carboxylic acid monomer units, where the weight-average molecular weight falls within the range of 1,000 to 50,000.

[Citation List]

[Patent Literature]

[Patent Literature 1]
Japanese Patent Laid-Open No. 2014-193986
[Patent Literature 2]

Japanese Patent Laid-Open No. 2003-157846

[Patent Literature 3]

PCT International Publication No. WO 2012/091001

[Patent Literature 4]

PCT International Publication No. WO 2018/235722

[Summary of Invention]

[Technical Problem]

Since the above PVA and PVP are generally highly hydrophilic and have a property of being soluble in water, when used as a dispersant for carbon black, problems such as a decrease in water resistance of the coating film occur when a dispersed material is used as a coating film. For example, when a carbon dispersed material using PVA or PVP is used as a dispersed material for a lithium ion battery, problems such as deterioration in battery performance due to moisture absorption occur.

In addition, while PVA and PVP are highly hydrophilic and can secure dispersibility in water and hydrophilic solvents such as N-methylpyrrolidone (NMP), their solubility in other solvents is low, and it is difficult to deploy them in hydrophobic solvents. In addition, due to high hydrophilicity of PVA and PVP, the wettability with respect to pigments that are not highly hydrophilic is not sufficient, and the dispersion time tends to be relatively long in order to produce a stable dispersed material.

An objective of the present invention is to provide a dispersant which enables the production of a dispersed material having excellent dispersibility and storage stability even when the dispersant is used in a small amount as compared with conventional dispersants, a dispersed material having excellent dispersibility and storage stability, an electrode film having excellent adhesiveness and electrical conductivity, and a non-aqueous electrolyte secondary battery having excellent rate properties and cycle properties.

[Solution to Problem]

The invention is set out in the appended set of claims.

[Advantageous Effects of Invention]

According to the present invention, there are provided a dispersant which enables production of a dispersed material having excellent dispersibility and storage stability even when the dispersant is used in a small amount as compared with conventional dispersants, a dispersed material having excellent dispersibility and storage stability, an electrode film having excellent adhesiveness and electrical conductivity, and a non-aqueous electrolyte secondary battery having excellent rate properties and cycle properties.

[Brief Description of Drawings]

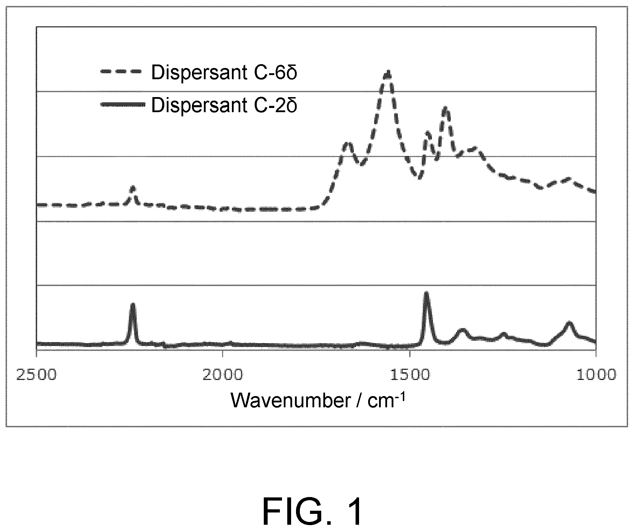

Fig. 1 is an infrared spectroscopic spectrum of a dispersant (C-2δ) and a dispersant (C-6δ) in infrared spectroscopic analysis according to a total reflection measurement method.

[Description of Embodiments]

First, the terms in this specification are defined.

The monomer is an ethylenically unsaturated group-containing monomer.

The polymer includes a homopolymer and a copolymer unless otherwise specified.

The monomer unit is a structural unit derived from the monomer contained in the polymer.

The proportion of the monomer units in the copolymer is based on the total amount (100% by mass) of the monomer units constituting the copolymer.

The term (meth)acrylonitrile is a general term for acrylonitrile and methacrylonitrile, and the same applies to (meth)acrylic acid and the like.

In this specification, "to" indicating a numerical range includes a lower limit value and an upper limit value thereof unless otherwise specified.

\<Dispersant\>

A dispersant of the present embodiment is a polymer containing 40 to 100% by mass of a (meth)acrylonitrile-derived unit and having a weight average molecular weight of 5,000 to 400,000.

This dispersant contains 40% by mass or more of a (meth)acrylonitrile-derived unit. The strong polarization of non-hydrogen bonding cyano groups and the carbon chain of the dispersed resin main chain can improve adsorption to an object to be dispersed and the affinity for a dispersion medium, and allows the object to be dispersed to be stably present in the dispersion medium. In addition, the weight average molecular weight of the dispersant is 5,000 to 400,000, and when the dispersant has an appropriate weight average molecular weight, adsorption to the object to be dispersed and the affinity for the dispersion medium are improved, and the stability of the dispersed material is excellent.

The dispersant of the present invention is preferably used in applications, such as for example, offset inks, gravure inks, resist inks for color filters, inkjet inks, paints, conductive materials, and colored resin compositions. The dispersant of the present invention prevents reaggregation of the object to be dispersed and has excellent fluidity, and thus good dispersion stability is obtained.

This dispersant is a copolymer composed of (meth)acrylonitrile-derived units, and one or more monomers selected from the group of an active hydrogen group-containing monomer (a), a basic monomer (b), or (meth)acrylic acid alkyl ester (c).

The active hydrogen group-containing monomer (a) is selected from the group consisting of a hydroxy group-containing monomer (a) and a carboxyl group-containing monomer (a2).

Examples of hydroxy group-containing monomers (a1) include 2-hydroxyethyl (meth)acrylate, 3-hydroxypropyl (meth)acrylate, 4-hydroxybutyl (meth)acrylate, glycerol mono(meth)acrylate, 4-hydroxyvinylbenzene, 2-hydroxy-3-phenoxypropyl acrylate and a caprolactone adduct of these monomers (the number of moles added is 1 to 5).

Examples of carboxyl group-containing monomers (a2) include unsaturated fatty acids such as (meth)acrylic acid, crotonic acid, itaconic acid, maleic acid, fumaric acid, and citraconic acid, and carboxyl group-containing (meth)acrylates such as 2-(meth)acryloyloxyethyl phthalate, 2-(meth)acryloyloxypropyl phthalate, 2-(meth)acryloyloxyethyl hexahydrophthalate, 2-(meth)acryloyloxypropyl hexahydrophthalate, ethylene oxide modified succinic acid (meth)acrylate, and $\beta$-carboxyethyl (meth)acrylate. In addition, examples of carboxyl group-containing monomers (a2) include acid anhydride group-containing monomers such as maleic anhydride, itaconic anhydride, and citraconic anhydride obtained by dehydration condensation of carboxyl group-containing monomers, and monofunctional alcohol adducts of the acid anhydride group-containing monomer.

Examples of primary amino group-containing monomers (a3) include aminomethyl (meth)acrylate, aminoethyl (meth)acrylate, allylamine hydrochloride, allylamine dihydrogen phosphate, 2-isopropenylaniline, 3-vinylaniline, and 4-vinylaniline.

Examples of secondary amino group-containing monomers (a4) include t-butylaminoethyl (meth)acrylate.

Examples of mercapto group-containing monomers (a5) include 2-(mercaptoacetoxy)ethyl acrylate, and allyl mercaptan.

The active hydrogen group-containing monomers (a) may be used alone or two or more thereof may be used in combination.

Among the active hydrogen group-containing monomers (a), in consideration of ease of availability of raw materials, ease of handling, affinity with a dispersion medium to be described below, and the like, the hydroxy group-containing monomer (a1) or the carboxyl group-containing monomer (a2) is used. Among the hydroxy group-containing monomers (al), hydroxyalkyl (meth)acrylates are preferable, hydroxyethyl (meth)acrylate is more preferable, and hydroxyethyl acrylate is still more preferable. In addition, as the carboxyl group-containing monomer (a2), unsaturated fatty acids are preferable, (meth)acrylic acid is used, and acrylic acid is still more preferable.

The basic monomer (b) is a monomer having a basic group. Examples of basic groups include a tertiary amino group, an amide group, a pyridine ring, and a maleimide group. Here, monomers having a primary amino group and monomers having a secondary amino group may be included in the basic monomers, but in the present invention, they are treated as active hydrogen group-containing monomers and are not included in the basic monomers.

Examples of basic monomers (b) include dialkylaminoalkyl (meth)acrylates such as dimethylaminoethyl (meth)acrylate, and dimethylaminopropyl (meth)acrylate; N-substituted (meth)acrylamides such as (meth)acrylamide, N,N-diethyl (meth)acrylamide, N-isopropyl (meth)acrylamide, and acryloyl morpholine; heterocyclic aromatic amine-containing vinyl monomers such as 1-vinylpyridine, 4-vinylpyridine, and 1-vinylimidazole;

N-(alkylaminoalkyl) (meth)acrylamides such as N-(dimethylaminoethyl) (meth)acrylamide, and N-(dimethylaminopropyl)acrylamide; and

N,N-alkyl (meth)acrylamides such as N,N-dimethyl (meth)acrylamide and N,N-diethyl (meth)acrylamide.

The basic monomers (b) may be used alone or two or more thereof may be used in combination.

Among the basic monomers (b), in consideration of ease of availability of raw materials, ease of handling, and affinity with a dispersion medium to be described below, dimethylaminoethyl (meth)acrylate or dimethylaminopropyl (meth)acrylate is preferable, and dimethylaminoethyl acrylate is more preferable.

The (meth)acrylic acid alkyl ester (c) is a monomer having a structure represented by $(R^1)_2C=C-CO-O-R^2$ (where, $R^1$'s are a hydrogen atom or a methyl group, and at least one is a hydrogen atom, and $R^2$ is an alkyl group that may have a substituent).

Here, those containing an active hydrogen group or a basic group as a substituent for an alkyl group are treated as the active hydrogen group-containing monomer (a) or the basic monomer (b), and are not included in the (meth)acrylic acid alkyl ester (c).

Examples of (meth)acrylic acid alkyl esters (c) include chain-like alkyl group-containing (meth)acrylic acid esters such as methyl (meth)acrylate, ethyl (meth)acrylate;

branched alkyl group-containing (meth)acrylic acid esters such as 2-ethylhexyl (meth)acrylate, (meth)isostearyl acrylate;
cyclic alkyl group-containing (meth)acrylic acid esters such as cyclohexyl (meth)acrylate, isobornyl (meth)acrylate;
aromatic ring substituted alkyl group-containing (meth)acrylic acid alkyl esters such as benzyl (meth)acrylate, phenoxyethyl (meth)acrylate;
(meth)acrylic acid alkyl esters in which a fluoro group is substituted such as trifluoroethyl (meth)acrylate and tetrafluoropropyl (meth)acrylate;
epoxy group-containing (meth)acrylic acid alkyl esters such as glycidyl (meth)acrylate, and (3-ethyl oxetane-3-yl)methyl (meth)acrylate and heterocyclic (meth)acrylates such as tetrahydrofurfuryl (meth)acrylate and 3-methyloxetanyl (meth)acrylate;
silyl ether group-containing (meth)acrylic acid alkyl esters such as 3-methacryloxypropylmethyldimethoxysilane;
alkyloxy group-containing (meth)acrylic acid alkyl esters such as 2-methoxyethyl (meth)acrylate, and (meth)polyethylene glycol monomethyl ether acrylate; and
cyclic polymerizable monomers such as 2-(allyloxymethyl)methyl acrylate.

The (meth)acrylic acid alkyl esters (c) may be used alone or two or more thereof may be used in combination.

Among the (meth)acrylic acid alkyl esters (c), in consideration of ease of availability of raw materials, ease of handling, and affinity with a dispersion medium to be described below, ethyl (meth)acrylate, butyl (meth)acrylate, 2-ethylhexyl (meth)acrylate, or (meth)lauryl acrylate is preferable, and 2-ethylhexyl acrylate or lauryl acrylate is more preferable.

When this dispersant is a polymer containing a (meth)acrylonitrile-derived unit and a unit derived from one or more monomers selected from the group consisting of the active hydrogen group-containing monomer (a), the basic monomer (b), and the (meth)acrylic acid alkyl ester (c), the proportion of the unit of the (meth)acrylonitrile-derived monomer is 65 to 99% by mass, and particularly preferably 75 to 99% by mass.

In addition, the proportion of the unit derived from the active hydrogen group-containing monomer (a), the basic monomer (b), and the (meth)acrylic acid alkyl ester (c) is 1 to 35% by mass, and still more preferably 1 to 30% by mass.

A total amount of the proportion of the unit of the (meth)acrylonitrile-derived monomer and the proportion of the unit derived from the active hydrogen group-containing monomer (a), the basic monomer (b), and the (meth)acrylic acid alkyl ester (c) is preferably 80% by mass or more, more preferably 90% by mass or more, still more preferably 95% by mass or more, and most preferably 98% by mass or more.

With inclusion in these ranges, the affinity between the object to be dispersed and the dispersion medium is further improved and the dispersibility is further improved.

This dispersant may further include other monomer units. Examples of monomers constituting other monomer units include styrenes such as styrene and α-methylstyrene;

vinyl ethers such as ethyl vinyl ether, n-propyl vinyl ether, isopropyl vinyl ether, n-butyl vinyl ether, and isobutyl vinyl ether;
vinyl fatty acids such as vinyl acetate and vinyl propionate; and
N-substituted maleimides such as N-phenylmaleimide and N-cyclohexylmaleimide.

The dispersant of the present invention can disperse various objects to be dispersed such as a conductive material, a coloring agent, and cellulose fibers.

A method of producing a dispersant is not particularly limited, and examples thereof include a solution polymerization method, a suspension polymerization method, a bulk polymerization method, an emulsification polymerization method, and precipitation polymerization method, and a solution polymerization method or a precipitation polymerization method is preferable. Examples of polymerization reaction systems include addition polymerization such as ion polymerization, free radical polymerization, and living radical polymerization, and free radical polymerization or living radical polymerization is preferable. In addition, examples of radical polymerization initiators include peroxide and azo-based initiators. A molecular weight adjusting agent such as a chain transfer agent can be used when a dispersant is polymerized.

Examples of chain transfer agents include alkyl mercaptans such as octyl mercaptan, nonyl mercaptan, decyl mercaptan, dodecyl mercaptan, and 3-mercapto-1,2-propanediol, thioglycolic acid esters such as octyl thioglycolate, nonyl thioglycolate, and 2-ethylhexyl thioglycolate, and 2,4-diphenyl-4-methyl-1-pentene, 1-methyl-4-isopropylidene-1-cyclohexene, α-pinene, and β-pinene. In particular, 3-mercapto-1,2-propanediol, thioglycolic acid esters, 2,4-diphenyl-4-methyl-1-pentene, 1-methyl-4-isopropylidene-1-cyclohexene, α-pinene, β-pinene or the like is preferable because the obtained polymer has a low odor.

The amount of the chain transfer agent used with respect to 100 parts by mass of all monomers is preferably 0.01 to 4% by mass and more preferably 0.1 to 2% by mass. When the amount of the chain transfer agent is within the above range, the molecular weight of the dispersant of the present invention can be adjusted to be within an appropriate molecular weight range.

The weight average molecular weight of the dispersant is 5,000 or more and 100,000 or less in terms of a polystyrene conversion value. When the dispersant has an appropriate weight average molecular weight, adsorption to the object to be dispersed and the affinity for the dispersion medium is improved, and the stability of the dispersed material is further improved.

Among these, in order to prevent precipitation of the dispersed material and improve the strength of the coating film, the weight average molecular weight is preferably 50,000 or more.

In addition, in order to improve the fluidity and processability of the dispersed material, the weight average molecular weight is preferably 5,000 or more, more preferably 6,000 or more, and still more preferably 7,000 or more, and preferably 75,000 or less, and still more preferably 50,000 or less

In this dispersant, the acrylonitrile-derived unit may form a cyclic structure. When the acrylonitrile-derived unit has a cyclic structure, the dispersibility and the storage stability are further improved. When the polymer obtained by the polymerization method is treated with an alkali, the acrylonitrile-derived unit changes to a cyclic structure such as a hydrogenated naphthyridine ring. The dispersibility of this dispersant is further improved by the presence of the cyclic structure. Here, the alkaline treatment may be performed at an arbitrary timing after the copolymer is synthesized, and when heating is performed, the structure easily changes to a ring structure. In order for the acrylonitrile-derived unit to form a cyclic structure, the acrylonitrile-derived unit needs to have at least two consecutive partial structures, and preferably has three or more consecutive partial structures. A polymer having two or more consecutive partial structures is easily obtained when it contains 65% by mass or more of the acrylonitrile-derived unit, for example, when a random polymer is polymerized by addition polymerization such as free radical polymerization. In addition, it can also be obtained by polymerizing a block polymer by addition polymerization such as ion polymerization or living radical polymerization.

In addition, when this dispersant has a (meth)acrylic acid-derived unit, the (meth)acrylic acid unit may form a cyclic structure.

When it has a (meth)acrylic acid unit, since a glutarimide ring may be formed as a cyclic structure together with the acrylonitrile-derived unit by an alkaline treatment, a ring structure such as a hydrogenated naphthyridine ring and a glutarimide ring exist together. Thereby, the dispersion stability is further improved. When this dispersant is a polymer having a (meth)acrylic acid unit that forms a cyclic structure, the amount of (meth)acrylic acid units based on all monomer units of the copolymer is preferably 1 to 35% by mass, and still more preferably 1 to 30% by mass. In addition, the amount of acrylonitrile-derived units based on all monomer units of the copolymer is preferably 40 to 99% by mass, more preferably 55 to 99% by mass, still more preferably 65 to 99% by mass, and particularly preferably 75 to 99% by mass. In order to form the glutarimide ring, at least the acrylonitrile-derived unit and the acrylic acid unit need to have adjacent partial structures.

[Dispersed material]

The dispersed material of the present embodiment contains a dispersion medium, the above dispersant, and an object to be dispersed. When this dispersed material contains this dispersant, a dispersed material having excellent dispersibility and storage stability of the object to be dispersed is obtained.

This dispersed material contains at least a dispersion medium, a dispersant, and an object to be dispersed, and may further contain other components as necessary. Hereinafter, components that can be contained in the dispersed material will be described, but since the dispersant is as described above, description thereof here will be omitted.

<Object to be dispersed>

The object to be dispersed is particles dispersed in the dispersion medium, and may be appropriately selected depending on applications of the dispersed material. Examples of objects to be dispersed include coloring agents such as an organic pigment, a conductive material, an insulating material, and fibers. Here, needless to say, the object to be dispersed is not limited thereto.

Examples of coloring agents include various organic pigments and inorganic pigments used for inks and the like. Examples of pigments include soluble azo pigments, insoluble azo pigments, phthalocyanine pigments, quinacridone pigments, isoindolinone pigments, isoindoline pigments, perylene pigments, perinone pigments, dioxazine pigments, anthraquinone pigments, dianthraquinonyl pigments, anthrapyrimidine pigments, anthanthrone pigments, indanthrone pigments, flavanthrone pigments, pyranthrone pigments, and diketopyrrolopyrrole pigments. Hereinafter, specific examples shown with color index numbers include Pigment Black 7, Pigment Blue 6, 15, 15:1, 15:3, 15:4, 15:6, 60, Pigment Green 7, 36, Pigment Red 9, 48, 49, 52, 53, 57, 97, 122, 144, 146, 149, 166, 168, 177, 178, 179, 185, 206, 207, 209, 220, 221, 238, 242, 254, 255, Pigment Violet 19, 23, 29, 30, 37, 40, 50, Pigment Yellow 12, 13, 14, 17, 20, 24, 74, 83, 86, 93, 94, 95, 109, 110, 117, 120, 125, 128, 137, 138, 139, 147, 148, 150, 151, 154, 155, 166, 168, 180, 185, and Pigment Orange 13, 36, 37, 38, 43, 51, 55, 59, 61, 64, 71, and 74.

When the object to be dispersed is a coloring agent, applications of the dispersed material include, for example, offset inks, gravure inks, resist inks for color filters, inkjet inks, paints, and a resin composition for molding.

Examples of insulating materials include metal oxides such as titanium dioxide, iron oxide, antimony trioxide, zinc oxide, and silica, cadmium sulfide, calcium carbonate, barium carbonate, barium sulfate, clay, talc, and chrome yellow.

When the object to be dispersed is an insulating material, applications of the dispersed material include, for example, an insulating film for an electronic circuit.

Examples of fibers include organic fibers such as aromatic polyamide (aramid) fibers, acrylic fibers, cellulose fibers, and phenol resin fibers, and metal fibers such as steel fibers, copper fibers, alumina fibers, and zinc fibers; inorganic fibers such as glass fibers, rock wool, ceramic fibers, biodegradable fibers, biosoluble fibers, and wallastonite fibers; and carbon fibers. Among these, cellulose fibers are preferable.

When the object to be dispersed is a fiber, applications of the dispersed material include applications that take advantage of a high heat resistance, a low coefficient of linear expansion, a high elastic modulus, a high strength, and high transparency that the fiber has, for example, adhesives, various paints, packaging materials, gas barrier materials, electronic members, molded products, and structures.

When the object to be dispersed is a conductive material, applications of the dispersed material include, for example, a power storage device, an antistatic material, an electronic component, a transparent electrode (ITO film) substitute, and an electromagnetic wave shield. Examples of power storage devices include an electrode for a non-aqueous electrolyte secondary battery, an electrode for an electric double layer capacitor, and an electrode for a non-aqueous electrolyte capacitor. In this case, the conductive material is a carbon material. Examples of antistatic materials include IC trays of plastic and rubber products and molded products of electronic component materials. Hereinafter, a dispersed material in which the object to be dispersed is a conductive material may be referred to as a conductive dispersed material.

Examples of conductive materials include metal powders such as gold, silver, bronze, silver-plated copper powder, silver-copper composite powder, silver-copper alloys, amorphous copper, nickel, chromium, palladium, rhodium, ruthenium, indium, silicon, aluminum, tungsten, molybdenum, and platinum, inorganic powders coated with these metals, powders of metal oxides such as silver oxide, indium oxide, tin oxide, zinc oxide, and ruthenium oxide, inorganic powders coated with these metal oxides, and carbon materials such as carbon black, graphite, carbon nanotubes and carbon nanofibers. These conductive materials may be used alone or two or more thereof may be used in combination. Among these conductive materials, in consideration of the adsorption performance of the dispersant, carbon black is preferable, and carbon nanotubes and carbon nanofibers are more preferable.

Examples of carbon blacks include acetylene black, furnace black, hollow carbon black, channel black, thermal black, and ketjen black. In addition, carbon black may be neutral, acidic, or basic, and oxidized carbon black or graphitized carbon black may be used.

As the carbon black, various types of commercially available acetylene black, furnace black, hollow carbon black, channel black, thermal black, and ketjen black can be used. In addition, carbon black subjected to an oxidation treatment and carbon black subjected to a graphitization treatment, which are generally performed, can be used.

Carbon nanotubes have a shape in which flat graphite is wound into a cylindrical shape. The carbon nanotubes may be a mixture of single-walled carbon nanotubes. Single-walled carbon nanotubes have a structure in which one layer of graphite is wound. Multi-walled carbon nanotubes have a structure in which two or three or more layers of graphite are wound. In addition, the side wall of the carbon nanotubes does not have a graphite structure. For example, a carbon nanotube having a side wall having an amorphous structure can be used as the carbon nanotubes.

Carbon nanotubes (CNT) include flat graphite wound in a cylindrical shape, single-walled carbon nanotubes, and multi-walled carbon nanotubes, and these may be mixed. Single-walled carbon nanotubes have a structure in which one layer of graphite is wound. Multi-walled carbon nanotubes have a structure in which two or three or more layers of graphite are wound. In addition, the side wall of the carbon nanotube does not have to have a graphite structure. In addition, for example, a carbon nanotube having a side wall having an amorphous structure is also a carbon nanotube in this specification.

The shape of carbon nanotubes is not limited. Examples of such a shape include various shapes including a needle shape, a cylindrical tube shape, a fishbone shape (fishbone or cup stacked shape), a playing card shape (platelet) and a coil shape. In the present embodiment, among these, the shape of carbon nanotubes is preferably a needle shape or a cylindrical tube shape. The carbon nanotubes may have a single shape or a combination of two or more shapes.

Examples of forms of carbon nanotubes include graphite whisker, filamentous carbon, graphite fibers, ultra-fine carbon tubes, carbon tubes, carbon fibrils, carbon microtubes and carbon nanofibers. The carbon nanotubes may have a single form or a combination of two or more forms.

When the conductive material is a carbon material, the BET specific surface area thereof is preferably 20 to 1,000 $m^2/g$ and more preferably 150 to 800 $m^2/g$. The average outer diameter of the carbon nanotubes is preferably 1 to 30 nm and more preferably 1 to 20 nm. Here, the average outer diameter is first captured by observing a conductive material under a transmission electron microscope. Next, in the observation image, any 300 pieces of conductive material are selected and the particle size and outer diameter thereof are measured. Next, regarding the number average of the outer diameter, the average particle size (nm) and the average outer diameter (nm) of the conductive material are calculated.

When the conductive material is a carbon nanotube, the carbon purity is represented by a content (% by mass) of carbon atoms in the conductive material. The carbon purity with respect to 100% by mass of the conductive material is preferably 90% by mass or more, more preferably 95% by mass or more, and still more preferably 98% by mass or more.

The volume resistivity of the conductive material is preferably $1.0 \times 10^{-3}$ to $1.0 \times 10^{-1}$ Ω·cm and more preferably $1.0 \times 10^{-3}$ to $1.0 \times 10^{-2}$ Ω·cm. The volume resistivity of the conductive material can be measured using a powder resistivity measuring device (commercially available from Mitsubishi Chemical Analytech Co., Ltd.: Loresta GP powder resistivity measurement system MCP-PD-51).

The content of the dispersant with respect to 100 parts by mass of the object to be dispersed is preferably 1 to 60 parts by mass and more preferably 3 to 50 parts by mass.

The content of the object to be dispersed based on the non-volatile content of the dispersed material is preferably 0.5 to 30% by mass and more preferably 1 to 20% by mass.

<Dispersion medium>

Examples of dispersion mediums include water, a water-soluble solvent, and a water-insoluble solvent, and these are used alone or a mixed solvent of two or more thereof is used. Regarding the water-soluble solvent, alcohol-based solvents (methanol, ethanol, propanol, isopropanol, butanol, isobutanol, secondary butanol, tertiary butanol, benzyl alcohol, etc.), polyhydric alcohol-based solvents (ethylene glycol, diethylene glycol, triethylene glycol, polyethylene glycol, propylene glycol, dipropylene glycol, polypropylene glycol, butylene glycol, hexanediol, pentanediol, glycerin, hexanetriol, thiodiglycol, etc.), polyhydric alcohol ether-based solvents (ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, polypropylene glycol monomethyl ether, polypylene glycol monoethyl ether, polypylene glycol monobutyl ether, ethylene glycol monomethyl ether acetate, triethylene glycol monomethyl ether, triethylene glycol monoethyl ether, triethylene glycol monobutyl ether, ethylene glycol monophenyl ether, polypylene glycol monophenyl ether, etc.), amine-based solvents (ethanolamine, diethanolamine, triethanolamine, N-methyl diethanolamine, N-ethyl diethanolamine, morpholine, N-ethylmorpholine, ethylenediamine, diethylene diamine, triethylene tetramine, tetraethylene pentamine, polyethyleneimine, pentamethyldiethylenetriamine, tetramethyl propylenediamine, etc.), amide-based solvents (N-methyl-2-pyrrolidone (NMP), N-ethyl-2-pyrrolidone (NEP), N,N-dimethylformamide, N,N-dimethylacetamide, N,N-diethylacetamide, N-methylcaprolactam, etc.), heterocyclic solvents (cyclohexylpyrrolidone, 2-oxazolidone, 1,3-dimethyl-2-imidazolidinone, γ-butyrolactone, etc.), sulfoxide-solvents (dimethyl sulfoxide, etc.), sulfone-based solvents (hexamethylphosphorotriamide, sulfolane, etc.), lower ketone-based solvents (acetone, methyl ethyl ketone, etc.), and additionally, tetrahydrofuran, urea, acetonitrile and the like can be used. Among these, water or an amide-based organic solvent is more preferable, and among amide-based organic solvents, N-methyl-2-pyrrolidone and N-ethyl-2-pyrrolidone are particularly preferable.

In addition, examples of water-insoluble solvents include ketones such as acetone, methyl ethyl ketone, methyl isobutyl ketone, and cyclohexanone; ether-based dispersion mediums such as tetrahydrofuran; aromatic compounds such as toluene, xylene, and mesitylene; nitrogen atom-containing compounds including amide-based dispersion media such as dimethylformamide and dimethylacetamide; sulfur atom-containing compounds including sulfoxide-based dispersion media such as dimethyl sulfoxide; and esters such as ethyl acetate, butyl acetate, propylene glycol monomethyl ether acetate, and γ-butyrolactone.

When this dispersed material is used for a non-aqueous electrolyte secondary battery, water or a water-soluble solvent is used, and water or NMP is particularly preferable.

In the case of a polymer containing more than 99% by mass and 100% or less of the (meth)acrylonitrile-derived unit, since the hydrophilicity of the polymer becomes very low, the polymer becomes insoluble and it becomes difficult for it to act as a dispersant when the dispersion medium is water. In addition, if the hydrophilicity becomes high as the polymer is completely and easily dissolved in water, the affinity with the dispersion medium becomes too high, and it becomes difficult for the polymer to act on the object to be dispersed.

In any case of the dispersion medium, when a monomer having an appropriate solvent affinity as described above according to the polarity of the dispersion medium is contained in an amount in the above preferable range, the balance of the affinity between the object to be dispersed and the dispersion medium is improved, and the dispersibility is improved. There is a concern that the dispersibility will decrease if any of the affinities for the object to be dispersed and the dispersion medium is too high or too low.

The dispersed material of the present invention contains an inorganic base, an inorganic metal salt, or an organic base. Thereby, the dispersion stability of the object to be dispersed over time is further improved. As the inorganic base and the inorganic metal salt, a compound having at least one of an alkali metal and an alkaline earth metal is preferable. Examples of inorganic bases and inorganic metal salts include chlorides, hydroxides, carbonates, nitrates, sulfates, phosphates, tungstates, vanadates, molybdates, niobates, and borates of alkali metals and alkaline earth metals. Among these, chlorides, hydroxides, and carbonates of alkali metals and alkaline earth metals are preferable because it can easily supply cations. Examples of alkali metal hydroxides include lithium hydroxide, sodium hydroxide, and potassium hydroxide. Examples of alkaline earth metal hydroxides include calcium hydroxide and magnesium hydroxide.

Examples of alkali metal carbonates include lithium carbonate, lithium hydrogen carbonate, sodium carbonate, sodium hydrogen carbonate, potassium carbonate, and potassium hydrogen carbonate.

Examples of alkaline earth metal carbonates include calcium carbonate and magnesium carbonate. Among these, lithium hydroxide, sodium hydroxide, lithium carbonate, and sodium carbonate are more preferable. Here, the metal contained in the inorganic base and inorganic metal salt of the present invention may be a transition metal.

Examples of organic bases include primary, secondary and tertiary alkylamines which may be substituted with 1 to 40 carbon atoms and other compounds containing a basic nitrogen atom.

Examples of primary alkylamines that may be substituted with 1 to 40 carbon atoms include propylamine, butylamine, isobutylamine, octylamine, 2-ethylhexylamine, laurylamine, stearylamine, oleylamine, 2-aminoethanol, 3-aminopropanol, 3-ethoxypropylamine, and 3-lauryloxypropylamine.

Examples of secondary alkylamines that may be substituted with 1 to 40 carbon atoms include dibutylamine, diisobutylamine, N-methylhexylamine, dioctylamine, distearylamine, and 2-methylaminoethanol.

Examples of tertiary alkylamines that may be substituted with 1 to 40 carbon atoms include triethylamine, tributylamine, N,N-dimethylbutylamine, N,N-diisopropylethylamine, dimethyloctylamine, tri-n-butylamine, dimethylbenzylamine, trioctylamine, dimethyldecylamine, dimethyllaurylamine, dimethylmyristylamine, dimethylpalmitylamine, dimethylstearylamine, dilaurylmonomethylamine, triethanolamine, and 2-(dimethylamino)ethanol.

Among these, primary, secondary or tertiaryalkylamines that may be substituted with 1 to 30 carbon atoms are preferable, and primary, secondary or tertiaryalkylamines that may be substituted with 1 to 20 carbon atoms are more preferable.

Examples of other compounds containing a basic nitrogen atom include 1,8-diazabicyclo[5.4.0]undecene-7 (DBU), 1,5-diazabicyclo[4.3.0]nonene-5 (DBN), 1,4-diazabicyclo[2.2.2]octane (DABCO), imidazole, and 1-methylimidazole.

A total amount of the inorganic base, inorganic metal salt, and organic base added with respect to 100 parts by mass of the dispersant is preferably 1 to 100 parts by mass and more preferably 1 to 50 parts by mass. When an appropriate amount is added, the dispersibility is further improved.

In the dispersed material of the present invention, as necessary, for example, other additives such as a wetting penetrating agent, an antioxidant, a preservative, a fungicide, a leveling agent, and an antifoaming agent, can be appropriately added as long as the objective of the present invention is not impaired, and can be added at an arbitrary timing such as before production of the dispersed material, during dispersion, and after dispersion.

<Dispersion method>

The dispersed material of the present invention is preferably produced by, for example, finely dispersing the object to be dispersed, the dispersant, and the dispersion medium using a dispersing device according to a dispersion treatment. Here, in the dispersion treatment, the timing at which the material to be used is added can be arbitrarily adjusted, and a multi-step treatment can be performed twice or more.

Examples of dispersing devices include a kneader, a 2-roll mill, a 3-roll mill, a planetary mixer, a ball mill, a horizontal sand mill, a vertical sand mill, an annual bead mill, an attritor, and a high-pressure homogenizer.

The dispersibility of the conductive material dispersed material can be evaluated by a complex modulus of elasticity and a phase angle according to dynamic viscoelasticity measurement. The complex modulus of elasticity of the conductive material dispersed material is smaller as the dispersibility of the dispersed material is better and the viscosity is lower. In addition, the phase angle is a phase shift of the response stress wave when the strain applied to the conductive material dispersed material is a sine wave, and in the case of a pure elastic component, since the strain becomes a sine wave with the same phase as the applied strain, the phase angle becomes 0°. On the other hand, in the case of a pure viscous component, the response stress wave is advanced by 90°. In a general viscoelastic sample, a sine wave having a phase angle of larger than 0° and smaller than 90° is obtained, and if the dispersibility of the conductive material dispersed material is good, the phase angle approaches 90°, which is an angle of the pure viscous component.

The complex modulus of elasticity of the conductive material dispersed material is preferably less than 20 Pa, more preferably 10 Pa or less, and particularly preferably 5 Pa or less. In addition, the phase angle of the conductive material dispersed material of the present embodiment is preferably 19° or more, more preferably 30° or more, and particularly preferably 45° or more, and preferably 90° or less, more preferably 85° or less, and particularly preferably 80° or less.

[Resin composition]

The resin composition of the present embodiment contains the above conductive dispersed material and a binder resin. Since this resin composition contains this dispersed material, it becomes a resin composition having excellent dispersibility and storage stability of the conductive material.

This resin composition contains at least a dispersion medium, a dispersant, a conductive material, and a binder resin, and as necessary, may further contain other components. Since components that can be contained in the dispersed material are as described above, the binder resin will be described below.

<Binder resin>

The binder resin is a resin for bonding substances. Examples of binder resins include polymers or copolymers containing ethylene, propylene, vinyl chloride, vinyl acetate, vinyl alcohol, maleic acid, acrylic acid, acrylic acid ester, methacrylic acid, methacrylic acid ester, acrylonitrile, styrene, vinyl butyral, vinyl acetal, vinylpyrrolidone, or the like as structural units; polyurethane resins, polyester resins, phenol resins, epoxy resins, phenoxy resins, urea resins, melamine resins, alkyd resins, acrylic resins, formaldehyde resins, silicone resins, and fluororesins; cellulose resins such as carboxymethyl cellulose; rubbers such as styrene butadiene rubber and fluorine rubber; and conductive resins such as polyaniline and polyacetylene. In addition, modified products and mixtures of these resins and copolymers may be used. Among these, when used as a binder resin for a positive electrode, in consideration of resistance, it is preferable to use a polymer compound having a fluorine atom in the molecule, for example, polyvinylidene fluoride (PVDF), polyvinyl fluoride, or tetrafluoroethylene. In addition, when used as a binder resin for a negative electrode, carboxymethyl cellulose (CMC), styrene butadiene rubber (SBR), or polyacrylic acid having good adhesiveness is preferable.

The weight average molecular weight of the binder resin is preferably 10,000 to 2,000,000, more preferably 100,000 to 1,000,000, and particularly preferably 200,000 to 1,000,000.

The content of the binder resin based on the non-volatile content of the resin composition is preferably 0.5 to 30% by mass, more preferably 0.5 to 25% by mass.

[Mixture slurry]

The mixture slurry of the present embodiment contains the above resin composition and an active material, and is made into a slurry in order to improve the uniformity and the processability.

<Active material>

The active material is a material that serves as the basis of a battery reaction. Active materials are divided into positive electrode active materials and negative electrode active materials according to electromotive force.

As the positive electrode active material, a compound is chosen from oxides of transition metals such as Fe, Co, Ni, and Mn, composite oxides with lithium, and transition metal sulfide. Specific examples thereof include transition metal oxide powders such as MnO, $V_2O_5$, $V_6O_{13}$, and $TiO_2$, composite oxide powders of lithium and transition metals such as lithium nickelate, lithium cobalt oxide, lithium manganate, and nickel manganese lithium cobalt oxide which have a layered structure, and lithium manganite having a spinel structure, a lithium iron phosphate material which is a phosphoric acid compound having an olivine structure, and transition metal sulfide powders such as $TiS_2$ and FeS. These positive electrode active materials may be used alone or a plurality thereof may be used in combination.

The negative electrode active material is chosen from metal Li, and alloys such as tin alloys, silicon alloys, and lead alloys which are alloys thereof, $Li_XFe_2O_3$, $Li_XFe_3O_4$, $Li_XWO_2$ (x is a number of 0<x<1), lithium titanate, lithium vanadium, and lithium siliconate, conductive polymers such as polyacetylene and poly-p-phenylene, artificial graphite such as highly graphitized carbon material or carbonaceous powder such as natural graphite, and carbon-based materials such as resin-baked carbon materials. These negative electrode active materials may be used alone or a plurality thereof may be used in combination.

The amount of the conductive material in the mixture slurry with respect to 100% by mass of the active material is preferably 0.01 to 10% by mass, preferably 0.02 to 5% by mass, and preferably 0.03 to 3% by mass.

The amount of the binder resin in the mixture slurry with respect to 100% by mass of the active material is preferably 0.5 to 30% by mass, more preferably 1 to 25% by mass, and particularly preferably 2 to 20% by mass.

The amount of the non-volatile content of the mixture slurry with respect to 100% by mass of the mixture slurry is preferably 30 to 90% by mass, more preferably 30 to 85% by mass, and more preferably 40 to 80% by mass.

The mixture slurry can be produced by various conventionally known methods. For example, a production method of adding an active material to a conductive material and a production method of adding an active material to a conductive material dispersed material and then adding a binder resin may be exemplified.

In order to obtain a mixture slurry, it is preferable to add an active material to a conductive material and then perform a treatment for dispersion. A dispersing device used for performing such a treatment is not particularly limited. For the mixture slurry, a mixture slurry can be obtained using the dispersion device described in the conductive material dispersed material.

[Electrode film]

An electrode film (F) of the present embodiment is formed by forming the mixture slurry into a film. For example, a mixture slurry is applied and dried on a current collector, and thus a coating film in which an electrode mixture layer is formed is obtained.

The material and shape of the current collector used for the electrode film are not particularly limited, and those suitable for various secondary batteries can be appropriately selected. For example, examples of materials of current collectors include metals such as aluminum, copper, nickel, titanium, and stainless steel, and alloys. In addition, regarding the shape, a flat foil is generally used, but a current collector with a roughened surface, a current collector having a perforated foil shape, and a current collector having a mesh shape can be used.

A method of applying a mixture slurry on the current collector is not particularly limited, and known methods can be used. Specific examples thereof include a die coating method, a dip coating method, a roll coating method, a doctor coating method, a knife coating method, a spray coating method, a gravure coating method, a screen printing method and an electrostatic coating method, and regarding the drying method, standing drying, a fan dryer, a warm air dryer, an infrared heater, a far infrared heater, and the like can be used, but the drying method is not particularly limited thereto.

In addition, after coating, rolling may be performed using a planographic press, a calendar roll or the like. The thickness of the electrode mixture layer is generally 1 $\mu$m or more and 500 $\mu$m or less and preferably 10 $\mu$m or more and 300 $\mu$m or less.

[Non-aqueous electrolyte secondary battery]

The non-aqueous electrolyte secondary battery of the present embodiment includes a positive electrode, a negative electrode, and a non-aqueous electrolyte, and at least one of the positive electrode and the negative electrode includes the electrode film.

The electrode preferably includes a current collector and the electrode film. The electrode film is preferably formed on the current collector. A method of forming an electrode film on the current collector is as described above.

Regarding the positive electrode, those obtained by applying and drying a mixture slurry containing a positive electrode active material on a current collector to produce an electrode film can be used.

Regarding the negative electrode, those obtained by applying and drying a mixture slurry containing a negative electrode active material on a current collector to produce an electrode film can be used.

Regarding the electrolyte, various conventionally known electrolytes in which ions can move can be used. Examples thereof include those containing lithium salts such as $LiBF_4$, $LiClO_4$, $LiPF_6$, $LiAsF_6$, $LiSbF_6$, $LiCF_3SO_3$, $Li(CF_3SO_2)_2N$, $LiC_4F_9SO_3$, $Li(CF_3SO_2)_3C$, LiI, LiBr, LiCl, LiAlCl, $LiHF_2$, LiSCN, and $LiBPh_4$ (where, Ph is a phenyl group), but the present invention is not limited thereto. The electrolyte is preferably dissolved in a non-aqueous solvent and used as an electrolyte solution.

The non-aqueous solvent is not particularly limited, and examples thereof include carbonates such as ethylene carbonate, propylene carbonate, butylene carbonate, dimethyl carbonate, ethyl methyl carbonate, and diethyl carbonate;

lactones such as γ-butyrolactone, γ-valerolactone, and γ-octanoic lactone; glymes such as tetrahydrofuran, 2-methyltetrahydrofuran, 1,3-dioxolane, 4-methyl-1,3-dioxolane, 1,2-methoxyethane, 1,2-ethoxyethane, and 1,2-dibutoxyethane; esters such as methylformate, methylacetate, and methylpropionate; sulfoxides such as dimethyl sulfoxide and sulfolane; and nitriles such as acetonitrile. These solvents may be used alone or two or more thereof may be used in combination.

The non-aqueous electrolyte secondary battery of the present embodiment preferably contains a separator. Examples of separators include a polyethylene non-woven fabric, a polypropylene non-woven fabric, a polyamide non-woven fabric and those obtained by subjecting them to a hydrophilic treatment, but the present invention is not particularly limited thereto.

The structure of the non-aqueous electrolyte secondary battery of the present embodiment is not particularly limited, but is generally composed of a positive electrode and a negative electrode, and a separator provided as necessary, and various shapes such as a paper shape, a cylindrical shape, a button shape, and a laminate shape can be used according to the purpose of use.

Examples

While the present invention will be described below in more detail, the present invention is not limited to these examples. In the examples, "carbon nanotube" may be abbreviated as "CNT." Here, "% by mass" is described as "%." The formulation amounts in the tables are % by mass.

[Example group α]

The dispersant, the molecular weight of the binder resin, and evaluation of various physical properties of the dispersed material using the dispersant are as follows.

(Method of measuring weight average molecular weight (Mw)

The weight average molecular weight (Mw) was measured by a gel permeation chromatographic (GPC) device including an RI detector.

For the device, HLC-8320GPC (commercially available from Tosoh Corporation) was used, and three separation columns were connected in series, "TSK-GELSUPERAW-4000," "AW-3000," and "AW-2500" (commercially available from Tosoh Corporation) were used as fillers in order, and the measurement was performed at an oven temperature of 40°C using an N,N-dimethylformamide solution containing 30 mM trimethylamine and 10 mM LiBr as an eluent at a flow rate of 0.6 ml/min. The sample was prepared in a solvent including the above eluent at a concentration of 1 wt%, and 20 microliters thereof was injected. The molecular weight was a polystyrene conversion value.

(Method of measuring viscosity of dispersed material)

In order to measure the viscosity, using a B type viscometer ("BL" commercially available from Toki Sangyo Co., Ltd.), at a dispersed material temperature of 25°C, the dispersed material was sufficiently stirred with a spatula, and then immediately rotated at a B type viscometer rotor rotation speed of 60 rpm. The rotor used for measurement was a No. 1 rotor when the viscosity was less than 100 mPa.s, a No. 2 rotor when the viscosity was 100 mPa·s or more and less than 500 mPa·s, a No. 3 rotor when the viscosity was 500 mPa·s or more and less than 2,000 mPa·s, and a No. 4 rotor when the viscosity was 2,000 mPa·s or more and less than 10,000 mPa·s. When the viscosity was lower, the dispersibility was better, and when the viscosity was higher, the dispersibility was poorer. If the obtained dispersed material was clearly separated or precipitated, it was regarded as having poor dispersibility.

Determination criteria for those other than cellulose fibers are as follows.

⊙+; less than 30 mPa·s (good)
⊙: less than 50 mPa·s (good)
O: 50 mPa·s or more and less than 1.000 mPa·s (usable)
△: 1,000 mPa·s or more and less than 10,000 mPa·s (unusable)
×: 10,000 mPa·s or more, precipitated or separated (poor)

Determination criteria for cellulose fibers are as follows.

O: less than 500 mPa·s (good)
O: 500 mPa·s or more and less than 10,000 mPa.s (usable)
×: 10,000 mPa·s or more, precipitated or separated (poor)

(Method of evaluating stability of dispersed material)

In order to evaluate the storage stability, the viscosity after the dispersed material was left at 50°C for 7 days and stored was measured. For the measuring method, the same method for the initial viscosity was used for measurement. The evaluation criteria are as follows.

O: No change in viscosity (a rate of change was less than 3%) (good)
O: The viscosity was slightly changed (a rate of change was 3% or more and less than 10%) (usable)
△: The viscosity was changed (a rate of change was 10% or more) (unusable)
×: The solution was gelled, precipitated, or separated (poor)

(Production Example 1α)

(Production of dispersant (A-1α))

100 parts of acetonitrile was put into a reaction container including a gas inlet pipe, a thermometer, a condenser, and a stirrer, and the inside was purged with nitrogen gas. The inside of the reaction container was heated to 70°C and a mixture containing 50.0 parts of acrylonitrile, 25.0 parts of acrylic acid, 25.0 parts of styrene and 5.0 parts of 2,2'-azobis(2,4-dimethylvaleronitrile) (V-65, commercially available from NOF Corporation) was added dropwise over 3 hours, and a polymerization reaction was performed. After dropwise addition was completed, the reaction was additionally performed at 70°C for 1 hour, and 0.5 parts of perbutyl O was then added, and the reaction was additionally continued at 70°C for 1 hour. Then, the non-volatile content was measured, and it was confirmed that the conversion ratio exceeded 98%, and the dispersion medium was completely removed by concentration under a reduced pressure to obtain a dispersant (A-1α). The weight average molecular weight (Mw) of the dispersant (A-1α) was 15,000.

(Production Examples 2α to 13α)

(Production of dispersants (A-2α) to (A-13α))

A fabrication of dispersants (A-2α) to (A-13α) were produced in the same manner as in Production Example 1α except that monomers used were changed according to Table 1. The weight average molecular weights (Mw) of the dispersants were as shown in Table 1α. Here, in synthesis of the dispersant, the chain transfer agent was added, the amount of the polymerization initiator was adjusted, and reaction conditions and the like were appropriately changed to adjust the Mw.

[Table 1]

| Table 1α | | A-1α | A-2α | A-3α | A-4α | A-5α | A-6α | A-7α | A-8α | A-9α | A-10α | A-11α | A-12α | A-13α |
|---|---|---|---|---|---|---|---|---|---|---|---|---|---|---|
| Acrylonitrile | | 50 | 75 | 90 | 90 | 90 | 90 | 90 | 90 | 80 | 80 | 50 | 50 | |
| Methacrylonitrile | | | | | | | | | | | | | | 80 |
| Active hydrogen group-containing monomer | AA | 25 | 25 | 10 | 10 | 10 | | | | | | | | 20 |
| | HEA | | | | | | 10 | | | | | | | |
| Basic monomer | DMAEA | | | | | | | 10 | | | | | | |
| | Vinylimidazole | | | | | | | | 10 | | | | | |
| (meth)acrylic acid alkyl ester | BA | | | | | | | | | 20 | | | | |
| | 2EHA | | | | | | | | | | 20 | | | |
| | AOMA | | | | | | | | | | | | 50 | 50 |
| Other monomers | Styrene | 25 | | | | | | | | | | | | |
| | N-Phenylmaleimide | | | | | | | | | | | 50 | | |
| Weight average molecular weight | | 15000 | 15000 | 15000 | 6000 | 45000 | 15000 | 15000 | 15000 | 15000 | 15000 | 15000 | 15000 | 15000 |

EP 3 950 108 B1

    AA: acrylic acid
HEA: hydroxyethyl acrylate
DMAEA: dimethylaminoethyl acrylate
BA: butyl acrylate
2EHA: 2-ethylhexyl acrylate
AOMA: 2-[(allyloxy)methyl]methyl acrylate

(Production of dispersant (A-14α))

50 parts of the dispersant (A-3α) obtained in Production Example 3α was added to 198 parts of purified water, and the mixture was stirred with a disper to prepare a slurry. Next, 2.0 parts of a 1 N sodium hydroxide aqueous solution was added dropwise at 25°C, and the mixture was stirred with a disper for 2 hours while heating in a water bath. In IR measurement (device: FT/IR-410, commercially available from JASCO Corporation), it was confirmed that the intensity of the peak derived from the cyano group was reduced to 80% or less and it was confirmed that the cyclic structure was formed. Next, washing with purified water was performed, and filtering and drying were performed to obtain a dispersant (A-14α) having a hydrogenated naphthyridine ring and a glutarimide ring. Here, the weight average molecular weight (Mw) was 14,000.

(Production of dispersant (A-15α))

A dispersant (A-15α) having a hydrogenated naphthyridine ring was obtained in the same manner as in Production Example 13α except that the dispersant used was changed from (A-3α) to (A-6α). Here, the weight average molecular weight (Mw) was 14,000.

<Preparation of carbon black dispersed material>

[Examples 1α to 35α and Comparative Examples 1α to 7α]

According to the compositions shown in Table 2-1α and Table 2-2α, carbon black as a conductive material, a dispersant, an additive, and a dispersion medium were put into a glass bottle, sufficiently mixed and dissolved, or mixed, and then dispersed with a paint conditioner using 1.25 mmφ zirconia beads as media for 2 hours to obtain carbon black dispersed materials. As shown in Table 2-1α and Table 2-2α, the dispersed material 1α to dispersed material 35α using the dispersant of the present invention all had low viscosity and good storage stability.

(Examples 1α, 11α-13α, 21α-25α, 27α-30α, 34α and 35α are not according to the present invention)

[Table 2]

| 2-1α | Dispersed material | Carbon black | | Dispersant | | Additive | | Dispersion medium | | Filler concentration | Amount of dispersant (vs. filler) | Amount of additive (vs. dispersant) | Dispersion time (min) | Initial viscosity | Viscosity over time |
|---|---|---|---|---|---|---|---|---|---|---|---|---|---|---|---|
| | | Type | Parts | Type | Parts | Type | Table Parts | Type | Parts | | | | | | |
| Example 1α | Dispersed material 1α | HS-100 | 15 | A-1α | 0.75 | NaOH | 0.15 | Water | 84.1 | 15% | 5% | 20% | 60 | O | O |
| Example 2α | Dispersed material 2α | HS-100 | 15 | A-2α | 0.75 | NaOH | 0.15 | Water | 84.1 | 15% | 5% | 20% | 60 | ⊙ | O |
| Example 3α | Dispersed material 3α | HS-100 | 15 | A-3α | 0.75 | NaOH | 0.15 | Water | 84.1 | 15% | 5% | 20% | 60 | ⊙ | ⊙ |
| Example 4α | Dispersed material 4α | HS-100 | 15 | A-4α | 0.75 | NaOH | 0.15 | Water | 84.1 | 15% | 5% | 20% | 60 | O | O |
| Example 5α | Dispersed material 5α | HS-100 | 15 | A-5α | 0.75 | NaOH | 0.15 | Water | 84.1 | 15% | 5% | 20% | 60 | O | O |
| Example 6α | Dispersed material 6α | HS-100 | 15 | A-6α | 0.75 | NaOH | 0.15 | Water | 84.1 | 15% | 5% | 20% | 60 | O | O |
| Example 7α | Dispersed material 7α | HS-100 | 15 | A-7α | 0.75 | NaOH | 0.15 | Water | 84.1 | 15% | 5% | 20% | 60 | O | O |
| Example 8α | Dispersed material 8α | HS-100 | 15 | A-8α | 0.75 | NaOH | 0.15 | Water | 84.1 | 15% | 5% | 20% | 60 | O | O |
| Example 9α | Dispersed material 9α | HS-100 | 15 | A-9α | 0.75 | NaOH | 0.15 | Water | 84.1 | 15% | 5% | 20% | 60 | O | O |

(continued)

| 2-1α | Dispersed material | Carbon black | | Dispersant | | Additive | | Dispersion medium | | Filler concentration | Amount of dispersant (vs. filler) | Amount of additive (vs. dispersant) | Dispersion time (min) | Initial viscosity | Viscosity over time |
|---|---|---|---|---|---|---|---|---|---|---|---|---|---|---|---|
| | | Type | Parts | Type | Parts | Type | Table Parts | Type | Parts | | | | | | |
| Example 10α | Dispersed material 10α | HS-100 | 15 | A-10α | 0.75 | NaOH | 0.15 | Water | 84.1 | 15% | 5% | 20% | 60 | O | O |
| Example 11α | Dispersed material 11α | HS-100 | 15 | A-11α | 0.75 | NaOH | 0.15 | Water | 84.1 | 15% | 5% | 20% | 60 | O | O |
| Example 12α | Dispersed material 12α | HS-100 | 15 | A-12α | 0.75 | NaOH | 0.15 | Water | 84.1 | 15% | 5% | 20% | 60 | O | O |
| Example 13α | Dispersed material 13α | HS-100 | 15 | A-3α | 0.75 | - | 0 | Water | 84.3 | 15% | 5% | 0% | 60 | O | O |
| Example 14α | Dispersed material 14α | #30 | 15 | A-3α | 0.75 | NaOH | 0.15 | Water | 84.1 | 15% | 5% | 20% | 60 | ⊙ | ⊙ |
| Example 15α | Dispersed material 15α | EC-300J | 10 | A-3α | 0.5 | NaOH | 0.10 | Water | 89.4 | 10% | 5% | 20% | 60 | ⊙ | ⊙ |
| Example 16α | Dispersed material 16α | 8A | 3 | A-3α | 0.45 | NaOH | 0.09 | Water | 96.5 | 3% | 15% | 20% | 240 | ⊙ | ⊙ |
| Example 17α | Dispersed material 17α | 100T | 3 | A-3α | 0.45 | NaOH | 0.09 | Water | 96.5 | 3% | 15% | 20% | 240 | ⊙ | ⊙ |
| Example 18α | Dispersed material 18α | HS-100 | 15 | A-3α | 0.75 | $Na_2CO_3$ | 0.15 | Water | 84.1 | 15% | 5% | 20% | 60 | ⊙ | ⊙ |

| 2-1α | Dispersed material | Carbon black | | Dispersant | | Additive | | Dispersion medium | | Filler concentration | Amount of dispersant (vs. filler) | Amount of additive (vs. dispersant) | Dispersion time (min) | Initial viscosity | Viscosity over time |
|---|---|---|---|---|---|---|---|---|---|---|---|---|---|---|---|
| | | Type | Parts | Type | Parts | Type | Table Parts | Type | Parts | | | | | | |
| Example 19α | Dispersed material 19α | HS-100 | 15 | A-3α | 0.75 | LiOH | 0.15 | Water | 84.1 | 15% | 5% | 20% | 60 | ⊙ | O |
| Example 20α | Dispersed material 20α | HS-100 | 15 | A-3α | 0.75 | DMAE | 0.15 | Water | 84.1 | 15% | 5% | 20% | 60 | ⊙ | O |

[Table 3]

| Table 2-2α | Dispersed material | Carbon black | | Dispersant | | Additive | | Dispersion medium | | Filler concentration | Amount of dispersant (vs. filler) | Amount of additive (vs. dispersant) | Dispersion time (min) | Initial viscosity | Viscosity over time |
|---|---|---|---|---|---|---|---|---|---|---|---|---|---|---|---|
| | | Type | Parts | Type | Parts | Type | Parts | Type | Parts | | | | | | |
| Example 21α | Dispersed material 21α | HS-100 | 15 | A-6α | 0.75 | NaOH | 0.15 | NMP | 84.1 | 10% | 5% | 20% | 60 | ⊙ | ⊙ |
| Example 22α | Dispersed material 22α | 100T | 3 | A-6α | 0.45 | NaOH | 0.09 | NMP | 96.5 | 3% | 15% | 20% | 60 | ⊙ | ⊙ |
| Example 23α | Dispersed material 23α | HS-100 | 15 | A-9α | 0.75 | NaOH | 0.15 | Butyl acetate | 84.1 | 15% | 5% | 20% | 60 | O | O |
| Example 24α | Dispersed material 24α | HS-100 | 15 | A-11α | 0.75 | NaOH | 0.15 | MEK | 15% | 5% | 20% | 60 | O | O |
| Example 25α | Dispersed material 25α | HS-100 | 15 | A-12α | 0.75 | NaOH | 0.15 | PGMAc | 84.1 | 15% | 5% | 20% | 60 | ⊙ | ⊙ |
| Example 26α | Dispersed material 26α | HS-100 | 15 | A-13α | 0.75 | NaOH | 0.15 | Water | 84.1 | 15% | 5% | 20% | 60 | ⊙ | ⊙ |
| Example 27α | Dispersed material 27α | HS-100 | 15 | A-14α | 0.75 | - | 0 | Water | 84.3 | 15% | 5% | 0% | 60 | ⊙+ | ⊙ |
| Example 28α | Dispersed material 28α | HS-100 | 15 | A-15α | 0.75 | - | 0 | NMP | 84.3 | 15% | 5% | 0% | 60 | ⊙+ | ⊙ |
| Example 29α | Dispersed material 29α | 8A | 3 | A-14α | 0.45 | - | 0 | Water | 96.5 | 3% | 15% | 0% | 240 | ⊙+ | ⊙ |
| Example 30α | Dispersed material 30α | 8A | 3 | A-15α | 0.45 | - | 0 | NMP | 96.5 | 3% | 15% | 0% | 240 | ⊙+ | ⊙ |
| Example 31α | Dispersed material 31α | 8A | 3 | A-14α | 0.45 | NaOH | 0.09 | Water | 96.5 | 3% | 15% | 20% | 240 | ⊙+ | ⊙ |
| Example 32α | Dispersed material 32α | 8A | 3 | A-14α | 0.45 | $Na_2CO_3$ | 0.09 | Water | 96.5 | 3% | 15% | 20% | 240 | ⊙+ | ⊙ |
| Example 33α | Dispersed material 33α | HS-100 | 15 | A-3α | 0.75 | NaOH | 0.15 | Water | 84.1 | 15% | 5% | 20% | 60 | O | O |
| Example 34α | Dispersed material 34α | HS-100 | 15 | A-14α | 0.75 | - | 0.00 | Water | 84.3 | 15% | 5% | 0% | 60 | O | O |

| Table 2-2α | Dispersed material | Carbon black | | Dispersant | | Additive | | Dispersion medium | | Filler concentration | Amount of dispersant (vs. filler) | Amount of additive (vs. dispersant) | Dispersion time (min) | Initial viscosity | Viscosity over time |
|---|---|---|---|---|---|---|---|---|---|---|---|---|---|---|---|
| | | Type | Parts | Type | Parts | Type | Parts | Type | Parts | | | | | | |
| Example 35α | Dispersed material 35α | HS-100 | 15 | A-15α | 0.75 | - | 0.00 | NMP | 84.3 | 15% | 5% | 0% | 60 | O | O |
| Comparative Example 1α | Comparative dispersed material 1α | HS-100 | 15 | PVP | 0.75 | NaOH | 0.15 | Water | 84.1 | 15% | 5% | 20% | 60 | × | × |
| Comparative Example 2α | Comparative dispersed material 2α | HS-100 | 15 | PVP | 2.25 | NaOH | 0.45 | NMP | 82.3 | 3% | 15% | 20% | 60 | × | × |
| Comparative Example 3α | Comparative dispersed material 3α | HS-100 | 15 | PVA | 0.75 | NaOH | 0.15 | Water | 84.1 | 15% | 5% | 20% | 240 | × | × |
| Comparative Example 4α | Comparative dispersed material 4α | HS-100 | 15 | PVP | 0.75 | NaOH | 0.15 | Butyl acetate | 84.1 | 15% | 5% | 20% | 60 | × | × |
| Comparative Example 5α | Comparative dispersed material 5α | HS-100 | 15 | PVP | 0.75 | NaOH | 0.15 | MEK | 84.1 | 15% | 5% | 20% | 60 | × | × |
| Comparative Example 6α | Comparative dispersed material 6α | HS-100 | 15 | PVP | 0.75 | NaOH | 0.15 | PGMAc | 84.1 | 15% | 5% | 20% | 60 | × | × |
| Comparative Example 7α | Comparative dispersed material 7α | HS-100 | 15 | PVP | 3.0 | NaOH | 0.60 | Water | 81.4 | 15% | 20% | 20% | 60 | O | Δ |

·HS-100: Denka Black HS-100 (acetylene black, an average primary particle size of 48 nm, a specific surface area of 39 m$^2$/g, commercially available from Denka Co., Ltd.)

·#30: furnace black, an average primary particle size of 30 nm, a specific surface area of 74 m$^2$/g, commercially available from Mitsubishi Chemical Corporation.

·EC-300J: ketjen black, an average primary particle size of 40 nm, a specific surface area of 800 m$^2$/g, commercially available from Lion Specialty Chemicals Co., Ltd.

·8A: JENOTUBE8A, multi-walled CNT, an outer diameter 6 to 9 nm, commercially available from JEIO

·100T: K-Nanos100T (multi-walled CNT, an outer diameter of 10 to 15 nm, commercially available from Kumho Petrochemical)

·PVP: polyvinylpyrrolidone K-30, a non-volatile content of 100%, commercially available from Nippon Shokubai Co., Ltd.

·PVA: KurarayPOVAL PVA403, a non-volatile content of 100%, commercially available from Kuraray Co., Ltd.

·NMP: N-methylpyrrolidone

·MEK: methyl ethyl ketone

·PGMAc: propylene glycol monomethyl ether acetate

<Preparation of coloring agent, cellulose fiber, and inorganic oxide dispersed material>

[Examples 36α to 42α and Comparative Examples 8α to 10α]

According to the compositions shown in Table 3α, an object to be dispersed, a dispersant, an additive, and a dispersion medium were put into a glass bottle and sufficiently mixed, dissolved, or mixed, and various objects to be dispersed were then added, and the mixture was dispersed with a paint conditioner using 0.5 mmcp zirconia beads as media for 2 hours to obtain dispersed materials. As shown in Table 3α, the dispersed material 26α to dispersed material 32α using the dispersant of the present invention all had low viscosity and good storage stability.

(Examples 36α-42α are not according to the present invention)

[Table 4]

| Table 3α | Dispersed material | Object to be dispersed | | Dispersant | | Additive | | Dispersion medium | | Filler concentration | Amount of dispersant (vs. filler) | Amount of additive (vs. dispersant) | Dispersion time (min) | Initial viscosity | Viscosity over time |
|---|---|---|---|---|---|---|---|---|---|---|---|---|---|---|---|
| | | Type | Parts | Type | Parts | Type | Parts | Type | Parts | | | | | | |
| Example 36α | Dispersed material 36α | P-1α | 10 | A-9α | 4 | NaOH | 0.8 | PGMAc | 85.2 | 10% | 40% | 20% | 180 | O | O |
| Example 37α | Dispersed material 37α | P-2α | 10 | A-10α | 4 | NaOH | 0.8 | PGMAc | 85.2 | 10% | 40% | 20% | 180 | O | O |
| Example 38α. | Dispersed material 38α | P-3α | 10 | A-11α | 4 | NaOH | 0.8 | PGMAc | 85.2 | 10% | 40% | 20% | 180 | ⊙ | ⊙ |
| Example 39α | Dispersed material 39α | P-4cf. | 10 | A-12α | 4 | NaOH | 0.8 | PGMAc | 85.2 | 10% | 40% | 20% | 180 | ⊙ | ⊙ |
| Example 40α | Dispersed material 40α | P-5α | 1 | A-3α | 0.4 | NaOH | 0.08 | Water | 98.52 | 10% | 40% | 20% | 60 | O | O |
| Example 41α | Dispersed material 41α | P-6α | 10 | A-6α | 4 | NaOH | 0.8 | Butyl acetate | 85.2 | 10% | 40% | 20% | 60 | O | O |
| Example 42α | Dispersed material 42α | P-7α | 10 | A-6α | 4 | NaOH | 0.8 | Butyl acetate | 85.2 | 10% | 40% | 20% | 60 | O | O |
| Comparative Example 8α | Comparative dispersed material 8α | P-1α | 10 | PVA | 4 | NaOH | 0.8 | PGMAc | 85.2 | 10% | 40% | 20% | 360 | O | Δ |
| Comparative Example 9α | Comparative dispersed material 9α | P-5α | 10 | PVA | 4 | NaOH | 0.8 | Water | 85.2 | 10% | 40% | 20% | 120 | Δ | × |
| Comparative Example 10α | Comparative dispersed material 10α | P-6α | 10 | PVA | 4 | NaOH | 0.8 | Butyl acetate | 85.2 | 10% | 40% | 20% | 120 | Δ | × |

P-1: phthalocyanine green pigment C. I. Pigment Green 58 ("FASTOGENGREEN A110," commercially available from DIC)

P-2: copper phthalocyanine blue pigment PB15: 6 ("Lionol Blue ES," commercially available from Toyocolor Co., Ltd.)

P-3: quinophthalone yellow pigment PY138 ("Paliotol Yellow K 0961HD," commercially available from BASF)

P-4: anthraquinone red pigment C. I. Pigment Red 177 ("Cromophtal Red A2B," commercially available from BASF)

P-5: cellulose fiber ("Celish KY100G," commercially available from Daicel Corporation)

P-6: titanium oxide ("CR-95," commercially available from Ishihara Sangyo Kaisha, Ltd.)

P-7: zirconium oxide powder ("PCS," commercially available from Nippon Denko Co., Ltd.)

[Examples 43$\alpha$ to 77$\alpha$ and Comparative Examples 11$\alpha$ to 17$\alpha$]

(Conductive coating film formed using carbon black dispersed material)

The dispersed materials 1$\alpha$ to 35$\alpha$ prepared in Examples 1$\alpha$ to 35$\alpha$, and binder resins were blended with dispersed materials so that the non-volatile content and the carbon concentration in the non-volatile content were as shown in Table 4, and thereby carbon dispersed materials were prepared. Using a bar coater, the dispersed material prepared using the bar coater was applied to the surface of a PET film having a thickness of 100 $\mu$m, and drying was then performed at 130°C for 30 minutes to form a coating film having a thickness of 5 $\mu$m. The surface resistance value of the coating film was measured using a resistivity meter (product name "Hiresta," commercially available from Mitsubishi Chemical Analytech Co., Ltd.). The results are shown in Table 4$\alpha$.

O: less than $1.0 \times 10^4$ $\Omega/cm^2$ (good)

O: $1.0 \times 10^4$ $\Omega/cm^2$ or more and less than $1.0 \times 10^7$ $\Omega/cm^2$ (usable)

$\triangle$: $1.0 \times 10^7 \Omega/cm^2$ or more and less than $1.0 \times 10^{10}$ $\Omega/cm^2$ (usable)

$\times$: $1.0 \times 10^{10}$ $\Omega/cm^2$ or more, precipitated or separated (poor)

Water resistance: coating film obtained in Examples 43$\alpha$ to 77$\alpha$ or comparative examples were immersed in warm water at 25°C for 2 hours, and then pulled up, water droplets on the surface were wiped off, and the state of the coating film was then visually evaluated. The results are shown in Table 4$\alpha$.

Determination criteria

$\odot$: There was no change in the coating film.

O: Whitening was observed on the coating film, but the state returned to its original state after being left for 24 hours.

$\times$: The coating film was significantly whitened, and easily peeled off simply with light rubbing.

(Examples 43$\alpha$, 53$\alpha$-55$\alpha$, 63$\alpha$-67$\alpha$, 69$\alpha$-72$\alpha$, 76$\alpha$ and 77$\alpha$ are not according to the present invention)

[Table 5]

| Table 4$\alpha$ | Dispersed material | Binder resin | Non-volatile content | Carbon concentration (in non-volatile content) | Dispersion medium | Surface resistance value | Water resistance |
|---|---|---|---|---|---|---|---|
| Example 43$\alpha$ | Dispersed material 1$\alpha$ | CMC | 20% | 20% | Water | $\odot$ | O |
| Example 44$\alpha$ | Dispersed material 2$\alpha$ | CMC | 20% | 20% | Water | $\odot$ | O |
| Example 45$\alpha$ | Dispersed material 3$\alpha$ | CMC | 20% | 20% | Water | $\odot$ | O |
| Example 40$\alpha$ | Dispersed material 4$\alpha$ | CMC | 20% | 20% | Water | $\odot$ | O |

(continued)

| Table 4α | Dispersed material | Binder resin | Non-volatile content | Carbon concentration (in non-volatile content) | Dispersion medium | Surface resistance value | Water resistance |
|---|---|---|---|---|---|---|---|
| Example 47α | Dispersed material 5α | CMC | 20% | 20% | Water | ⊙ | O |
| Example 48α | Dispersed material 6α | CMC | 20% | 20% | Water | ⊙ | O |
| Example 49α | Dispersed material 7α | CMC | 20% | 20% | Water | ⊙ | O |
| Example 50a | Dispersed material 8α | CMC | 20% | 20% | Water | ⊙ | O |
| Example 51α | Dispersed material 9α | CMC | 20% | 20% | Water | ⊙ | O |
| Example 52α | Dispersed material 10α | CMC | 20% | 20% | Water | ⊙ | O |
| Example 53α | Dispersed material 11α | CMC | 20% | 20% | Water | ⊙ | O |
| Example 54α | Dispersed material 12α | CMC | 20% | 20% | Water | ⊙ | O |
| Example 55α | Dispersed material 13α | CMC | 20% | 20% | Water | ⊙ | O |
| Example 56α | Dispersed material 14α | CMC | 20% | 20% | Water | ⊙ | O |
| Example 57α | Dispersed material 15α | CMC | 20% | 20% | Water | ⊙ | O |
| Example 58α | Dispersed material 16α | CMC | 10% | 7% | Water | ⊙ | O |
| Example 59α | Dispersed material 17α | CMC | 10% | 7% | Water | ⊙ | O |
| Example 60α | Dispersed material 18α | CMC | 20% | 20% | Water | ⊙ | O |
| Example 61α | Dispersed material 19α | CMC | 20% | 20% | Water | ⊙ | O |
| Example 62α | Dispersed material 20α | CMC | 20% | 20% | Water | ⊙ | O |
| Example 63α | Dispersed material 21α | PVDF | 20% | 20% | NMP | ⊙ | ⊙ |
| Example 64α | Dispersed material 22α | PVDF | 10% | 7% | NMP | ⊙ | ⊙ |
| Example 65α | Dispersed material 23α | PVDF | 20% | 20% | Butyl acetate | ⊙ | ⊙ |
| Example 66α | Dispersed material 24α | PVDF | 20% | 20% | MEK | ⊙ | ⊙ |
| Example 67α | Dispersed material 25α | PVDF | 20% | 20% | PGMAc | ⊙ | ⊙ |

(continued)

| Table 4α | Dispersed material | Binder resin | Non-volatile content | Carbon concentration (in non-volatile content) | Dispersion medium | Surface resistance value | Water resistance |
|---|---|---|---|---|---|---|---|
| Example 68α | Dispersed material 26α | CMC | 20% | 20% | Water | ⊙ | O |
| Example 69α | Dispersed material 27u | CMC | 20% | 20% | Water | ⊙ | ⊙ |
| Example 70α | Dispersed material 28α | PVDF | 20% | 20% | NMP | ⊙ | ⊙ |
| Example 71α | Dispersed material 29α | CMC | 20% | 20% | Water | ⊙ | ⊙ |
| Example 72α | Dispersed material 30α | PVDF | 20% | 20% | NMP | ⊙ | ⊙ |
| Example 73α | Dispersed material 31α | CMC | 20% | 20% | Water | ⊙ | ⊙ |
| Example 74α | Dispersed material 32α | CMC | 20% | 20% | Water | ⊙ | ⊙ |
| Example 75α | Dispersed material 33α | CMC | 20% | 20% | Water | ⊙ | ⊙ |
| Example 76α | Dispersed material 34α | CMC | 20% | 20% | Water | ⊙ | ⊙ |
| Example 77α | Dispersed material 35α | PVDF | 20% | 20% | NMP | ⊙ | ⊙ |
| Comparative Example 11α | Comparative dispersed material 1α | CMC | 20% | 20% | Water | Δ | × |
| Comparative Example 12α | Comparative dispersed material 2α | CMC | 20% | 20% | Water | Δ | × |
| Comparative Example 13α | Comparative dispersed material 3α | PVDF | 20% | 20% | NMP | × | × |
| Comparative Example 14α | Comparative dispersed material 4α | PVDF | 20% | 20% | Butyl acetate | × | × |
| Comparative Example 15α | Comparative dispersed material 5α | PVDF | 20% | 20% | MEK | × | × |
| Comparative Example 16α | Comparative dispersed material 6α | PVDF | 20% | 20% | PGMAc | × | × |
| Comparative Example 17α | Comparative dispersed material 7α | PVDF | 20% | 20% | PGMAc | × | × |

· CMC: carboxymethyl cellulose #1120, a non-volatile content of 100%, commercially available from Daicel FineChem Co., Ltd.
· PVDF: polyvinylidene fluoride, KF polymer W1100, a non-volatile content of 100%, commercially available from Kureha

Based on the above results, when the dispersant of the present invention was used, it was possible to produce a dispersed material having excellent dispersion efficiency and excellent dispersibility, fluidity, and storage stability. In particular, when the dispersion medium was water or a hydrophilic solvent such as NMP, a dispersant containing an active hydrogen group-containing monomer or a basic monomer was preferable, and dispersants containing (meth)acrylic acid alkyl ester were excellent for solvents such as butyl acetate, MEK, and PGMAc.

In addition, in Comparative Example 7α in Table 2α, the conventional dispersant had a certain degree of dispersibility when the amount used increased, but the dispersibility was reduced when the amount used decreased. On the other hand, the dispersant of the present invention had good dispersibility even if the amount used was reduced.

In addition, using the dispersant of the present invention, it was possible to produce a dispersed material having good dispersibility and excellent fluidity and storage stability not only for a conductive material but also for an object to be dispersed other than the conductive material.

When the dispersant of the present invention was used for a power storage device, an electrode having excellent electrical conductivity and good water resistance was obtained.

[Example group β]

The dispersant of the present invention, the molecular weight of the binder resin, and evaluation of various physical properties of the dispersed material using the dispersant of the present invention are as follows.

The measurement of the weight average molecular weight (Mw), the measurement of the viscosity of the dispersed material, and the evaluation of the stability of the dispersed material were performed according to the same methods and criteria as in Example group α.

(Production Example 1β)

(Production of dispersant (A-1β))

100 parts of acetonitrile was put into a reaction container including a gas inlet pipe, a thermometer, a condenser, and a stirrer, and the inside was purged with nitrogen gas. The inside of the reaction container was heated to 70°C and a mixture containing 55.0 parts of acrylonitrile, 25.0 parts of acrylic acid, 20.0 parts of styrene, 0.5 parts of 3-mercapto-1,2-propanediol and 0.4 parts of 2,2'-azobis(2,4-dimethylvaleronitrile) (V-65, commercially available from FUJIFILM Wako Pure Chemical Corporation) was added dropwise into the reaction container over 3 hours, and a polymerization reaction was performed. After dropwise addition was completed, the reaction was performed at 70°C for 1 hour, and 0.1 parts of V-65 was then added, and the reaction was additionally continued at 70°C for 1 hour to obtain a desired product as a precipitate. Then, the non-volatile content was measured and it was confirmed that the conversion ratio exceeded 98%. The product was filtered off under a reduced pressure and washed with 100 parts of acetonitrile, and the solvent was completely removed by performing drying under a reduced pressure to obtain a polymer (A-1β). The weight average molecular weight (Mw) of the dispersant (A-1β) was 75,000.

(Production Examples 2β to 15β)

(Production of dispersants (A-2β) to (A-15β))

Dispersants (A-2β) to (A-15β) were produced in the same manner as in Production Example 1β except that monomers and chain transfer agents used were changed according to Table 1β. The weight average molecular weights (Mw) of the dispersants were as shown in Table 1β. Here, in synthesis of the dispersant, the chain transfer agent was added, the amount of the polymerization initiator was adjusted, and reaction conditions and the like were appropriately changed to adjust the Mw.

[Table 6]

| Table 1β | | A-1β | A-2β | A-3β | A-4β | A-5β | A-6β | A-7β | A-8β | A-9β | A-10β | A-11β | A-12β | A-13β | A-14β | A-15β |
|---|---|---|---|---|---|---|---|---|---|---|---|---|---|---|---|---|
| Acrylonitrile | | 55 | 65 | 75 | 83 | 83 | 83 | 83 | | 83 | 83 | 83 | 83 | 83 | 65 | 65 |
| Methacrylonitrile | | | | | | | | | 80 | | | | | | | |
| Active hydrogen group-containing monomer | AA | 25 | 35 | 25 | 17 | 17 | 17 | 17 | 20 | | | | | | | |
| | HEA | | | | | | | | | 17 | | | | | | |
| Basic monomer | DMAEA | | | | | | | | | | 17 | | | | | |
| | Vinylimidazole | | | | | | | | | | | 17 | | | | |
| (meth) acrylic acid alkyl ester | BA | | | | | | | | | | | | 17 | | | |
| | 2EHA | | | | | | | | | | | | | 17 | | |
| Other monomers | Styrene | 20 | | | | | | | | | | | | | | |
| | Phenylmaleimide | | | | | | | | | | | | | | 35 | |
| | AOMA | | | | | | | | | | | | | | | 35 |
| Chain transfer agent (note) | 3-Mercapto-1,2-propanediol | 0.5 | 0.5 | 0.5 | 0.5 | 0.8 | 0.2 | 0.1 | 0.5 | 0.5 | 0.5 | 0.5 | 0.5 | 0.5 | 0.5 | 0.5 |
| Weight average molecular weight | | 75000 | 75000 | 75000 | 75000 | 52000 | 90000 | 185000 | 75000 | 75000 | 75000 | 75000 | 75000 | 75000 | 75000 | 75000 |
| note) indicates % by mass with respect to total amount of monomers | | | | | | | | | | | | | | | | |

EP 3 950 108 B1

AA: acrylic acid
HEA: hydroxyethyl acrylate
DMAEA: dimethylaminoethyl acrylate
BA: butyl acrylate
2EHA: 2-ethylhexyl acrylate
AOMA: 2-[(allyloxy)methyl]methyl acrylate

(Production Example 16β)

(Production of dispersant (A-16β))

50 parts of the dispersant (A-4β) obtained in Production Example 4β was added to 198 parts of purified water, and the mixture was stirred with a disper to prepare a slurry. Next, 2.0 parts of a 1 N sodium hydroxide aqueous solution was added dropwise at 25°C, and the mixture was stirred with a disper for 2 hours while heating in a water bath. In IR measurement (device: FT/IR-410, commercially available from JASCO Corporation), it was confirmed that the intensity of the peak derived from the cyano group was reduced to 80% or less of the initial value and it was confirmed that the cyclic structure was formed. Next, washing with purified water was performed, and filtering and drying were performed to obtain a dispersant (A-16β). Here, the weight average molecular weight (Mw) was 74,000.

(Production Example 17β)

(Production of dispersant (A-17β))

A dispersant (A-17β) having a hydrogenated naphthyridine ring was obtained in the same manner as in Production Example 16β except that the dispersant used was changed from (A-4β) to (A-10β). Here, the weight average molecular weight (Mw) was 74,000.

<Production of carbon black dispersed material>

[Examples 1β to 45β and Comparative Examples 1β to 7β]

According to the compositions shown in Table 2-1β and Table 2-2β, carbon black as a conductive material, a dispersant, an additive, and a dispersion medium were put into a glass bottle, sufficiently mixed and dissolved, or mixed, and then dispersed with a paint conditioner using 1.25 mmcp zirconia beads as media for 2 hours to obtain carbon black dispersed materials.

(Examples 1β, 14β, 15β, 18β-20β and 30β-45β are not according to the present invention)

[Table 7]

| Table 2-1β | Dispersed material | Carbon | | Dispersant | | Additive | | Dispersion medium | | Concentration of object to be dispersed | Amount of dispersant (vs. object to be dispersed) | Amount of additive (vs. dispersant) | Dispersion time (min) | Initial viscosity | Viscosity over time |
|---|---|---|---|---|---|---|---|---|---|---|---|---|---|---|---|
| | | Type | Parts | Type | Parts | Type | Parts | Type | Parts | | | | | | |
| Example 1β | Dispersed material 1β | HS-100 | 15 | A-1β | 0.75 | NaOH | 0.15 | Water | 84.1 | 15% | 5% | 20% | 60 | O | O |
| Example 2β | Dispersed material 2β | HS-100 | 15 | A-2β | 0.75 | NaOH | 0.15 | Water | 84.1 | 15% | 5% | 20% | 60 | ⊙ | O |
| Example 3β | Dispersed material 3β | HS-100 | 15 | A-3β | 0.75 | NaOH | 0.15 | Water | 84.1 | 15% | 5% | 20% | 60 | ⊙ | O |
| Example 4β | Dispersed material 4β | HS-100 | 15 | A-4β | 0.75 | NaOH | 0.15 | Water | 84.1 | 15% | 5% | 20% | 60 | ⊙ | ⊙ |
| Example 5β | Dispersed material 5β | HS-100 | 15 | A-5β | 0.75 | NaOH | 0.15 | Water | 84.1 | 15% | 5% | 20% | 60 | ⊙ | ⊙ |
| Example 6β | Dispersed material 6β | HS-100 | 15 | A-6β | 0.75 | NaOH | 0.15 | Water | 84.1 | 15% | 5% | 20% | 60 | ⊙ | ⊙ |
| Example 7β | Dispersed material 7β | HS-100 | 15 | A-7β | 0.75 | NaOH | 0.15 | Water | 84.1 | 15% | 5% | 20% | 60 | ⊙ | O |
| Example 8β | Dispersed material 8β | HS-100 | 15 | A-8β | 0.75 | NaOH | 0.15 | Water | 84.1 | 15% | 5% | 20% | 60 | O | O |
| Example 913 | Dispersed material 9β | HS-100 | 15 | A-9β | 0.75 | NaOH | 0.15 | Water | 84.1 | 15% | 5% | 20% | 60 | O | O |
| Example 10β | Dispersed material 10β | HS-100 | 15 | A-10β | 0.75 | NaOH | 0.15 | Water | 84.1 | 15% | 5% | 20% | 60 | O | O |
| Example 11β | Dispersed material 11β | HS-100 | 15 | A-11β | 0.75 | NaOH | 0.15 | Water | 84.1 | 15% | 5% | 20% | 60 | O | O |

| Table 2-1β | Dispersed material | Carbon | | Dispersant | | Additive | | Dispersion medium | | Concentration of object to be dispersed | Amount of dispersant (vs. object to be dispersed) | Amount of additive (vs. dispersant) | Dispersion time (min) | Initial viscosity | Viscosity over time |
|---|---|---|---|---|---|---|---|---|---|---|---|---|---|---|---|
| | | Type | Parts | Type | Parts | Type | Parts | Type | Parts | | | | | | |
| Example 12β | Dispersed material 12β | HS-100 | 15 | A-12 β | 0.75 | NaOH | 0.15 | Water | 84.1 | 15% | 5% | 20% | 60 | O | O |
| Example 13β | Dispersed material 13β | HS-100 | 15 | A-13 β | 0.75 | NaOH | 0.15 | Water | 84.1 | 15% | 5% | 20% | 60 | O | O |
| Example 14β | Dispersed material 14β | HS-100 | 15 | A-14 β | 0.75 | NaOH | 0.15 | Water | 84.1 | 15% | 5% | 20% | 60 | O | O |
| Example 15β | Dispersed material 15β | HS-100 | 15 | A-15 β | 0.75 | NaOH | 0.15 | Water | 84.1 | 15% | 5% | 20% | 60 | O | O |
| Example 16β | Dispersed material 16β | HS-100 | 15 | A-16 β | 0.75 | NaOH | 0.15 | Water | 84.1 | 15% | 5% | 20% | 60 | ⊙ | ⊙ |
| Example 17β | Dispersed material 17β | HS-100 | 15 | A-17 β | 0.75 | NaOH | 0.15 | Water | 84.1 | 15% | 5% | 20% | 60 | O | O |
| Example 18β | Dispersed material 18β | HS-100 | 15 | A-4β | 0.75 | - | 0.00 | Water | 84.3 | 15% | 5% | 0% | 60 | O | O |
| Example 19β | Dispersed material 19β | HS-100 | 15 | A-16 β | 0.75 | - | 0.00 | Water | 84.3 | 15% | 5% | 0% | 60 | O | O |
| Example 20β | Dispersed material 20β | HS-100 | 15 | A-17 β | 0.75 | - | 0.00 | Water | 84.3 | 15% | 5% | 0% | 60 | O | O |

| Table 2-1β | Dispersed material | Carbon | | Dispersant | | Additive | | Dispersion medium | | Concentration of object to be dispersed | Amount of dispersant (vs. object to be dispersed) | Amount of additive (vs. dispersant) | Dispersion time (min) | Initial viscosity | Viscosity over time |
|---|---|---|---|---|---|---|---|---|---|---|---|---|---|---|---|
| | | Type | Parts | Type | Parts | Type | Parts | Type | Parts | | | | | | |
| Example 21β | Dispersed material 21β | #30 | 15 | A-4β | 0.75 | NaOH | 0.15 | Water | 84.1 | 15% | 5% | 20% | 60 | ⊙ | ⊙ |
| Example 22β | Dispersed material 22β | EC-300 J | 10 | A-4β | 0.5 | NaOH | 0.10 | Water | 89.4 | 10% | 5% | 20% | 60 | ⊙ | ⊙ |
| Example 23β | Dispersed material 23β | 8A | 3 | A-4β | 1.5 | NaOH | 0.30 | Water | 95.2 | 3% | 50% | 20% | 240 | ⊙ | ⊙ |
| Example 24β | Dispersed material 24β | 100T | 3 | A-4β | 0.45 | NaOH | 0.09 | Water | 96.5 | 3% | 15% | 20% | 240 | ⊙ | ⊙ |
| Example 25β | Dispersed material 25β | HS-100 | 15 | A-4β | 0.3 | NaOH | 0.15 | Water | 84.1 | 15% | 2.0% | 10% | 60 | O | O |
| Example 26β | Dispersed material 26β | HS-100 | 15 | A-4β | 0.3 | NaOH | 0.15 | Water | 84.1 | 15% | 2.0% | 10% | 60 | O | O |
| Example 27β | Dispersed material 27β | HS-100 | 15 | A-4β | 0.75 | $Na_2CO_3$ | 0.15 | Water | 84.1 | 15% | 5% | 20% | 60 | ⊙ | ⊙ |
| Example 28β | Dispersed material 28β | HS-100 | 15 | A-4β | 0.75 | LiOH | 0.15 | Water | 84.1 | 15% | 5% | 20% | 60 | ⊙ | O |
| Example 29β | Dispersed material 29β | HS-100 | 15 | A-4β | 0.75 | DMAE | 0.15 | Water | 84.1 | 15% | 5% | 20% | 60 | ⊙ | O |

EP 3 950 108 B1

[Table 8]

| Table 2-2β | Dispersed material | Carbon | | Dispersant | | Additive | | Dispersion medium | | Concentration of object to be dispersed | Amount of dispersant (vs. object to be dispersed) | Amount of additive (vs. dispersant) | Dispers ion time (min) | Initial viscosity | Viscosi ty over time |
|---|---|---|---|---|---|---|---|---|---|---|---|---|---|---|---|
| | | Type | Parts | Type | Parts | Type | Parts | Type | Parts | | | | | | |
| Example 30β | Dispersed material 30β | HS-100 | 15 | A-9β | 0.75 | NaOH | 0.15 | NMP | 84.1 | 10% | 5% | 20% | 60 | ⊙ | ⊙ |
| Example 31β | Dispersed material 31β | HS-100 | 15 | A-16β | 0.75 | NaOH | 0.15 | NMP | 84.1 1 | 15% | 5% | 20% | 60 | O | O |
| Example 32β | Dispersed material 32β | HS-100 | 15 | A-17β | 0.75 | NaOH | 0.15 | NMP | 84.1 | 15% | 5% | 20% | 60 | ⊙ | ⊙ |
| Example 33β | Dispersed material 33β | HS-100 | 15 | A-9β | 0.75 | NaOH | 0.15 | Butyl acetate | 84.1 | 15% | 5% | 20% | 60 | O | O |
| Example 34β | Dispersed material 34β | HS-100 | 15 | A-14β | 0.75 | NaOH | 0.15 | MEK | 84.1 | 15% | 5% | 20% | 60 | O | O |
| Example 35β | Dispersed material 35β | HS-100 | 15 | A-15β | 0.75 | NaOH | 0.15 | PGMAc | 84.1 | 15% | 5% | 20% | 60 | ⊙ | ⊙ |
| Example 36β | Dispersed material 36β | HS-100 | 15 | A-9β | 0.75 | - | 0.00 | NMP | 84.1 | 10% | 5% | 0% | 60 | O | O |
| Example 37β | Dispersed material 37β | HS-100 | 15 | A-16β | 0.75 | - | 0.00 | NMP | 84.1 | 15% | 5% | 0% | 60 | O | O |
| Example 38β | Dispersed material 38β | HS-100 | 15 | A-17β | 0.75 | - | 0.00 | NMP | 84.3 | 15% | 5% | 0% | 60 | ⊙ | O |
| Example 39β | Dispersed material 39β | 100T | 3 | A-9β | 0.45 | NaOH | 0.09 | NMP | 96.5 | 3% | 15% | 20% | 60 | ⊙ | ⊙ |
| Example 40β | Dispersed material 40β | 8A | 3 | A-9β | 1.5 | NaOH | 0.30 | NMP | 84.1 | 3% | 50% | 20% | 60 | ⊙ | ⊙ |
| Example 41β | Dispersed material 41β | 8A | 3 | A-16β | 1.5 | - | 0.00 | NMP | 96.5 | 3% | 50% | 0% | 240 | O | O |
| Example 42β | Dispersed material 42β | 8A | 3 | A-16β | 1.5 | - | 0.00 | NMP | 96.5 | 3% | 50% | 0% | 240 | O | O |

| Table 2-2β | Dispersed material | Carbon | | Dispersant | | Additive | | Dispersion medium | | Concentration of object to be dispersed | Amount of dispersant (vs. object to be dispersed) | Amount of additive (vs. dispersant) | Dispersion time (min) | Initial viscosity | Viscosity over time |
|---|---|---|---|---|---|---|---|---|---|---|---|---|---|---|---|
| | | Type | Parts | Type | Parts | Type | Parts | Type | Parts | | | | | | |
| Example 43β | Dispersed material 43β | 8A | 3 | A-17β | 1.5 | - | 0.00 | NMP | 96.5 | 3% | 50% | 0% | 240 | O | O |
| Example 44β | Dispersed material 44β | HS-100 | 15 | A-9β | 0.75 | NaOH | 0.15 | NMP | 84.1 | 15% | 5% | 20% | 60 | O | O |
| Example 45β | Dispersed material 45β | HS-100 | 15 | A-17β | 0.75 | - | 0.00 | NMP | 84.3 | 15% | 5% | 0% | 60 | O | O |
| Comparative Example 1β | Comparative dispersed material 1β | HS-100 | 15 | PVP | 0.75 | NaOH | 0.15 | Water | 84.1 | 15% | 5% | 20% | 60 | × | × |
| Comparative Example 2β | Comparative dispersed material 2β | HS-100 | 15 | PVP | 2.25 | NaOH | 0.45 | NMP | 82.3 | 3% | 15% | 20% | 60 | × | × |
| Comparative Example 3β | Comparative dispersed material 3β | HS-100 | 15 | PVA | 0.75 | NaOH | 0.15 | Water | 84.1 | 15% | 5% | 20% | 240 | × | × |
| Comparative Example 4β | Comparative dispersed material 4β | HS-100 | 15 | PVP | 0.75 | NaOH | 0.15 | Butyl acetate | 84.1 | 15% | 5% | 20% | 60 | × | × |
| Comparative Example 5β | Comparative dispersed material 5β | HS-100 | 15 | PVP | 0.75 | NaOH | 0.15 | MEK | 84.11 | 15% | 5% | 20% | 60 | × | × |
| Comparative Example 6β | Comparative dispersed material 6β | HS-100 | 15 | PVP | 0.75 | NaOH | 0.15 | PGMAc | 84.1 | 15% | 5% | 20% | 60 | × | × |
| Comparative Example 7β | Comparative dispersed material 7β | HS-100 | 15 | PVP | 3.0 | NaOH | 0.60 | Water | 81.4 | 15% | 20% | 20% | 60 | O | Δ |

EP 3 950 108 B1

· HS-100: Denka Black HS-100 (acetylene black, an average primary particle size of 48 nm, a specific surface area of 39 $m^2$/g, commercially available from Denka Co., Ltd.)

· #30: furnace black, an average primary particle size of 30 nm, a specific surface area of 74 $m^2$/g, commercially available from Mitsui Chemicals Inc.

· EC-300J: ketjen black, an average primary particle size of 40 nm, a specific surface area of 800 $m^2$/g, commercially available from Lion Specialty Chemicals Co., Ltd.

· 8A: multi-walled CNT, an outer diameter of 6 to 9 nm, commercially available from JEIO

· 100T: K-Nanos100T (multi-walled CNT, an outer diameter of 10 to 15 nm, commercially available from Kumho Petrochemical)

· PVP: polyvinylpyrrolidone K-30, a non-volatile content of 100%, commercially available from Nippon Shokubai Co., Ltd.

· PVA: polyvinyl alcohol, Kuraray POVAL PVA403, a non-volatile content of 100%, commercially available from Kuraray Co., Ltd.

· DMAE: 2-(dimethylamino)ethanol, commercially available from Tokyo Chemical Industry Co., Ltd.

· NMP: N-methylpyrrolidone

· MEK: methyl ethyl ketone

· PGMAc: propylene glycol monomethyl ether acetate

As shown in Table 2-1β and Table 2-2β, the dispersed material 1β to dispersed material 45β using the dispersant of the present invention all had excellent dispersibility so that they had low viscosity and good storage stability.

<Production of coloring agent, cellulose fiber, and inorganic oxide dispersed material>

[Examples 46β to 52β and Comparative Examples 8β to 10β]

According to the compositions shown in Table 3β, an object to be dispersed, a dispersant, an additive, and a dispersion medium were put into a glass bottle and sufficiently mixed and dissolved, or mixed, and then dispersed with a paint conditioner using 0.5 mmcp zirconia beads as media for 2 hours to obtain dispersed materials.

(Examples 46β-52β are not according to the present invention)

[Table 9]

| Table 3β | Dispersed material | Object to be dispersed | | Dispersant | | Additive | | Dispersion medium | | Concentration of object to be dispersed | Amount of dispersant (vs. object to be dispersed) | Amount of additive (vs. dispersant) | Dispersion time (min) | Initial viscosity | Viscosity over time |
|---|---|---|---|---|---|---|---|---|---|---|---|---|---|---|---|
| | | Type | Parts | Type | Parts | Type | Parts | Type | Parts | | | | | | |
| Example 46β | Dispersed material 46β | P-1β | 10 | A-1 | 4 | NaOH | 0.8 | PGM Ac | 85.2 | 10% | 40% | 20% | 180 | O | O |
| Example 47β | Dispersed material 47β | P-2β | 10 | A-1 2 | 4 | NaOH | 0.8 | PGM Ac | 85.2 | 10% | 40% | 20% | 180 | O | O |
| Example 48β | Dispersed material 48β | P-3β | 10 | A-1 3 | 4 | NaOH | 0.8 | PGM Ac | 85.2 | 10% | 40% | 20% | 180 | ⊙ | ⊙ |
| Example 49β | Dispersed material 49β | P-4β | 10 | A-1 4 | 4 | NaOH | 0.8 | PGM Ac | 85.2 | 10% | 40% | 20% | 180 | ⊙ | ⊙ |
| Example 50β | Dispersed material 50β | P-5β | 1 | A-3 | 0.4 | NaOH | 0.08 | Water | 98.52 | 10% | 40% | 20% | 60 | O | O |
| Example 51β | Dispersed material 51β | P-6β | 10 | A-6 | 4 | NaOH | 0.8 | Butyl acetate | 85.2 | 10% | 40% | 20% | 60 | O | O |
| Example 52β | Dispersed material 52β | P-7β | 10 | A-6 | 4 | NaOH | 0.8 | Butyl acetate | 85.2 | 10% | 40% | 20% | 60 | O | O |
| Comparative Example 8β | Comparative dispersed material 8β | P-1β | 10 | PVA | 4 | NaOH | 0.8 | PGM Ac | 85.2 | 10% | 40% | 20% | 360 | O | Δ |
| Comparative Example 9β | Comparative dispersed material 9β | P-5β | 10 | PVA | 4 | NaOH | 0.8 | Water | 85.2 | 10% | 40% | 20% | 120 | Δ | × |
| Comparative Example 10β | Comparative dispersed material 10β | P-6β | 10 | PVA | 4 | NaOH | 0.8 | Butyl acetate | 85.2 | 10% | 40% | 20% | 120 | Δ | × |

P-1: phthalocyanine green pigment C. I. Pigment Green 58 ("FASTOGEN GREEN A110," commercially available from DIC)
P-2: copper phthalocyanine blue pigment PB15: 6 ("Lionol Blue ES," commercially available from Toyocolor Co., Ltd.)
P-3: quinophthalone yellow pigment PY138 ("Paliotol Yellow K 0961HD," commercially available from BASF Japan)
P-4: anthraquinone red pigment C. I. Pigment Red 177 ("Cromophtal Red A2B," commercially available from BASF Japan)
P-5: cellulose fiber ("Celish KY100G," commercially available from Daicel Corporation)
P-6: titanium oxide ("CR-95," commercially available from Ishihara Sangyo Kaisha, Ltd.)
P-7: zirconium oxide powder ("PCS," commercially available from Nippon Denko Co., Ltd.)

As shown in Table 3β, the dispersed material 46β to dispersed material 52β using the dispersant of the present invention all had excellent dispersibility so that they had low viscosity and good storage stability.

[Examples 53β to 97β and Comparative Examples 11β to 17β]

(Conductive coating film formed using carbon black dispersed material)

The dispersed materials 1β to 45β and binder resins were blended with dispersed materials so that the non-volatile content and the carbon concentration in the non-volatile content were as shown in Table 4β, and thereby carbon dispersed materials were prepared. Using a bar coater, the dispersed material prepared using the bar coater was applied to the surface of a PET film having a thickness of 100 μm, and drying was then performed at 130°C for 30 minutes to produce a test film having a coating film having a thickness of 5 μm. (Examples 53β, 66β, 67β, 70β-72β and 82β-97β are not according to the present invention)

<Surface resistance value>

The surface resistance value of the coating film of the obtained test film was measured using a resistivity meter (product name "Hiresta", commercially available from Mitsubishi Chemical Analytech Co., Ltd.). The results are shown in Table 4.

O: less than $1.0\times10^4$ Ω/cm$^2$ (very good)
O: $1.0\times10^4$ Ω/cm$^2$ or more and less than $1.0\times10^7$ Ω/cm$^2$ (good)
△: $1.0\times10^7$ Ω/cm$^2$ or more and less than $1.0\times10^{10}$ Ω/cm$^2$ (poor)
×: $1.0\times10^{10}$ Ω/cm$^2$ or more, precipitated or separated (very poor)

<Water resistance>

The obtained test film was immersed in warm water at 25°C for 2 hours, and then pulled up, water droplets on the surface were wiped off, and the state of the coating film was then visually evaluated. The results are shown in Table 4β.
Determination criteria

⊙: There was no change in the coating film (very good)
O: Whitening was observed on the coating film, but the surface was returned to its original state after being left for 24 hours (good)
×: The coating film was significantly whitened, but the state was not returned to its original state even after being left for 24 hours (poor)

[Table 10]

| Table 4β | Dispersed material | Binder resin | Non-volatile content | Carbon concentration (in non-volatile content) | Dispersion medium | Surface resistance value | Water resistance |
|---|---|---|---|---|---|---|---|
| Example 53β | Dispersed material 1β | CMC | 20% | 20% | Water | ⊙ | O |
| Example 54β | Dispersed material 2β | CMC | 20% | 20% | Water | ⊙ | O |
| Example 55β | Dispersed material 3β | CMC | 20% | 20% | Water | ⊙ | O |
| Example 56β | Dispersed material 4β | CMC | 20% | 20% | Water | ⊙ | O |
| Example 57β | Dispersed material 5β | CMC | 20% | 20% | Water | ⊙ | O |
| Example 58β | Dispersed material 6β | CMC | 20% | 20% | Water | ⊙ | O |
| Example 59β | Dispersed material 7β | CMC | 20% | 20% | Water | ⊙ | O |
| Example 60β | Dispersed material 8β | CMC | 20% | 20% | Water | ⊙ | O |
| Example 61β | Dispersed material 9β | CMC | 20% | 20% | Water | ⊙ | O |
| Example 62β | Dispersed material 10β | CMC | 20% | 20% | Water | ⊙ | O |
| Example 63β | Dispersed material 11β | CMC | 20% | 20% | Water | ⊙ | O |
| Example 64β | Dispersed material 12β | CMC | 20% | 20% | Water | ⊙ | O |
| Example 65β | Dispersed material 13β | CMC | 20% | 20% | Water | ⊙ | O |
| Example 66β | Dispersed material 14β | CMC | 20% | 20% | Water | ⊙ | O |
| Example 67β | Dispersed material 15β | CMC | 20% | 20% | Water | ⊙ | O |
| Example 68β | Dispersed material 16β | CMC | 10% | 20% | Water | ⊙ | O |
| Example 69β | Dispersed material 17β | CMC | 10% | 20% | Water | ⊙ | O |
| Example 70β | Dispersed material 18β | CMC | 20% | 20% | Water | ⊙ | O |
| Example 71β | Dispersed material 19β | CMC | 20% | 20% | Water | ⊙ | O |
| Example 72β | Dispersed material 20β | CMC | 20% | 20% | Water | ⊙ | O |
| Example 73β | Dispersed material 21β | CMC | 20% | 20% | Water | ⊙ | O |
| Example 74β | Dispersed material 22β | CMC | 10% | 20% | Water | ⊙ | O |
| Example 75β | Dispersed material 23β | CMC | 20% | 7% | Water | ⊙ | O |
| Example 76β | Dispersed material 24β | CMC | 20% | 7% | Water | ⊙ | O |

(continued)

| Table 4β | Dispersed material | Binder resin | Non-volatile content | Carbon concentration (in non-volatile content) | Dispersion medium | Surface resistance value | Water resistance |
|---|---|---|---|---|---|---|---|
| Example 77β | Dispersed material 25β | CMC | 20% | 20% | Water | ⊙ | ○ |
| Example 78β | Dispersed material 26β | CMC | 20% | 20% | Water | ⊙ | ○ |
| Example 79β | Dispersed material 27β | CMC | 20% | 20% | Water | ⊙ | ○ |
| Example 80β | Dispersed material 28β | CMC | 20% | 20% | Water | ⊙ | ○ |
| Example 81β | Dispersed material 29β | CMC | 20% | 20% | Water | ⊙ | ⊙ |
| Example 82β | Dispersed material 30β | PVDF | 20% | 20% | NMP | ⊙ | ⊙ |
| Example 83β | Dispersed material 31β | PVDF | 20% | 20% | NMP | ⊙ | ⊙ |
| Example 84β | Dispersed material 32β | PVDF | 20% | 20% | NMP | ⊙ | ⊙ |
| Example 85β | Dispersed material 33 β | LF9716 | 20% | 20% | Butyl acetate | ⊙ | ⊙ |
| Example 86β | Dispersed material 34β | LF9716 | 20% | 20% | MEK | ⊙ | ⊙ |
| Example 87β | Dispersed material 35β | LF9716 | 20% | 20% | PGMAc | ⊙ | ⊙ |
| Example 88β | Dispersed material 36β | PVDF | 20% | 20% | NMP | ⊙ | ⊙ |
| Example 89β | Dispersed material 37β | PVDF | 20% | 20% | NMP | ⊙ | ⊙ |
| Example 90β | Dispersed material 38β | PVDF | 20% | 20% | NMP | ⊙ | ⊙ |
| Example 91β | Dispersed material 39β | PVDF | 20% | 7% | NMP | ⊙ | ⊙ |
| Example 92β | Dispersed material 40β | PVDF | 20% | 7% | NMP | ⊙ | ⊙ |
| Example 93β | Dispersed material 41β | PVDF | 20% | 7% | NMP | ⊙ | ⊙ |
| Example 94β | Dispersed material 42β | PVDF | 20% | 7% | NMP | ⊙ | ⊙ |
| Example 95β | Dispersed material 43β | PVDF | 20% | 7% | NMP | ⊙ | ⊙ |
| Example 96β | Dispersed material 44β | PVDF | 20% | 20% | NMP | ⊙ | ⊙ |
| Example 97β | Dispersed material 45β | PVDF | 20% | 20% | NMP | ⊙ | ⊙ |
| Comparative Example 11β | Comparative dispersed material 1β | CMC | 20% | 20% | Water | Δ | × |
| Comparative Example 12β | Comparative dispersed material 2β | PVDF | 20% | 20% | NMP | Δ | × |
| Comparative Example 13β | Comparative dispersed material 3β | CMC | 20% | 20% | Water | × | × |

| Table 4β | Dispersed material | Binder resin | Non-volatile content | Carbon concentration (in non-volatile content) | Dispersion medium | Surface resistance value | Water resistance |
|---|---|---|---|---|---|---|---|
| Comparative Example 14β | Comparative dispersed material 4β | LF9716 | 20% | 20% | Butyl acetate | × | × |
| Comparative Example 15β | Comparative dispersed material 5β | LF9716 | 20% | 20% | MEK | × | × |
| Comparative Example 16β | Comparative dispersed material 6β | LF9716 | 20% | 20% | PGMAc | × | × |
| Comparative Example 17β | Comparative dispersed material 7β | CMC | 20% | 20% | Water | × | × |

·CMC: carboxymethyl cellulose #1120, a non-volatile content of 100%, commercially available from Daicel FineChem Co., Ltd.
·PVDF: polyvinylidene fluoride, KF polymer W1100, a non-volatile content of 100%, commercially available from Kureha
·LF9716: fluororesin, a non-volatile content of 70%, commercially available from AGC

Based on the above results, when the dispersant of the present invention was used, it was possible to produce a dispersed material having excellent dispersion efficiency and excellent dispersibility and storage stability. In particular, when the dispersion medium was water or a hydrophilic solvent such as NMP, a dispersant containing an active hydrogen group-containing monomer unit or a basic monomer unit was preferable, and dispersants containing a (meth)acrylic acid alkyl ester unit were excellent for solvents such as butyl acetate, MEK, and PGMAc.

In addition, in Comparative Example 7β in Table 2-2β, the conventional dispersant had a certain degree of dispersibility when the amount used increased, but the dispersibility was reduced when the amount used decreased. On the other hand, the dispersant of the present invention had good dispersibility even if the amount used was reduced.

In addition, using the dispersant of the present invention, it was possible to produce a dispersed material having good dispersibility and excellent fluidity and storage stability not only for a conductive material but also for an object to be dispersed other than the conductive material.

When the dispersant of the present invention was used for a power storage device, an electrode having excellent electrical conductivity and good water resistance was obtained.

<Production of CNT dispersed material>

(Example 98β)

According to the composition and dispersion time shown in Table 5β, 0.8 parts of a dispersant, 0.2 parts of an additive, and 97 parts of a dispersion medium were put into a glass bottle (M-225, commercially available from Hakuyo Glass Co., Ltd.), and sufficiently mixed and dissolved, or mixed and 2 parts of CNT as a conductive material was then added thereto, and dispersed with a paint conditioner using zirconia beads (with a bead diameter of 0.5 mm<p) as media to obtain a CNT dispersed material (CNT dispersed material 1β). As shown in Table 5β, the CNT dispersed material 1β had low viscosity and good storage stability.

(Examples 99β to 123β and Comparative Examples 18β to 21β)

According to the compositions and dispersion times shown in Table 5β, CNT dispersed materials (CNT dispersed materials 2β to 26β, and comparative CNT dispersed materials 1β to 4β) were obtained in the same manner as in Example 100β. As shown in Table 5β, the CNT dispersed materials (CNT dispersed materials 2β to 26β) of the present invention all had low viscosity and good storage stability. (Examples 98β, 108β and 112β-123β are not according to the present invention)

·8A: JENOTUBE8A (multi-walled CNT, an outer diameter of 6 to 9 nm, commercially available from JEIO)
·100T: K-Nanos 100T (multi-walled CNT, an outer diameter of 10 to 15 nm, commercially available from Kumho Petrochemical)
·PVA: Kuraray POVAL PVA403 (a non-volatile content of 100%, commercially available from Kuraray Co., Ltd.)
·PVP: polyvinylpyrrolidone K-30 (a non-volatile content of 100%, commercially available from Nippon Shokubai Co., Ltd.)
.PVB: S-LEC BL-10 (a non-volatile content of 100%, commercially available from Sekisui Chemical Co., Ltd.)
·NMP: N-methyl-2-pyrrolidone

(Measurement of viscosity of CNT dispersed material)

The viscosity value was measured according to the method of evaluating the stability of the dispersed material except that the determination criteria were changed as follows.

Determination criteria

⊙: less than 500 mPa·s (very good)

○: 500 mPa·s or more and less than 2,000 mPa·s (good)
△: 2,000 mPa·s or more and less than 10,000 mPa·s (poor)
×: 10,000 mPa·s or more, precipitated or separated (very poor)

(Method of evaluating stability of CNT dispersed material)

The storage stability was evaluated according to the method of evaluating the stability of the dispersed material except that the determination criteria were changed as follows.
Determination criteria

⊙: Equivalent to the initial value (very good)
○: No problem (good)
△: The viscosity increased but the material did not gel (poor)
×: Gelled (very poor)

[Table 11]

| Table 5β | CNT dispersed material | Conductive material | | Dispersant | | Additive | | Dispersion medium | | CNT concentration | Amount of dispersant (vs. CNT) | Amount of additive (vs. dispersant) | Dispersion time (min) | Initial viscosity | Storage stability |
|---|---|---|---|---|---|---|---|---|---|---|---|---|---|---|---|
| | | Type | Parts | Type | Parts | Type | Parts | Type | Parts | | | | | | |
| Example 98β | CNT dispersed material 1β | 8A | 2 | A-1β | 0.8 | Na$_2$CO$_3$ | 0.20 | Water | 97 | 2% | 40% | 25% | 240 | O | O |
| Example 99β | CNT dispersed material 2β | 8A | 2 | A-2β | 0.8 | Na$_2$CO$_3$ | 0.20 | Water | 97 | 2% | 40% | 25% | 240 | O | O |
| Example 100β | CNT dispersed material 3β | 8A | 2 | A-3β | 0.8 | Na$_2$CO$_3$ | 0.20 | Water | 97 | 2% | 40% | 25% | 240 | ⊙ | ⊙ |
| Example 101β | CNT dispersed material 4β | 8A | 2 | A-4β | 0.8 | Na$_2$CO$_3$ | 0.20 | Water | 97 | 2% | 40% | 25% | 240 | ⊙ | ⊙ |
| Example 102β | CNT dispersed material 5β | 8A | 2 | A-5β | 0.8 | Na$_2$CO$_3$ | 0.20 | Water | 97 | 2% | 40% | 25% | 240 | ⊙ | ⊙ |
| Example 103β | CNT dispersed material 6β | 8A | 2 | A-6β | 0.8 | Na$_2$CO$_3$ | 0.20 | Water | 97 | 2% | 40% | 25% | 240 | ⊙ | ⊙ |
| Example 104β | CNT dispersed material 7β | 8A | 2 | A-7β | 0.8 | Na$_2$CO$_3$ | 0.20 | Water | 97 | 2% | 40% | 25% | 240 | O | ⊙ |
| Example 105β | CNT dispersed material 8β | 8A | 2 | A-8β | 0.8 | Na$_2$CO$_3$ | 0.20 | Water | 97 | 2% | 40% | 25% | 240 | O | ⊙ |
| Example 106β | CNT dispersed material 9β | 8A | 2 | A-16β | 0.8 | Na$_2$CO$_3$ | 0.20 | Water | 97 | 2% | 40% | 25% | 240 | ⊙ | ⊙ |
| Example 107β | CNT dispersed material 10β | 100T | 2 | A-4β | 0.8 | Na$_2$CO$_3$ | 0.20 | Water | 97 | 2% | 40% | 25% | 240 | ⊙ | ⊙ |

| Table 5β | CNT dispersed material | Conductive material | | Dispersant | | Additive | | Dispersion medium | | CNT concentration | Amount of dispersant (vs. CNT) | Amount of additive (vs. dispersant) | Dispersion time (min) | Initial viscosity | Storage stability |
|---|---|---|---|---|---|---|---|---|---|---|---|---|---|---|---|
| | | Type | Parts | Type | Parts | Type | Parts | Type | Parts | | | | | | |
| Example 108β | CNT dispersed material 11β | 8A | 2 | A-4β | 0.8 | - | - | Water | 97.2 | 2% | 40% | 25% | 240 | O | O |
| Example 109β | CNT dispersed material 12β | 8A | 2 | A-4β | 0.8 | NaOH | 0.20 | Water | 97 | 2% | 40% | 25% | 240 | ⊙ | ⊙ |
| Example 110β | CNT dispersed material 13β | 8A | 2 | A-4β | 0.8 | $Li_2CO_3$ | 0.20 | Water | 97 | 2% | 40% | 25% | 240 | ⊙ | ⊙ |
| Example 111β | CNT dispersed material 14β | 8A | 2 | A-4β | 0.8 | Octylamine | 0.20 | Water | 97 | 2% | 40% | 25% | 240 | O | ⊙ |
| Example 112β | CNT dispersed material 15β | 8A | 2 | A-9β | 0.8 | $Na_2CO_3$ | 0.20 | NMP | 97 | 2% | 40% | 25% | 240 | ⊙ | ⊙ |
| Example 113β | CNT dispersed material 16β | 8A | 2 | A-10β | 0.8 | $Na_2CO_3$ | 0.20 | NMP | 97 | 2% | 40% | 25% | 240 | ⊙ | ⊙ |
| Example 114β | CNT dispersed material 17β | 8A | 2 | A-11β | 0.8 | $Na_2CO_3$ | 0.20 | NMP | 97 | 2% | 40% | 25% | 240 | ⊙ | ⊙ |
| Example 115β | CNT dispersed material 18β | 8A | 2 | A-12β | 0.8 | $Na_2CO_3$ | 0.20 | NMP | 97 | 2% | 40% | 25% | 240 | ⊙ | ⊙ |
| Example 116β | CNT dispersed material 19β | 8A | 2 | A-13β | 0.8 | $Na_2CO_3$ | 0.20 | NMP | 97 | 2% | 40% | 25% | 240 | ⊙ | ⊙ |

| Table 5β | CNT dispersed material | Conductive material | | Dispersant | | Additive | | Dispersion medium | | CNT concentration | Amount of dispersant (vs. CNT) | Amount of additive (vs. dispersant) | Dispersion time (min) | Initial viscosity | Storage stability |
|---|---|---|---|---|---|---|---|---|---|---|---|---|---|---|---|
| | | Type | Parts | Type | Parts | Type | Parts | Type | Parts | | | | | | |
| Example 117β | CNT dispersed material 20β | 8A | 2 | A-14β | 0.8 | $Na_2CO_3$ | 0.20 | NMP | 97 | 2% | 40% | 25% | 240 | O | ⊙ |
| Example 118β | CNT dispersed material 21β | 8A | 2 | A-15β | 0.8 | $Na_2CO_3$ | 0.20 | NMP | 97 | 2% | 40% | 25% | 240 | O | O |
| Example 119β | CNT dispersed material 22β | 8A | 2 | A-17β | 0.8 | $Na_2CO_3$ | 0.20 | NMP | 97 | 2% | 40% | 25% | 240 | O | ⊙ |
| Example 120β | CNT dispersed material 23β | 8A | 2 | A-9β | 0.8 | - | - | NMP | 97.2 | 2% | 40% | 25% | 240 | O | O |
| Example 121β | CNT dispersed material 24β | 8A | 2 | A-9β | 0.8 | NaOH | 0.20 | NMP | 97 | 2% | 40% | 25% | 240 | ⊙ | ⊙ |
| Example 122β | CNT dispersed material 25β | 8A | 2 | A-9β | 0.8 | $Li_2CO_3$ | 0.20 | NMP | 97 | 2% | 40% | 25% | 240 | ⊙ | ⊙ |
| Example 123β | CNT dispersed material 26β | 8A | 2 | A-9β | 0.8 | Octylamine | 0.20 | NMP | 97 | 2% | 40% | 25% | 240 | O | ⊙ |
| Comparative Example 18β | comparative CNT dispersed material 1β | 8A | 2 | PVA | 0.8 | NaOH | 0.20 | Water | 97 | 2% | 40% | 25% | 240 | × | × |
| Comparative Example 19β | comparative CNT dispersed material 2β | 8A | 2 | PVP | 0.8 | NaOH | 0.20 | Water | 97 | 2% | 40% | 25% | 240 | × | × |

(continued)

| Table 5β | CNT dispersed material | Conductive material | | Dispersant | | Additive | | Dispersion medium | | CNT concentration | Amount of dispersant (vs. CNT) | Amount of additive (vs. dispersant) | Dispersion time (min) | Initial viscosity | Storage stability |
|---|---|---|---|---|---|---|---|---|---|---|---|---|---|---|---|
| | | Type | Parts | Type | Parts | Type | Parts | Type | Parts | | | | | | |
| Comparative Example 20β | comparative CNT dispersed material 3β | 8A | 2 | PVA | 0.8 | NaOH | 0.20 | NMP | 97 | 2% | 40% | 25% | 240 | × | × |
| Comparative Example 21β | comparative CNT dispersed material 4β | 8A | 2 | PVP | 0.8 | NaOH | 0.20 | NMP | 97 | 2% | 40% | 25%, | 240 | × | × |

<Production of negative electrode mixture composition>

(Example 124β)

The CNT dispersed material (CNT dispersed material 1β), CMC, and water were put into a plastic container having a volume of 150 cm$^3$, and then stirred at 2,000 rpm for 30 seconds using a rotation/revolution mixer (Awatori Rentaro, ARE-310, commercially available from Thinky Corporation) to obtain a CNT-containing resin composition 1β. Then, an active material was added thereto, and the mixture was stirred at 2,000 rpm for 150 seconds using the rotation/revolution mixer. In addition, SBR was then added thereto, and the mixture was stirred at 2,000 rpm for 30 seconds using the rotation/revolution mixer to obtain a negative electrode mixture composition 1β. The non-volatile content of the negative electrode mixture composition 1β was 48% by mass. The non-volatile content ratio of the active material:CNT:CMC:SBR in the negative electrode mixture composition was 97:0.5:1:1.5.
·Artificial graphite: CGB-20 (commercially available from Nippon Graphite Industries, Co., Ltd.), a non-volatile content of 100%
·CMC: carboxymethyl cellulose #1190 (commercially available from Daicel FineChem Co., Ltd.), a non-volatile content of 100%
·SBR: styrene butadiene rubber TRD2001 (commercially available from JSR), a non-volatile content of 48%

(Examples 125β to 137β and Comparative Examples 22β and 23β)

CNT-containing resin compositions 2β to 14β and comparative CNT-containing resin compositions 1β and 2β, negative electrode mixture compositions 2β to 14β and negative electrode comparative mixture compositions 1β and 2β were obtained in the same method as in Example 124β except that the type of the CNT dispersed material was changed.

(Examples 124β and 134β are not according to the present invention)

[Table 12]

| Table 6β | Negative electrode mixture composition | CNT-containing resin composition | CNT dispersed material | Active material | | Conductive material | | Binder 1 | | Binder 2 | | Dispersion medium |
|---|---|---|---|---|---|---|---|---|---|---|---|---|
| | | | | Type | Non-volatile content (parts) | Type | Non-volatile content (parts) | Type | Non-volatile content (parts) | Type | Non-volatile content (parts) | Type |
| Example 124β | Negative electrode mixture composition 1β | CNT-containing resin composition 1β | CNT dispersed material 1β | Artificial graphite | 97 | 8A | 0.5 | CMC | 1 | SBR | 1.5 | Water |
| Example 125β | Negative electrode mixture composition 2β | CNT-containing resin composition 2β | CNT dispersed material 2β | Artificial graphite | 97 | 8A | 0.5 | CMC | 1 | SBR | 1.5 | Water |
| Example 126β | Negative electrode mixture composition 3β | CNT-containing resin composition 3β | CNT dispersed material 3β | Artificial graphite | 97 | 8A | 0.5 | CMC | 1 | SBR | 1.5 | Water |
| Example 127β | Negative electrode mixture composition 4β | CNT-containing resin composition 4β | CNT dispersed material 4β | Artificial graphite | 97 | 8A | 0.5 | CMC | 1 | SBR | 1.5 | Water |
| Example 128β | Negative electrode mixture composition 5β | CNT-containing resin composition 5β | CNT dispersed material 5β | Artificial graphite | 97 | 8A | 0.5 | CMC | 1 | SBR | 1.5 | Water |
| Example 129β | Negative electrode mixture composition 6β | CNT-containing resin composition 6β | CNT dispersed material 6β | Artificial graphite | 97 | 8A | 0.5 | CMC | 1 | SBR | 1.5 | Water |
| Example 13013 | Negative electrode mixture composition 7β | CNT-containing resin composition 7β | CNT dispersed material 7β | Artificial graphite | 97 | 8A | 0.5 | CMC | 1 | SBR | 1.5 | Water |
| Example 131β | Negative electrode mixture composition 8β | CNT-containing resin composition 8β | CNT dispersed material 8β | Artificial graphite | 97 | 8A | 0.5 | CMC | 1 | SBR | 1.5 | Water |

| Table 6β | Negative electrode mixture composition | CNT-containing resin composition | CNT dispersed material | Active material | | Conductive material | | Binder 1 | | Binder 2 | | Dispersion medium |
|---|---|---|---|---|---|---|---|---|---|---|---|---|
| | | | | Type | Non-volatile content (parts) | Type | Non-volatile content (parts) | Type | Non-volatile content (parts) | Type | Non-volatile content (parts) | Type |
| Example 132β | Negative electrode mixture composition 9β | CNT-containing resin composition 9β | CNT dispersed material 9β | Artificial graphite | 97 | 8A | 0.5 | CMC | 1 | SBR | 1.5 | Water |
| Example 133β | Negative electrode mixture composition 10β | CNT-containing resin composition 10β | CNT dispersed material 10β | Artificial graphite | 97 | 100T | 0.5 | CMC | 1 | SBR | 1.5 | Water |
| Example 134β | Negative electrode mixture composition 11β | CNT-containing resin composition 11β | CNT dispersed material 11β | Artificial graphite | 97 | 8A | 0.5 | CMC | 1 | SBR | 1.5 | Water |
| Example 135β | Negative electrode mixture composition 12β | CNT-containing resin composition 12β | CNT dispersed material 12β | Artificial graphite | 97 | 8A | 0.5 | CMC | 1 | SBR | 1.5 | Water |
| Example 136β | Negative electrode mixture composition 13β | CNT-containing resin composition 13β | CNT dispersed material 13β | Artificial graphite | 97 | 8A | 0.5 | CMC | 1 | SBR | 1.5 | Water |
| Example 137β | Negative electrode mixture composition 14β | CNT-containing resin composition 14β | CNT dispersed material 14β | Artificial graphite | 97 | 8A | 0.5 | CMC | 1 | SBR | 1.5 | Water |
| Comparative Example 22β | Negative electrode comparative mixture composition 1β | Comparative CNT-containing resin composition 1β | comparative CNT dispersed material 1β | Artificial graphite | 97 | 8A | 0.5 | CMC | 1 | SBR | 1.5 | Water |

| Table 6β | Negative electrode mixture composition | CNT-containing resin composition | CNT dispersed material | Active material | | Conductive material | | Binder 1 | | Binder 2 | | Dispersion medium |
|---|---|---|---|---|---|---|---|---|---|---|---|---|
| | | | | Type | Non-volatile content (parts) | Type | Non-volatile content (parts) | Type | Non-volatile content (parts) | Type | Non-volatile content (parts) | Type |
| Comparative Example 23β | Negative electrode comparative mixture composition 2β | Comparative CNT-containing resin composition 2β | comparative CNT dispersed material 2β | Artificial graphite | 97 | 8A | 0.5 | CMC | 1 | SBR | 1.5 | Water |

<Production of positive electrode mixture composition>

(Example 138β)

The CNT dispersed material (CNT dispersed material 15β) and NMP in which 8% by mass PVDF was dissolved were put into a plastic container having a volume of 150 cm$^3$, and the mixture was then stirred at 2,000 rpm for 30 seconds using a rotation/revolution mixer (Awatori Rentaro, ARE-310, commercially available from Thinky Corporation) to obtain a CNT-containing resin composition 15β. Then, an active material was added thereto and the mixture was stirred at 2,000 rpm for 150 seconds using a rotation/revolution mixer (Awatori Rentaro, ARE-310, commercially available from Thinky Corporation). In addition, NMP was then added thereto and the mixture was stirred at 2,000 rpm for 30 seconds using a rotation/revolution mixer (Awatori Rentaro, ARE-310, commercially available from Thinky Corporation) to obtain a positive electrode mixture composition 1β. The non-volatile content of the positive electrode mixture composition 1β was 75% by mass. The non-volatile content ratio of the active material: CNT: PVDF in the positive electrode mixture composition was 98.5:0.5:1.

·NMC (nickel manganese lithium cobalt oxide): HED (registered trademark) NCM-111 1100 (commercially available from BASF TODA Battery Materials LLC), a non-volatile content of 100%

·PVDF: polyvinylidene fluoride Solef#5130 (commercially available from Solvey), a non-volatile content of 100%

(Examples 139β to 149β and Comparative Examples 24β and 25β)

CNT-containing resin compositions 16β to 26β, comparative CNT-containing resin compositions 3β and 4β, positive electrode mixture compositions 2β to 12β and positive electrode comparative mixture compositions 1β and 2β were obtained in the same method as in Example 138β except that the type of the CNT dispersed material was changed.

(Examples 138β-149β are not according to the present invention)

[Table 13]

| Table 7β | Mixture composition | CNT-containing resin composition | Conductive material dispersed material | Active material | | Conductive material | | Binder | | Dispersion medium |
|---|---|---|---|---|---|---|---|---|---|---|
| | | | | Type | Non-volatil e content (parts) | Type | Non-volat ile content (parts) | Type | Non-volat ile content (parts) | Type |
| Example 138β | Positive electrode mixture composition 1β | CNT-containing resin composition 15β | CNT dispersed material 15β | NCM | 98.5 | 8A | 0.5 | PVDF | | NMP |
| Example 139β | Positive electrode mixture composition 2β | CNT-containing resin composition 16β | CNT dispersed material 16β | NCM | 98.5 | 8A | 0.5 | PVDF | 1 | NMP |
| Example 140β | Positive electrode mixture composition 3β | CNT-containing resin composition 17β | CNT dispersed material 17β | NCM | 98.5 | 8A | 0.5 | PVDF | 1 | NMP |

(continued)

| Table 7β | Mixture composition | CNT-containing resin composition | Conductive material dispersed material | Active material | | Conductive material | | Binder | | Dispersion medium |
|---|---|---|---|---|---|---|---|---|---|---|
| | | | | Type | Non-volatile content (parts) | Type | Non-volatile content (parts) | Type | Non-volatile content (parts) | Type |
| Example 141β | Positive electrode mixture composition 413 | CNT-containing resin composition 18β | CNT dispersed material 18β | NCM | 98.5 | 8A | 0.5 | PVDF | 1 | NMP |
| Example 142β | Positive electrode mixture composition 5β | CNT-containing resin composition 19β | CNT dispersed material 19β | NCM | 98.5 | 8A | 0.5 | PVDF | 1 | NMP |
| Example 143β | Positive electrode mixture composition 6β | CNT-containing resin composition 20β | CNT dispersed material 20β | NCM | 98.5 | 8A | 0.5 | PVDF | 1 | NMP |
| Example 144β | Positive electrode mixture composition 7β | CNT-containing resin composition 21β | CNT dispersed material 21β | NCM | 98.5 | 8A | 0.5 | PVDF | 1 | NMP |
| Example 145β | Positive electrode mixture composition 8β | CNT-containing resin composition 22β | CNT dispersed material 22β | NCM | 98.5 | 8A | 0.5 | PVDF | 1 | NMP |
| Example 146β | Positive electrode mixture composition 913 | CNT-containing resin composition 23β | CNT dispersed material 23β | NCM | 98.5 | 8A | 0.5 | PVDF | 1 | NMP |
| Example 147β | Positive electrode mixture composition 10β | CNT-containing resin composition 24β | CNT dispersed material 24β | NCM | 98.5 | 8A | 0.5 | PVDF | 1 | NMP |
| Example 148β | Positive electrode mixture composition 11β | CNT-containing resin composition 25β | CNT dispersed material 25β | NCM | 98.5 | 8A | 0.5 | PVDF | 1 | NMP |
| Example 149β | Positive electrode mixture composition 12β | CNT-containing resin composition 26β | CNT dispersed material 26β | NCM | 98.5 | 8A | 0.5 | PVDF | 1 | NMP |

(continued)

| Table 7β | Mixture composition | CNT-containing resin composition | Conductive material dispersed material | Active material | | Conductive material | | Binder | | Dispersion medium |
|---|---|---|---|---|---|---|---|---|---|---|
| | | | | Type | Non-volatile content (parts) | Type | Non-volatile content (parts) | Type | Non-volatile content (parts) | Type |
| Comparative Example 24β | Positive electrode comparative mixture composition 1β | Comparative CNT-containing resin composition 3β | Comparative CNT dispersed material 3β | NCM | 98.5 | 8A | 0.5 | PVDF | 1 | NMP |
| Comparative Example 25β | Positive electrode comparative mixture composition 2β | Comparative CNT-containing resin composition 4β | Comparative CNT dispersed material 4β | NCM | 98.5 | 8A | 0.5 | PVDF | 1 | NMP |

<Production of negative electrode>

(Examples 150β to 163β and Comparative Examples 26β and 27β)

The negative electrode mixture composition shown in Table 8β was applied to a copper foil having a thickness of 20 μm using an applicator, and the coating film was then dried in an electric oven at 120°C±5°C for 25 minutes to produce an electrode film with a mixture layer. Then, the electrode film was rolled by a roll press (3t hydraulic roll press, commercially available from Thank Metal Co., Ltd.). Here, the basis weight per unit of the mixture layer was 10 mg/cm$^2$, and the density of the mixture layer after rolling was 1.6 g/cc.

(Method of evaluating electrical conductivity of negative electrode)

The surface resistivity (Ω/□) of the mixture layer of the obtained negative electrode was measured using Loresta GP, MCP-T610 (commercially available from Mitsubishi Chemical Analytech Co., Ltd.). After the measurement, the thickness of the mixture layer was multiplied to obtain a volume resistivity (Q.cm) of the negative electrode. For the thickness of the mixture layer, using a film thickness meter (DIGIMICRO MH-15M, commercially available from NIKON), the film thickness of the copper foil was subtracted from the average value measured at 3 points in the electrode to obtain a volume resistivity (Ω-cm) of the negative electrode. The electrical conductivity of the negative electrode was evaluated as ⊙ (very good) when the volume resistivity (Ω-cm) of the electrode was less than 0.3, O (good) when the volume resistivity (Ω-cm) was 0.3 or more and less than 0.5, and × (poor) when the volume resistivity (Ω-cm) was 0.5 or more.

(Method of evaluating adhesiveness of negative electrode)

The obtained negative electrode was cut into two 90 mm×20 mm rectangles with the coating direction as the major axis. The peeling strength was measured using a desktop tensile tester (Strograph E3, commercially available from Toyo Seiki Co., Ltd.), and evaluated according to the 180 degree peeling test method. Specifically, a double-sided tape with a size of 100 mm×30 mm (No. 5000NS, commercially available from Nitoms Inc.) was attached to a stainless steel plate, and the side of the mixture layer of the produced negative electrode was brought into close contact with one surface of the double-sided tape to prepare a test sample. Next, the test sample was vertically fixed so that the short sides of the rectangle were on the top and bottom, the end of the copper foil was peeled off while pulling it from the bottom to the top at a certain speed (50 mm/min), and the average value of stress at this time was used as the peeling strength. The adhesiveness of the electrode was evaluated as O (very good) when the peeling strength was 0.5 N/cm or more, O (good) when the peeling strength was 0.1 N/cm or more and less than 0.5 N/cm, and × (poor) when the peeling strength was less than 0.1 N/cm.

(Examples 164β to 175β and Comparative Examples 28β and 29β)

The positive electrode mixture composition shown in Table 8β was applied to an aluminum foil having a thickness of 20 μm using an applicator, and then dried in an electric oven at 120°C±5°C for 25 minutes to produce an electrode film with a mixture layer. Then, the electrode film was rolled by a roll press (3t hydraulic roll press, commercially available from Thank Metal Co., Ltd.). Here, the basis weight per unit of the mixture layer was 20 mg/cm$^2$, and the density of the mixture layer after rolling was 3.1 g/cc.

(Examples 150β, 160β and 164β-175β are not according to the present invention)

(Method of evaluating electrical conductivity of positive electrode)

The electrical conductivity of the obtained positive electrode was evaluated according to the same method as in the negative electrode except that an aluminum foil was used in place of the copper foil. The electrical conductivity of the positive electrode was evaluated as O (very good) when the volume resistivity (Ω·cm) of the electrode was less than 10, O (good) when the volume resistivity (Ω·cm) was 10 or more and less than 20, and × (poor) when the volume resistivity (Ω·cm) was 20 or more.

(Method of evaluating adhesiveness of positive electrode)

The adhesiveness of the obtained positive electrode was evaluated according to the same method as in the negative electrode except that an aluminum foil was used in place of the copper foil. The adhesiveness (N/cm) of the electrode was evaluated as O (very good) when the peeling strength was 1 N/cm or more, O (good) when the peeling strength was 0.5 N/cm or more and less than 1 N/cm, and × (poor) when the peeling strength was less than 0.5 N/cm.

[Table 14]

| Table 8β | Electrode film | Mixture composition | Evaluation of electrical conductivity of electrode | Evaluation of adhesiveness of electrode |
|---|---|---|---|---|
| Example 150β | Negative electrode 1β | Negative electrode mixture composition 1β | ○ | ○ |
| Example 151β | Negative electrode 2β | Negative electrode mixture composition 2β | ○ | ⊙ |
| Example 152β | Negative electrode 3β | Negative electrode mixture composition 3β | ⊙ | ⊙ |
| Example 153β | Negative electrode 4β | Negative electrode mixture composition 4β | ○ | ○ |
| Example 154β | Negative electrode 5β | Negative electrode mixture composition 5β | ○ | ⊙ |
| Example 155β | Negative electrode 6β | Negative electrode mixture composition 6β | ○ | ⊙ |
| Example 156β | Negative electrode 7β | Negative electrode mixture composition 7β | ○ | ○ |
| Example 157β | Negative electrode 8β | Negative electrode mixture composition 8β | ○ | ○ |
| Example 158β | Negative electrode 9β | Negative electrode mixture composition 9β | ○ | ○ |
| Example 159β | Negative electrode 10β | Negative electrode mixture composition 10β | ○ | ○ |
| Example 160β | Negative electrode 11β | Negative electrode mixture composition 11β | ○ | ○ |
| Example 161β | Negative electrode 12β | Negative electrode mixture composition 12β | ○ | ○ |
| Example 162β | Negative electrode 13β | Negative electrode mixture composition 13β | ⊙ | ○ |
| Example 163β | Negative electrode 14β | Negative electrode mixture composition 14β | ⊙ | ⊙ |
| Comparative Example 26β | Comparative negative electrode 1β | Negative electrode comparative mixture composition 1β | × | × |
| Comparative Example 27β | Comparative positive electrode 2β | Negative electrode comparative mixture composition 2β | × | × |
| Example 164β | Positive electrode 1β | Positive electrode mixture composition 1β | ⊙ | ⊙ |
| Example 165β | Positive electrode 2β | Positive electrode mixture composition 2β | ⊙ | ⊙ |
| Example 166β | Positive electrode 3β | Positive electrode mixture composition 3β | ⊙ | ⊙ |
| Example 167β | Positive electrode 4β | Positive electrode mixture composition 4β | ⊙ | ⊙ |
| Example 168β | Positive electrode 5β | Positive electrode mixture composition 5β | ⊙ | ⊙ |
| Example 169β | Positive electrode 6β | Positive electrode mixture composition 6β | ○ | ⊙ |
| Example 170β | Positive electrode 7β | Positive electrode mixture composition 7β | ○ | ○ |
| Example 171β | Positive electrode 8β | Positive electrode mixture composition 8β | ○ | ⊙ |

(continued)

| Table 8β | Electrode film | Mixture composition | Evaluation of electrical conductivity of electrode | Evaluation of adhesiveness of electrode |
|---|---|---|---|---|
| Example 172β | Positive electrode 9β | Positive electrode mixture composition 9β | O | ○ |
| Example 173β | Positive electrode 10β | Positive electrode mixture composition 10β | ⊙ | ⊙ |
| Example 174β | Positive electrode 11β | Positive electrode mixture composition 11β | ⊙ | ⊙ |
| Example 175β | Positive electrode 12β | Positive electrode mixture composition 12β | O | ⊙ |
| Comparative Example 28β | Comparative positive electrode 1β | Positive electrode comparative mixture composition 1β | × | × |
| Comparative Example 29β | Comparative positive electrode 2β | Positive electrode comparative mixture composition 2β | × | × |

As shown in Table 8β, the negative electrode and the positive electrode using the CNT dispersed material of the present invention all had good electrical conductivity and adhesiveness.

(Production Example 18β)

(Production of standard positive electrode)

93 parts by mass of the positive electrode active material (RED (registered trademark) NCM-111 1100, commercially available from BASF TODA Battery Materials LLC.), 4 parts by mass of acetylene black (Denka Black (registered trademark) HS100, commercially available from Denka Co., Ltd.), and 3 parts by mass of PVDF (Kureha KF polymer W#1300, commercially available from Kureha Battery Materials Japan Co., Ltd.) were put into a plastic container having a volume of 150 ml, and then mixed with a spatula until powder was uniform. Then, 20.5 parts by mass of NMP was added thereto and the mixture was stirred at 2,000 rpm for 30 seconds using a rotation/revolution mixer (Awatori Rentaro, ARE-310, commercially available from Thinky Corporation). Then, the mixture in the plastic container was mixed with a spatula until it was uniform, and stirred at 2,000 rpm for 30 seconds using the rotation/revolution mixer. In addition, 14.6 parts by mass of NMP was then added thereto, and the mixture was stirred at 2,000 rpm for 30 seconds using the rotation/revolution mixer. Finally, the sample was stirred at 3,000 rpm for 10 minutes using a high-speed stirrer to obtain a standard positive electrode mixture composition.

The above standard positive electrode mixture composition was applied to an aluminum foil having a thickness of 20 $\mu$m as a current collector using an applicator and then dried in an electric oven at 120°C$\pm$5°C for 25 minutes, and the basis weight per unit area of the electrode was adjusted to 20 mg/cm$^2$. In addition, the sample was rolled by a roll press (3t hydraulic roll press, commercially available from Thank Metal Co., Ltd.) to produce a standard positive electrode having a mixture layer density of 3.1 g/cm$^3$.

(Production Example 19β)

(Production of standard negative electrode)

Acetylene black (Denka Black (registered trademark) HS100, commercially available from Denka Co., Ltd.), CMC, and water were put into a plastic container having a volume of 150 ml, and then stirred at 2,000 rpm for 30 seconds using a rotation/revolution mixer (Awatori Rentaro, ARE-310, commercially available from Thinky Corporation). In addition, artificial graphite (CGB-20 (commercially available from Nippon Graphite Industries, Co., Ltd.)) as an active material was added, and the mixture was stirred at 2,000 rpm for 150 seconds using a rotation/revolution mixer (Awatori Rentaro, ARE-310, commercially available from Thinky Corporation). Subsequently, SBR (TRD2001 (commercially available from JSR)) was added thereto, and the mixture was stirred at 2,000 rpm for 30 seconds using a rotation/revolution mixer (Awatori Rentaro, ARE-310, commercially available from Thinky Corporation) to obtain a standard negative electrode mixture composition. The non-volatile content of the standard negative electrode mixture composition was 48% by mass. The non-volatile content ratio of the active material: conductive material:CMC:SBR in the standard negative electrode mixture composition was 97:0.5:1:1.5.

The above standard negative electrode mixture composition was applied to a copper foil having a thickness of 20 $\mu$m as a current collector using an applicator and then dried in an electric oven at 80°C$\pm$5°C for 25 minutes, and the basis weight per unit area of the electrode was adjusted to 10 mg/cm$^2$. In addition, the sample was rolled by a roll press (3t hydraulic roll press, commercially available from Thank Metal Co., Ltd.) to produce a standard negative electrode having a mixture layer density of 1.6 g/cm$^3$.

<Production of non-aqueous electrolyte secondary battery>

The negative electrode and the positive electrode shown in Table 9β were punched out into 50 mm$\times$45 mm and 45 mm$\times$40 mm, respectively, and a separator (porous polypropylene film) inserted therebetween was inserted into an aluminum laminate bag and dried in an electric oven at 70°C for 1 hour. Then, 2 mL of an electrolyte solution (a non-aqueous electrolyte solution obtained by preparing a mixed solvent obtained by mixing ethylene carbonate, dimethyl carbonate, and diethyl carbonate at a ratio of 1:1:1 (volume ratio), additionally adding 1 part by mass of vinylene carbonate with respect to 100 parts by mass as an additive, and then dissolving LiPF$_6$ at a concentration of 1 M) was injected into a glove box filled with argon gas, and the aluminum laminate bag was then sealed to produce non-aqueous electrolyte secondary batteries 1β to 26β and comparative non-aqueous electrolyte secondary batteries 1β to 4β.

(Method of evaluating rate properties of non-aqueous electrolyte secondary battery)

The obtained non-aqueous electrolyte secondary battery was installed in a thermostatic chamber at 25°C and charging and discharging measurement was performed using a charging and discharging device (SM-8 commercially available from Hokuto Denko Corporation). Constant current and constant voltage charging (a cut-off current of 1 mA (0.02C)) was performed at a charging current of 10 mA (0.2C) and a charge final voltage of 4.3 V, and constant current discharging was then performed at a discharging current of 10 mA (0.2C) and a discharge final voltage of 3 V. This operation was repeated three times and constant current and constant voltage charging (a cut-off current 1 mA (0.02C)) was then performed at a charging current of 10 mA (0.2C) and a charge final voltage of 4.3 V, constant current discharging was performed at a discharging current of 0.2C and 3C until the discharge final voltage reached 3.0 V, and each discharge capacity was determined. The rate properties can be expressed as a ratio of the 0.2C discharge capacity and the 3C discharge capacity according to the following Formula 1.

Rate properties = 3C discharge capacity / 3$^{rd}$ 0.2C discharge capacity $\times$ 100 (%)　　　　　(Formula 1)

For the rate properties, those having rate properties of 80% or more were evaluated as ⊙ (very good), those having rate properties of 60% or more and less than 80% were evaluated as O (good), and those having rate properties of less than 60% were evaluated as × (poor).

(Method of evaluating cycle properties of non-aqueous electrolyte secondary battery)

The obtained non-aqueous electrolyte secondary battery was installed in a thermostatic chamber at 25°C and charging and discharging measurement was performed using a charging and discharging device (SM-8 commercially available from Hokuto Denko Corporation). Constant current and constant voltage charging (a cut-off current of 2.5 mA (0.05C)) was performed at a charging current of 25 mA (0.5C) and a charge final voltage of 4.3 V, and constant current discharging was then performed at a discharging current of 25 mA (0.5C) and a discharge final voltage of 3 V. This operation was repeated 200 times. The cycle properties can be expressed as a ratio of the 3rd 0.5C discharge capacity and the 200th 0.5C discharge capacity at 25°C according to the following Formula 2.

$$\text{(Formula 2) Cycle properties} = 3^{rd}\ 0.5\text{C discharge capacity}/200^{th}\ 0.5\text{C discharge capacity} \times 100(\%)$$

For the cycle properties, those having cycle properties of 85% or more were evaluated as ⊙ (very good), those having cycle properties of 80% or more and less than 85% were evaluated as O (good), and those having cycle properties of less than 80% were evaluated as × (poor).

(Examples 176β, 186β and 190β-201β are not according to the present invention)

[Table 15]

| Table 9β | Non-aqueous electrolyte secondary battery | Positive electrode | Negative electrode | Rate properties | Cycle properties |
|---|---|---|---|---|---|
| Example 176β | Non-aqueous electrolyte secondary battery 1β | Standard positive electrode | Negative electrode 1β | O | O |
| Example 177β | Non-aqueous electrolyte secondary battery 2β | Standard positive electrode | Negative electrode 2β | O | ⊙ |
| Example 178β | Non-aqueous electrolyte secondary battery 3β | Standard positive electrode | Negative electrode 3β | ⊙ | O |

(continued)

| Table 9β | Non-aqueous electrolyte secondary battery | Positive electrode | Negative electrode | Rate properties | Cycle properties |
|---|---|---|---|---|---|
| Example 179β | Non-aqueous electrolyte secondary battery 4β | Standard positive electrode | Negative electrode 4β | O | O |
| Example 180β | Non-aqueous electrolyte secondary battery 5β | Standard positive electrode | Negative electrode 5β | O | ⊙ |
| Example 181β | Non-aqueous electrolyte secondary battery 6β | Standard positive electrode | Negative electrode 6β | O | ⊙ |
| Example 182β | Non-aqueous electrolyte secondary battery 7β | Standard positive electrode | Negative electrode 7β | O | O |
| Example 183β | Non-aqueous electrolyte secondary battery 8β | Standard positive electrode | Negative electrode 8β | O | O |
| Example 184β | Non-aqueous electrolyte secondary battery 9β | Standard positive electrode | Negative electrode 9β | O | O |
| Example 185β | Non-aqueous electrolyte secondary battery 10β | Standard positive electrode | Negative electrode 10β | O | O |
| Example 186β | Non-aqueous electrolyte secondary battery 11β | Standard positive electrode | Negative electrode 11β | O | O |
| Example 187β | Non-aqueous electrolyte secondary battery 12β | Standard positive electrode | Negative electrode 12β | O | O |
| Example 188β | Non-aqueous electrolyte secondary battery 13β | Standard positive electrode | Negative electrode 13β | ⊙ | O |
| Example 189β | Non-aqueous electrolyte secondary battery 14β | Standard positive electrode | Negative electrode 14β | ⊙ | ⊙ |
| Comparative Example 30β | Comparative non-aqueous electrolyte secondary battery 1β | Standard positive electrode | Comparative negative electrode 1β | × | × |
| Comparative Example 31β | Comparative non-aqueous electrolyte secondary battery 2β | Standard positive electrode | Comparative negative electrode 2β | × | × |
| Example 190β | Non-aqueous electrolyte secondary battery 15β | Positive electrode 1β | Standard negative electrode | ⊙ | ⊙ |
| Example 191β | Non-aqueous electrolyte secondary battery 16β | Positive electrode 2β | Standard negative electrode | ⊙ | ⊙ |

(continued)

| Table 9β | Non-aqueous electrolyte secondary battery | Positive electrode | Negative electrode | Rate properties | Cycle properties |
|---|---|---|---|---|---|
| Example 192β | Non-aqueous electrolyte secondary battery 17β | Positive electrode 3β | Standard negative electrode | ⊙ | ⊙ |
| Example 193β | Non-aqueous electrolyte secondary battery 18β | Positive electrode 4β | Standard negative electrode | ⊙ | ⊙ |
| Example 194β | Non-aqueous electrolyte secondary battery 19β | Positive electrode 5β | Standard negative electrode | ⊙ | ⊙ |
| Example 195β | Non-aqueous electrolyte secondary battery 20β | Positive electrode 6β | Standard negative electrode | O | ⊙ |
| Example 196β | Non-aqueous electrolyte secondary battery 21β | Positive electrode 7β | Standard negative electrode | O | O |
| Example 197β | Non-aqueous electrolyte secondary battery 22β | Positive electrode 8β | Standard negative electrode | O | ⊙ |
| Example 198β | Non-aqueous electrolyte secondary battery 23β | Positive electrode 9β | Standard negative electrode | O | O |
| Example 199β | Non-aqueous electrolyte secondary battery 24β | Positive electrode 10β | Standard negative electrode | ⊙ | ⊙ |
| Example 200β | Non-aqueous electrolyte secondary battery 25β | Positive electrode 11β | Standard negative electrode | ⊙ | ⊙ |
| Example 201β | Non-aqueous electrolyte secondary battery 26β | Positive electrode 12β | Standard negative electrode | O | ⊙ |
| Comparative Example 32β | Comparative non-aqueous electrolyte secondary battery 3β | Comparative positive electrode 1β | Standard negative electrode | × | × |
| Comparative Example 33β | Comparative non-aqueous electrolyte secondary battery 4β | Comparative positive electrode 2β | Standard negative electrode | × | × |

In the above examples using the dispersed material of the present invention, non-aqueous electrolyte secondary batteries having better cycle properties than those of comparative examples were obtained. It was thought that a non-aqueous electrolyte secondary battery having better cycle properties than those of comparative examples was obtained due to strong polarization of the acrylonitrile-derived unit and the cyclic structure. Therefore, it can be clearly understood that the present invention can provide a non-aqueous electrolyte secondary battery having cycle properties that cannot be realized with a conventional conductive material dispersed material.

[Example group γ]

The dispersant of the present invention, the molecular weight of the binder resin, and evaluation of various physical properties of the dispersed material using the dispersant of the present invention are as follows.

The measurement of the weight average molecular weight (Mw) was performed according to the same method and criteria as in Example group $\alpha$.

(Measurement of viscosity of conductive material dispersed material)

In order to measure the viscosity value, using a B type viscometer ("BL," commercially available from Toki Sangyo Co., Ltd.), at a dispersion solution temperature of 25°C, the dispersion solution was sufficiently stirred with a spatula and then immediately rotated at a B type viscometer rotor rotation speed of 60 rpm. The rotor used for measurement was a No. 1 rotor when the viscosity value was less than 100 mPa·s, a No. 2 rotor when the viscosity value was 100 mPa·s or more and less than 500 mPa·s, a No. 3 rotor when the viscosity value was 500 mPa·s or more and less than 2,000 mPa·s, and a No. 4 rotor when the viscosity value was 2,000 mPa·s or more and less than 10,000 mPa·s. When the viscosity was lower, the dispersibility was better, and when the viscosity was higher, the dispersibility was poorer. If the obtained dispersed material was clearly separated or precipitated, it was regarded as having poor dispersibility.

Determination criteria

> O: less than 500 mPa·s (very good)
> O: 500 mPa·s or more and less than 2,000 mPa·s (good)
> △: 2,000 mPa·s or more and less than 10,000 mPa·s (fair)
> ×: 10,000 mPa·s or more, precipitated or separated (poor)

(Method of evaluating stability of dispersed material)

The storage stability was evaluated based on the change in liquid properties after the dispersed material was left and stored at 50°C for 7 days. The change in liquid properties was determined based on the ease of stirring when stirring was performed with a spatula, ⊙: no problem (good), O: the viscosity increased but the material did not gel (fair), and ×: gelled (very poor).

(Method of evaluating electrical conductivity of electrode film using negative electrode mixture slurry)

The negative electrode mixture slurry was applied to a copper foil using an applicator so that the basis weight per unit of the electrode was 10 mg/cm$^2$ and the coating film was then dried in an electric oven at 120°C±5°C for 25 minutes. Then, the surface resistivity ($\Omega/\square$) of the dried coating film was measured using Loresta GP, MCP-T610 (commercially available from Mitsubishi Chemical Analytech Co., Ltd.). After the measurement, the volume resistivity ($\Omega$-cm) of an electrode film for a negative electrode was obtained by multiplying the thickness of the electrode mixture layer formed on the copper foil. The thickness of the electrode mixture layer was obtained by subtracting the film thickness of the copper foil from the average value measured at 3 points in the electrode film using a film thickness meter (DIGIMICRO MH-15M, commercially available from NIKON) to obtain a volume resistivity ($\Omega$-cm) of the electrode film. The electrical conductivity of the electrode film was evaluated as ⊙ (very good) when the volume resistivity ($\Omega$-cm) of the electrode film was less than 0.3, O (good) when the volume resistivity ($\Omega$-cm) was 0.3 or more and less than 0.5, and × (poor) when the volume resistivity ($\Omega$-cm) was 0.5 or more.

<Method of evaluating adhesiveness of electrode film using negative electrode mixture slurry>

The negative electrode mixture slurry was applied to a copper foil using an applicator so that the basis weight per unit of the electrode was 10 mg/cm$^2$ and the coating film was then dried in an electric oven at 120°C±5°C for 25 minutes. Then, the film was cut into two 90 mm×20 mm rectangles with the coating direction as the major axis. The peeling strength was measured using a desktop tensile tester (Strograph E3, commercially available from Toyo Seiki Co., Ltd.), and evaluated according to the 180 degree peeling test method. Specifically, a double-sided tape with a size of 100 mm×30 mm (No. 5000NS, commercially available from Nitoms Inc.) was attached to a stainless steel plate, the produced battery electrode mixture layer was brought into close contact with the other surface of the double-sided tape, peeling off was performed while pulling from the bottom to the top at a certain speed (50 mm/min), and the average value of stress at this time was used as the peeling strength. The adhesiveness (N/cm) of the electrode film was evaluated as ⊙ (very good) for 0.5 or more, O (good) for 0.1 or more and less than 0.5, and × (poor) for less than 0.1.

(Method of evaluating electrical conductivity of electrode film using positive electrode mixture slurry)

The positive electrode mixture slurry was applied to an aluminum foil using an applicator so that the basis weight per unit of the electrode was 20 mg/cm$^2$ and the coating film was then dried in an electric oven at 120°C±5°C for 25 minutes. Then, the surface resistivity ($\Omega/\square$) of the dried coating film was measured using Loresta GP, MCP-T610 (commercially available from Mitsubishi Chemical Analytech Co., Ltd.). After the measurement, the volume resistivity ($\Omega$-cm) of an electrode film for a positive electrode was obtained by multiplying the thickness of the electrode mixture layer formed on the aluminum foil. For the thickness of the electrode mixture layer, using a film thickness meter (DIGIMICRO MH-15M, commercially available from NIKON), the film thickness of the aluminum foil was subtracted from the average value measured at 3 points in the electrode film to obtain a volume resistivity ($\Omega$-cm) of the electrode film. The electrical conductivity of the electrode film was evaluated as ⊙ (very good) when the volume resistivity ($\Omega$-cm) of the electrode film was less than 10, O (good) when the volume resistivity ($\Omega$-cm) was 10 or more and less than 20, and × (poor) when the volume resistivity ($\Omega$-cm) was 20 or more.

(Method of evaluating adhesiveness of electrode film using positive electrode mixture slurry)

The positive electrode mixture slurry was applied to an aluminum foil using an applicator so that the basis weight per unit of the electrode was 20 mg/cm$^2$ and the coating film was then dried in an electric oven at 120°C±5°C for 25 minutes. Then, the film was cut into two 90 mm×20 mm rectangles with the coating direction as the major axis. The peeling strength was measured using a desktop tensile tester (Strograph E3, commercially available from Toyo Seiki Co., Ltd.), and evaluated according to the 180 degree peeling test method. Specifically, a double-sided tape with a size of 100 mm×30 mm (No. 5000NS, commercially available from Nitoms Inc.) was attached to a stainless steel plate, and the produced battery electrode mixture layer was brought into close contact with the other surface of the double-sided tape, peeling off was performed while pulling from the bottom to the top at a certain speed (50 mm/min), and the average value of stress at this time was used as the peeling strength. The adhesiveness (N/cm) of the electrode film was evaluated as ⊙ (very good) for 1 or more, O (good) for 0.5 or more and less than 1, and × (poor) for less than 0.5.

(Method of evaluating rate properties of non-aqueous electrolyte secondary battery)

The non-aqueous electrolyte secondary battery was installed in a thermostatic chamber at 25°C and charging and discharging measurement was performed using a charging and discharging device (SM-8 commercially available from Hokuto Denko Corporation). Constant current and constant voltage charging (a cut-off current of 1 mA (0.02C)) was performed at a charging current of 10 mA (0.2C) and a charge final voltage of 4.3 V, and constant current discharging was then performed at a discharging current of 10 mA (0.2C) and a discharge final voltage of 3 V. This operation was repeated three times and constant current and constant voltage charging (a cut-off current 1 mA (0.02C)) was then performed at a charging current of 10 mA (0.2C) and a charge final voltage of 4.3 V, constant current discharging was performed at a discharging current of 0.2C and 3C until the discharge final voltage reached 3.0 V, and each discharge capacity was determined. The rate properties can be expressed as a ratio of the 0.2C discharge capacity and the 3C discharge capacity according to the following Formula 1.

Rate properties = 3C discharge capacity / 3$^{rd}$ 0.2C discharge capacity × 100 (%)          (Formula 1)

For the rate properties, those having rate properties of 80% or more were evaluated as ⊙ (very good), those having rate properties of 60% or more and less than 80% were evaluated as O (good), and those having rate properties of less than 60% were evaluated as × (poor).

(Method of evaluating cycle properties of non-aqueous electrolyte secondary battery)

The non-aqueous electrolyte secondary battery was installed in a thermostatic chamber at 25°C and charging and discharging measurement was performed using a charging and discharging device (SM-8 commercially available from Hokuto Denko Corporation). Constant current and constant voltage charging (a cut-off current of 2.5 mA (0.05C)) was performed at a charging current of 25 mA (0.5C) and a charge final voltage of 4.3 V, and constant current discharging was then performed at a discharging current of 25 mA (0.5C) and a discharge final voltage of 3 V. This operation was repeated 200 times. The cycle properties can be expressed as a ratio of the 3rd 0.5C discharge capacity and the 200th 0.5C discharge capacity at 25°C according to the following Formula 2.

Cycle properties = 3$^{rd}$ 0.5C discharge capacity / 200$^{th}$ 0.5C discharge capacity × 100(%)          (Formula 2)

For the cycle properties, those having cycle properties of 85% or more were evaluated as ⊙ (very good), those having cycle properties of 80% or more and less than 85% were evaluated as O (good), and those having cycle properties of less than 80% were evaluated as - (poor).

(Production Example 1γ) Production of dispersant (A-1γ)

100 parts of acetonitrile was put into a reaction container including a gas inlet pipe, a thermometer, a condenser, and a stirrer, and the inside was purged with nitrogen gas. The inside of the reaction container was heated to 70°C, and a mixture containing 50.0 parts of acrylonitrile, 25.0 parts of acrylic acid, 25.0 parts of styrene and 5.0 parts of 2,2'-azobis(2,4-dimethylvaleronitrile) (V-65, commercially available from NOF Corporation) was added dropwise over 3 hours, and a polymerization reaction was performed. After dropwise addition was completed, the reaction was additionally performed at 70°C for 1 hour, and 0.5 parts of V-65 was then added, and the reaction was additionally continued at 70°C for 1 hour. Then, the non-volatile content was measured, and it was confirmed that the conversion ratio exceeded 98%, and the dispersion medium was completely removed by concentration under a reduced pressure to obtain a dispersant (A-1γ). The weight average molecular weight (Mw) of the dispersant (A-1γ) was 15,000.

(Production Examples 2γ to 10γ) Production of dispersants (A-2γ) to (A-10γ)

Dispersants (A-2γ) to (A-10γ) were produced in the same manner as in Production Example 1γ except that monomers used were changed according to Table 1γ. The weight average molecular weights (Mw) of the dispersants were as shown in Table 1y.

[Table 16]

| Table 1γ | | A-1γ | A-2γ | A-3γ | A-4γ | A-5γ | A-6γ | A-7γ | A-8γ | A-9γ | A-10γ |
|---|---|---|---|---|---|---|---|---|---|---|---|
| Acrylonitrile | | 50 | 75 | 90 | 90 | 90 | 90 | 90 | 90 | 80 | 80 |
| Active hydrogen group-containing monomer | AA | 25 | 25 | 10 | 10 | 10 | | | | | |
| | HEA | | | | | | 10 | | | | |
| Basic monomer | DMAEA | | | | | | | 10 | | | |
| | Vinyl imidazole | | | | | | | | 10 | | |
| (meth)acrylic acid alkyl ester | BA | | | | | | | | | | |
| | 2EHA | | | | | | | | | 20 | |
| Other monomers | Styrene | 25 | | | | | | | | | |
| Weight average molecular weight | | 15000 | 15000 | 15000 | 6000 | 45000 | 15000 | 15000 | 15000 | 15000 | 15000 |

AA: acrylic acid
HEA: hydroxyethyl acrylate
DMAEA: dimethylaminoethyl acrylate
BA: butyl acrylate
2EHA: 2-ethylhexyl acrylate

(Production Example 11γ) Production of dispersant (A-11γ)

50 parts of the dispersant (A-3y) obtained in Production Example 3γ was added to 198 parts of purified water, and the mixture was stirred with a disper to prepare a slurry. Next, 2.0 parts of a 1 N sodium hydroxide aqueous solution was added dropwise at 25°C, and the mixture was stirred with a disper for 2 hours while heating in a water bath. In IR measurement (device: FT/IR-410, commercially available from JASCO Corporation), it was confirmed that the intensity of the peak derived from the cyano group was reduced to 80% or less and it was confirmed that the cyclic structure was formed. Next, washing with purified water was performed, and filtering and drying were performed to obtain a dispersant (A-11γ) having a hydrogenated naphthyridine ring and a glutarimide ring. Here, the weight average molecular weight (Mw) was 14,000.

(Production Example 12y) Production of dispersant (A-12y)

A dispersant (A-12γ) having a hydrogenated naphthyridine ring was obtained in the same manner as in Production Example 11γ except that the dispersant used was changed from (A-3y) to (A-6y). Here, the weight average molecular weight (Mw) was 14,000.

(Production Example 13y) Production of standard positive electrode mixture slurry

93 parts by mass of the positive electrode active material (RED (registered trademark) NCM-111 1100, commercially available from BASF TODA Battery Materials LLC), 4 parts by mass of acetylene black (Denka Black (registered trademark) HS100, commercially available from Denka Co., Ltd.), and 3 parts by mass of PVDF (Kureha KF polymer W#1300, commercially available from Kureha Battery Materials Japan Co., Ltd.) were put into a plastic container having a volume of 150 $cm^3$ and then mixed with a spatula until powder was uniform. Then, 20.5 parts by mass of NMP was added thereto and the mixture was stirred at 2,000 rpm for 30 seconds using a rotation/revolution mixer (Awatori Rentaro, ARE-310, commercially available from Thinky Corporation). Then, the mixture in the plastic container was mixed with a spatula until it was uniform, and stirred at 2,000 rpm for 30 seconds using the rotation/revolution mixer. In addition, 14.6 parts by mass of NMP was then added thereto, and the mixture was stirred at 2,000 rpm for 30 seconds using the rotation/revolution mixer. Finally, the sample was stirred at 3,000 rpm for 10 minutes using a high-speed stirrer to obtain a standard positive electrode mixture slurry.

(Production Example 14y) Production of standard positive electrode

The above standard positive electrode mixture slurry was applied to an aluminum foil having a thickness of 20 $\mu$m as a current collector using an applicator and then dried in an electric oven at 120°C$\pm$5°C for 25 minutes and the basis weight per unit area of the electrode was adjusted to 20 mg/$cm^2$. In addition, the sample was rolled by a roll press (3t hydraulic roll press, commercially available from Thank Metal Co., Ltd.) to produce a positive electrode having a mixture layer density of 3.1 g/$cm^3$.

<Production of conductive material dispersed material>

(Examples 1γ to 23γ and Comparative Examples 1γ to 5y)

According to the compositions and dispersion times shown in Table 2y, a dispersant, an additive, and a dispersion medium were put into a glass bottle (M-225, commercially available from Hakuyo Glass Co., Ltd.) and sufficiently mixed and dissolved, or mixed and an conductive material was then added thereto, and the mixture was dispersed with a paint conditioner using zirconia beads (with a bead diameter of 0.5 mm<p) as media to obtain conductive material dispersed materials (dispersed material 1γ to dispersed material 23y, and comparative dispersed materials 1γ to 5y). As shown in Table 2y, the conductive material dispersed materials (dispersed material 1γ to dispersed material 23γ) of the present invention all had low viscosity and good storage stability.

(Examples 1γ, 11γ, 19γ, 20γ, 22γ and 23γ are not according to the present invention)

[Table 17]

| Table 2γ | Conductive material dispersed material | Conductive material | | Dispersant | | Additive | | Dispersion medium | | Filler concentration | Amount of dispersant (vs. filler) | Amount of additive (vs. dispersant) | Dispersion time (min) | Initial viscosity | Viscosity over time |
|---|---|---|---|---|---|---|---|---|---|---|---|---|---|---|---|
| | | Type | Parts | Type | Parts | Type | Parts | Type | Parts | | | | | | |
| Example 1γ | Dispersed material 1γ | 8S | 1 | A-1γ | 0.3 | NaOH | 0.06 | Water | 98.64 | 1% | 30% | 20% | 480 | O | O |
| Example 2γ | Dispersed material 2γ | 8S | 1 | A-2γ | 0.3 | NaOH | 0.06 | Water | 98.6 | 1% | 30% | 20% | 480 | O | O |
| Example 3γ | Dispersed material 3γ | 8S | 1 | A-3γ | 0.3 | NaOH | 0.06 | Water | 98.6 | 1% | 30% | 20% | 480 | ⊙ | ⊙ |
| Example 4γ | Dispersed material 4γ | 8S | 1 | A-4γ | 0.3 | NaOH | 0.06 | Water | 98.6 | 1% | 30% | 20% | 480 | O | O |
| Example 5γ | Dispersed material 5γ | 8S | 1 | A-5γ | 0.3 | NaOH | 0.06 | Water | 98.6 | 1% | 30% | 20% | 480 | O | O |
| Example 6γ | Dispersed material 6γ | 8S | 1 | A-6γ | 0.3 | NaOH | 0.06 | Water | 98.6 | 1% | 30% | 20% | 480 | O | O |
| Example 7γ | Dispersed material 7γ | 8S | 1 | A-7γ | 0.3 | NaOH | 0.06 | Water | 98.6 | 1% | 30% | 20% | 480 | O | O |
| Example 8γ | Dispersed material 8γ | 8S | 1 | A-8γ | 0.3 | NaOH | 0.06 | Water | 98.6 | 1% | 30% | 20% | 480 | O | O |
| Example 9γ | Dispersed material 9γ | 8S | 1 | A-9γ | 0.3 | NaOH | 0.06 | Water | 98.6 | 1% | 30% | 20% | 480 | O | O |
| Example 10γ | Dispersed material 10γ | 8S | 1 | A-γ | 0.3 | NaOH | 0.06 | Water | 98.6 | 1% | 30% | 20% | 480 | O | O |
| Example 11γ | Dispersed material 11γ | 8S | 1 | A-3γ | 0.75 | - | 0 | Water | 99.3 | 1% | 30% | 20% | 480 | O | O |
| Example 12γ | Dispersed material 12γ | HS-100 | 15 | A-3γ | 0.75 | NaOH | 0.15 | Water | 84.1 | 15% | 5% | 20% | 60 | ⊙ | ⊙ |
| Example 13γ | Dispersed material 13γ | EC-300J | 10 | A-3γ | 1.5 | NaOH | 0.30 | Water | 88.2 | 10% | 15% | 20% | 240 | ⊙ | ⊙ |

EP 3 950 108 B1

67

| Table 2γ | Conductive material dispersed material | Conductive material | | Dispersant | | Additive | | Dispersion medium | | Filler concentration | Amount of dispersant (vs. filler) | Amount of additive (vs. dispersant) | Dispersion time (min) | Initial viscosity | Viscosity over time |
|---|---|---|---|---|---|---|---|---|---|---|---|---|---|---|---|
| | | Type | Parts | Type | Parts | Type | Parts | Type | Parts | | | | | | |
| Example 14γ | Dispersed material 14γ | 100T | 3 | A-3γ | 0.45 | NaOH | 0.09 | Water | 96.5 | 3% | 15% | 20% | 240 | ⊙ | ⊙ |
| Example 15γ | Dispersed material 15γ | NTP3121 | 3 | A-3γ | 0.45 | NaOH | 0.09 | Water | 96.5 | 3% | 15% | 20% | 240 | ⊙ | ⊙ |
| Example 16γ | Dispersed material 16γ | 8S | 1 | A-3γ | 0.3 | $Na_2CO_3$ | 0.06 | Water | 98.6 | 1% | 30% | 20% | 480 | ⊙ | ⊙ |
| Example 17γ | Dispersed material 17γ | 8S | 1 | A-3γ | 0.3 | LiOH | 0.06 | Water | 98.6 | 1% | 30% | 20% | 480 | ⊙ | O |
| Example 18γ | Dispersed material 18γ | 8S | 1 | A-3γ | 0.3 | DMAE | 0.06 | Water | 98.6 | 1% | 30% | 20% | 480 | O | O |
| Example 19γ | Dispersed material 19γ | HS100 | 15 | A-6γ | 0.75 | NaOH | 0.15 | NMP | 84.1 | 15% | 5% | 20% | 60 | ⊙ | ⊙ |
| Example 20γ | Dispersed material 20γ | 8S | 1 | A-6γ | 0.3 | NaOH | 0.06 | NMP | 98.6 | 1% | 30% | 20% | 360 | ⊙ | ⊙ |
| Comparative Example 1γ | Comparative dispersed material 1γ | 8S | 1 | PVP | 0.3 | NaOH | 0.06 | Water | 98.6 | 1% | 30% | 20% | 480 | × | × |
| Comparative Example 2γ | Comparative dispersed material 2γ | 8S | 1 | PVP | 0.3 | NaOH | 0.06 | NMP | 98.6 | 1% | 30% | 20% | 480 | × | × |
| Comparative Example 3γ | Comparative dispersed material 3γ | 8S | 1 | PVP | 0.3 | NaOH | 0.06 | Water | 98.6 | 1% | 30% | 20% | 600 | × | × |
| Comparative Example 4γ | Comparative dispersed material 4γ | 8S | 1 | PVA | 0.3 | NaOH | 0.06 | Water | 98.6 | 1% | 30% | 20% | 480 | × | × |

68

EP 3 950 108 B1

(continued)

| Table 2γ | Conductive material dispersed material | Conductive material | | Dispersant | | Additive | | Dispersion medium | | Filler concentration | Amount of dispersant (vs. filler) | Amount of additive (vs. dispersant) | Dispersion time (min) | Initial viscosity | Viscosity over time |
|---|---|---|---|---|---|---|---|---|---|---|---|---|---|---|---|
| | | Type | Parts | Type | Parts | Type | Parts | Type | Parts | | | | | | |
| Comparative Example 5γ | Comparative dispersed material 5γ | 8S | 1 | PVB | 0.3 | NaOH | 0.06 | Water | 98.6 | 1% | 30% | 20% | 480 | × | × |
| Example 21γ | Dispersed material 21γ | 8S | 1 | A-11γ | 0.3 | NaOH | 0.06 | Water | 98.6 | 1% | 30% | 20% | 480 | ⊙ | ⊙ |
| Example 22γ | Dispersed material 22γ | 8S | 1 | A-11γ | 0.3 | - | 0 | Water | 98.70 | 1% | 30% | 0% | 480 | ⊙ | ⊙ |
| Example 23γ | Dispersed material 23γ | 8S | 1 | A-12γ | 0.3 | - | 0 | NMP | 98.70 | 1% | 30% | 0% | 360 | ⊙ | ⊙ |

·HS-100: Denka Black HS-100 (acetylene black, an average primary particle size of 48 nm, a specific surface area of 39 $m^2$/g, commercially available from Denka Co., Ltd.)
·EC-300J: ketjen black EC-300J (ketjen black, an average primary particle size of 40 nm, a specific surface area of 800 $m^2$/g, commercially available from Lion Specialty Chemicals Co., Ltd.)
·8S: JENOTUBE8S (multi-walled CNT, an outer diameter of 6 to 9 nm, commercially available from JEIO)
·100T: K-Nanos 100T (multi-walled CNT, an outer diameter of 10 to 15 nm, commercially available from Kumho Petrochemical)
·NTP3121: NTP3121 (multi-walled CNT, an outer diameter of 20 to 35 nm, commercially available from NTP)
·PVP: polyvinylpyrrolidone K-30 (a non-volatile content of 100%, commercially available from Nippon Shokubai Co., Ltd.)
·PVA: Kuraray POVAL PVA403 (a non-volatile content of 100%, commercially available from Kuraray Co., Ltd.)
·PVB: S-LEC BL-10 (a non-volatile content of 100%, commercially available from Sekisui Chemical Co., Ltd.)
·DMAE: 2-(dimethylamino)ethanol, commercially available from Tokyo Chemical Industry Co., Ltd.
·NMP: N-methylpyrrolidone

<Production of negative electrode mixture slurry>

(Example 24y)

The conductive material dispersed material (dispersed material 1γ), CMC, and water were put into a plastic container having a volume of 150 $cm^3$ and the mixture was then stirred at 2,000 rpm for 30 seconds using a rotation/revolution mixer (Awatori Rentaro, ARE-310, commercially available from Thinky Corporation) to obtain a conductivity-containing resin composition 1. Then, an active material was added thereto, and the mixture was stirred at 2,000 rpm for 150 seconds using the rotation/revolution mixer. In addition, SBR was then added thereto, and the mixture was stirred at 2,000 rpm for 30 seconds using the rotation/revolution mixer to obtain a negative electrode mixture slurry 1. The non-volatile content of the negative electrode mixture slurry 1γ was 48% by mass. The non-volatile content ratio of the active material: conductive material:CMC:SBR in the negative electrode mixture slurry was 97:0.5:1:1.5.

(Examples 25y to 43γ and Comparative Examples 6γ to 9γ)

Conductive material-containing resin compositions 2γ to 18γ, 21γ, and 22γ, comparative conductive material-containing resin compositions 1γ, 3γ to 5y, negative electrode mixture slurries 2γ to 18γ, 21γ, and 22γ and negative electrode comparative mixture slurries 1γ, and 3γ to 5γ were obtained in the same method as in Example 24y except that the type of the conductive material dispersed material was changed. As shown in Table 3γ, the electrode films using the conductive material dispersed material of the present invention all had good electrical conductivity and adhesiveness.

(Examples 24γ, 34γ and 43γ are not according to the present invention)

[Table 18]

| Table 3γ | Mixture slurry | Conductive material-containing resin composition | Dispersed material | Active material | | Conductive material | | CMC | | SBR | | Dispersion medium | Evaluation of electrical conductivity of electrode film | Evaluation of adhesiveness of electrode film |
|---|---|---|---|---|---|---|---|---|---|---|---|---|---|---|
| | | | | Type | Non-volatile content (parts) | Type | Non-volatile content (parts) | Type | Non-volatile content (parts) | Type | Non-volatile content (parts) | Type | | |
| Example 24γ | Negative electrode mixture slurry 1γ | Conductive material-containing resin composition 1γ | Dispersed material 1γ | Artificial graphite | 97 | 8S | 0.5 | #1190 | 1 | TRD2001 | 1.5 | Water | O | O |
| Example 25γ | Negative electrode mixture slurry 2γ | Conductive material-containing resin composition 2γ | Dispersed material 2γ | Artificial graphite | 97 | 8S | 0.5 | #1190 | 1 | TRD2001 | 1.5 | Water | O | ⊙ |
| Example 26γ | Negative electrode mixture slurry 3γ | Conductive material-containing resin composition 3γ | Dispersed material 3γ | Artificial graphite | 97 | 8S | 0.5 | #1190 | 1 | TRD2001 | 1.5 | Water | ⊙ | ⊙ |
| Example 27γ | Negative electrode mixture slurry 4γ | Conductive material-containing resin composition 4γ | Dispersed material 4γ | Artificial graphite | 97 | 8S | 0.5 | #1190 | 1 | TRD2001 | 1.5 | Water | O | O |

EP 3 950 108 B1

| Table 3γ | Mixture slurry | Conductive material-containing resin composition | Dispersed material | Active material | | Conductive material | | CMC | | SBR | | Dispersion medium | Evaluation of electrical conductivity of electrode film | Evaluation of adhesiveness of electrode film |
|---|---|---|---|---|---|---|---|---|---|---|---|---|---|---|
| | | | | Type | Non-volatile content (parts) | Type | Non-volatile content (parts) | Type | Non-volatile content (parts) | Type | Non-volatile content (parts) | Type | | |
| Example 28γ | Negative electrode mixture slurry 5γ | Conductive material-containing resin composition 5γ | Dispersed material 5γ | Artificial graphite | 97 | 8S | 0.5 | #1190 | 1 | TRD2001 | 1.5 | Water | O | ⊙ |
| Example 29γ | Negative electrode mixture slurry 6γ | Conductive material-containing resin composition 6γ | Dispersed material 6γ | Artificial graphite | 97 | 8S | 0.5 | #1190 | 1 | TRD2001 | 1.5 | Water | O | ⊙ |
| Example 30γ | Negative electrode mixture slurry 7γ | Conductive material-containing resin composition 7γ | Dispersed material 7γ | Artificial graphite | 97 | 8S | 0.5 | #1190 | 1 | TRD2001 | 1.5 | Water | O | O |
| Example 31γ | Negative electrode mixture sluny 8γ | Conductive material-containing resin composition 8γ | Dispersed material 8γ | Artificial graphite | 97 | 8S | 0.5 | #1190 | 1 | TRD2001 | 1.5 | Water | O | O |

72

EP 3 950 108 B1

(continued)

| Table 3γ | Mixture slurry | Conductive material-containing resin composition | Dispersed material | Active material | | Conductive material | | CMC | | SBR | | Dispersion medium | Evaluation of electrical conductivity of electrode film | Evaluation of adhesiveness of electrode film |
|---|---|---|---|---|---|---|---|---|---|---|---|---|---|---|
| | | | | Type | Non-volatile content (parts) | Type | Non-volatile content (parts) | Type | Non-volatile content (parts) | Type | Non-volatile content (parts) | Type | | |
| Example 32γ | Negative electrode mixture slurry 9γ | Conductive material-containing resin composition 9γ | Dispersed material 9γ | Artificial graphite | 97 | 8S | 0.5 | #1190 | 1 | TRD2001 | 1.5 | Water | O | O |
| Example 33γ | Negative electrode mixture slurry 10γ | Conductive material-containing resin composition 10γ | Dispersed material 10γ | Artificial graphite | 97 | 8S | 0.5 | # 1190 | 1 | TRD2001 | 1.5 | Water | O | O |
| Example 34γ | Negative electrode mixture slurry 11γ | Conductive material-containing resin composition 11γ | Dispersed material 11γ | Artificial graphite | 97 | 8S | 0.5 | #1190 | 1 | TRD2001 | 1.5 | Water | O | O |
| Example 35γ | Negative electrode mixture slurry 12γ | Conductive material-containing resin composition 12γ | Dispersed material 12γ | Artificial graphite | 97 | HS100 | 0.5 | # 119() | 1 | TRD2001 | 1.5 | Water | O | O |

EP 3 950 108 B1

73

| Table 3γ | Mixture slurry | Conductive material-containing resin composition | Dispersed material | Active material | | Conductive material | | CMC | | SBR | | Dispersion medium | Evaluation of electrical conductivity of electrode film | Evaluation of adhesiveness of electrode film |
|---|---|---|---|---|---|---|---|---|---|---|---|---|---|---|
| | | | | Type | Non-volatile content (parts) | Type | Non-volatile content (parts) | Type | Non-volatile content (parts) | Type | Non-volatile content (parts) | Type | | |
| Example 36γ | Negative electrode mixture slurry 13γ | Conductive material-containing resin composition 13γ | Dispersed material 13γ | Artificial graphite | 97 | EC-300J | 0.5 | #1190 | 1 | TRD2001 | 1.5 | Water | ⊙ | O |
| Example 37γ | Negative electrode mixture slurry 14γ | Conductive material-containing resin composition 14γ | Dispersed material 14γ | Artificial graphite | 97 | 100T | 0.5 | #1190 | 1 | TRD2001 | 1.5 | Water | ⊙ | ⊙ |
| Example 38γ | Negative electrode mixture slurry 15γ | Conductive material-containing resin composition 15γ | Dispersed material 15γ | Artificial graphite | 97 | NTP 3121 | 0.5 | #1190 | 1 | TRD2001 | 1.5 | Water | O | ⊙ |
| Example 39γ | Negative electrode mixture slurry 16γ | Conductive material-containing resin composition 16γ | Dispersed material 16γ | Artificial graphite | 97 | 8S | 0.5 | #1190 | 1 | TRD2001 | 1.5 | Water | ⊙ | ⊙ |

| Table 3γ | Mixture slurry | Conductive material-containing resin composition | Dispersed material | Active material | | Conductive material | | CMC | | SBR | | Dispersion medium | Evaluation of electrical conductivity of electrode film | Evaluation of adhesiveness of electrode film |
|---|---|---|---|---|---|---|---|---|---|---|---|---|---|---|
| | | | | Type | Non-volatile content (parts) | Type | Non-volatile content (parts) | Type | Non-volatile content (parts) | Type | Non-volatile content (parts) | Type | | |
| Example 40γ | Negative electrode mixture slurry 17γ | Conductive material-containing resin composition 17γ | Dispersed material 17γ | Artificial graphite | 97 | 8S | 0.5 | #1190 | 1 | TRD2001 | 1.5 | Water | ⊙ | O |
| Example 41γ | Negative electrode mixture slurry 18γ | Conductive material-containing resin composition 18γ | Dispersed material 18γ | Artificial graphite | 97 | 8S | 0.5 | #1190 | 1 | TRD2001 | 1.5 | Water | ⊙ | O |
| Comparative Example 6γ | Negative electrode comparative mixture slurry 1γ | Comparative conductive material-containing resin composition 1γ | Comparative dispersed material 1γ | Artificial graphite | 97 | 8S | 0.5 | #1190 | 1 | TRD2001 | 1.5 | Water | × | × |
| Comparative Example 7γ | Negative electrode comparative mixture slurry 3γ | Comparative conductive material-containing resin composition 3γ | Comparative dispersed material 3γ | Artificial graphite | 97 | 8S | 0.5 | #1190 | 1 | TRD2001 | 1.5 | Water | O | × |

EP 3 950 108 B1

| Table 3γ | Mixture slurry | Conductive material-containing resin composition | Dispersed material | Active material | | Conductive material | | CMC | | SBR | | Dispersion medium | Evaluation of electrical conductivity of electrode film | Evaluation of adhesiveness of electrode film |
|---|---|---|---|---|---|---|---|---|---|---|---|---|---|---|
| | | | | Type | Non-volatile content (parts) | Type | Non-volatile content (parts) | Type | Non-volatile content (parts) | Type | Non-volatile content (parts) | Type | | |
| Comparative Example 8γ | Negative electrode comparative mixture slimy 4γ | Comparative conductive material-containing resin composition 4γ | Comparative dispersed material 4γ | Artificial graphite | 97 | 8S | 0.5 | #1190 | 1 | TRD2001 | 1.5 | Water | × | × |
| Comparative Example 9γ | Negative electrode comparative mixture slurry 5γ | Comparative conductive material-containing resin composition 5γ | Comparative dispersed material 5γ | Artificial graphite | 97 | 8S | 0.5 | #1190 | 1 | TRD2001 | 1.5 | Water | O | × |
| Example 42γ | Negative electrode mixture slurry 2 1γ | Conductive material-containing resin composition 21γ | Dispersed material 21γ | Artificial graphite | 97 | 8S | 0.5 | #1190 | 1 | TRD2001 | 1.5 | Water | ⊙ | ⊙ |
| Example 43γ | Negative electrode mixture slurry 22γ | Conductive material-containing resin composition 22γ | Dispersed material 22γ | Artificial graphite | 97 | 8S | 0.5 | #1190 | 1 | TRD2001 | 1.5 | Water | ⊙ | ⊙ |

EP 3 950 108 B1

76

· Artificial graphite: CGB-20 (commercially available from Nippon Graphite Industries, Co., Ltd.), a non-volatile content of 100%
· CMC: #1190 (commercially available from Daicel FineChem Co., Ltd.), a non-volatile content of 100%
· SBR: TRD2001 (commercially available from JSR), a non-volatile content of 48%

<Production of positive electrode mixture slurry>

(Example 44y)

The conductive material dispersed material (dispersed material 19$\gamma$) and NMP in which 8% by mass PVDF was dissolved were put into a plastic container having a volume of 150 cm$^3$ and then stirred at 2,000 rpm for 30 seconds using a rotation/revolution mixer (Awatori Rentaro, ARE-310, commercially available from Thinky Corporation) to obtain a conductive material-containing resin composition 19$\gamma$. Then, an active material was added thereto, and the mixture was stirred at 2,000 rpm for 150 seconds using the rotation/revolution mixer. In addition, NMP was then added thereto, and the mixture was stirred at 2,000 rpm for 30 seconds using the rotation/revolution mixer to obtain a positive electrode mixture slurry 19$\gamma$. The non-volatile content of the positive electrode mixture slurry 19$\gamma$ was 75% by mass. The non-volatile content ratio of the active material: conductive material: PVDF in the positive electrode mixture slurry was 98.5: 0.5:1.

(Examples 45y to 46y and Comparative Example 10y)

Conductive material-containing resin compositions 20$\gamma$ and 23y, a comparative conductive material-containing resin composition 2y, positive electrode mixture slurries 20$\gamma$ and 23$\gamma$ and a positive electrode comparative mixture slurry 2$\gamma$ were obtained in the same method as in Example 44y except that the type of the conductive material dispersed material was changed. As shown in Table 4y, the electrode films using the conductive material dispersed material of the present invention all had good electrical conductivity and adhesiveness.

(Examples 44$\gamma$-46$\gamma$ are not according to the present invention)

[Table 19]

| Table 4γ | Mixture slurry | Conductive material-containing resin composition | Dispersed material | Active material | | Conductive material | | Binder | | Dispersion medium | Evaluation of electrical conductivity of electrode film | Evaluation of adhesiveness of electrode film |
|---|---|---|---|---|---|---|---|---|---|---|---|---|
| | | | | Type | Non-volatile content (parts) | Type | Non-volatile content (parts) | Type | Non-volatile content (parts) | Type | | |
| Example 44γ | Positive electrode mixture slurry 19γ | Conductive material-containing resin composition 19γ | Dispersed material 19γ | NMC | 98.5 | 8S | 0.5 | PDPF | 1 | NMP | O | ⊙ |
| Example 45γ | Positive electrode mixture slurry 20γ | Conductive material-containing resin composition 20γ | Dispersed material 20γ | NMC | 98.5 | 8S | 0.5 | PDPF | 1 | NMP | ⊙ | ⊙ |
| Comparative Example 10γ | Positive electrode comparative mixture slimy 2γ | Comparative conductive material-containing resin composition 2γ | Comparative dispersed material 2γ | NMC | 98.5 | 8S | 0.5 | PDPF | 1 | NMP | × | × |
| Example 46γ | Positive electrode mixture slurry 23γ | Conductive material-containing resin composition 23γ | Dispersed material 23γ | NMC | 98.5 | 8S | 0.5 | PDPF | 1 | NMP | ⊙ | ⊙ |

EP 3 950 108 B1

·NMC (nickel manganese lithium cobalt oxide): HED (registered trademark) NCM-111 1100 (commercially available from BASF TODA Battery Materials LLC), a non-volatile content of 100%
·PVDF: Solef#5130 (commercially available from Solvey), a non-volatile content of 100%

<Production of electrode film>

(Examples 47γ to 69y and Comparative Examples 11γ to 15γ)

The mixture slurry shown in Table 5γ was applied to a metal foil using an applicator and the coating film was then dried in an electric oven at 120°C±5°C for 25 minutes to produce an electrode film. Then, the electrode film was rolled by a roll press (3t hydraulic roll press, commercially available from Thank Metal Co., Ltd.). When the positive electrode mixture slurry was applied, an aluminum foil was used as the metal foil, application was performed so that the basis weight per unit of the electrode was 20 mg/cm$^2$, and rolling was performed so that the density of the dried electrode film was 3.1 g/cc. When the negative electrode mixture slurry was applied, a copper foil was used as the metal foil, application was performed so that the basis weight per unit of the electrode was 10 mg/cm$^2$, and rolling was performed so that the density of the dried electrode film was 1.6 g/cc.

(Examples 47y, 57y, 65y, 66y, 68y and 69y are not according to the present invention)

[Table 20]

| Table 5γ | Electrode film | Mixture slurry | Electrode density (g/cc) | Basis weight (mg/cm$^2$) |
|---|---|---|---|---|
| Example 47γ | Negative electrode 1γ | Negative electrode mixture slurry 1γ | 1.6 | 10 |
| Example 48γ | Negative electrode 2γ | Negative electrode mixture slurry 2γ | 1.6 | 10 |
| Example 49γ | Negative electrode 3γ | Negative electrode mixture slurry 3γ | 1.6 | 10 |
| Example 50γ | Negative electrode 4γ | Negative electrode mixture slurry 4γ | 1.6 | 10 |
| Example 51γ | Negative electrode 5γ | Negative electrode mixture slurry 5γ | 1.6 | 10 |
| Example 52γ | Negative electrode 6γ | Negative electrode mixture slurry 6γ | 1.6 | 10 |
| Example 53γ | Negative electrode 7γ | Negative electrode mixture slurry 7γ | 1.6 | 10 |
| Example 54γ | Negative electrode 8γ | Negative electrode mixture slurry 8γ | 1.6 | 10 |
| Example 55γ | Negative electrode 9γ | Negative electrode mixture slurry 9γ | 1.6 | 10 |
| Example 56γ | Negative electrode 10γ | Negative electrode mixture sluny 10γ | 1.6 | 10 |
| Example 57γ | Negative electrode 11γ | Negative electrode mixture slurry 11γ | 1.6 | 10 |
| Example 58γ | Negative electrode 12γ | Negative electrode mixture slurry 12γ | 1.6 | 10 |
| Example 59γ | Negative electrode 13γ | Negative electrode mixture slurry 13γ | 1.6 | 10 |
| Example 60γ | Negative electrode 14γ | Negative electrode mixture slurry 14γ | 1.6 | 10 |
| Example 61γ | Negative electrode 15γ | Negative electrode mixture slurry 15γ | 1.6 | 10 |
| Example 62γ | Negative electrode 16γ | Negative electrode mixture slurry 16γ | 1.6 | 10 |
| Example 63γ | Negative electrode 17γ | Negative electrode mixture slurry 17γ | 1.6 | 10 |
| Example 64γ | Negative electrode 18γ | Negative electrode mixture slurry 18γ | 1.6 | 10 |
| Example 65γ | Positive electrode 19γ | Positive electrode mixture slurry 19γ | 3.1 | 20 |
| Example 66γ | Positive electrode 20γ | Positive electrode mixture slurry 20γ | 3.1 | 20 |
| Comparative Example 11γ | Comparative negative electrode 1γ | Negative electrode comparative mixture slurry 1γ | 1.6 | 10 |

# EP 3 950 108 B1

(continued)

| Table 5γ | Electrode film | Mixture slurry | Electrode density (g/cc) | Basis weight (mg/cm$^2$) |
|---|---|---|---|---|
| Comparative Example 12γ | Comparative positive electrode 2γ | Positive electrode comparative mixture slurry 2γ | 3.1 | 20 |
| Comparative Example 13γ | Comparative negative electrode 3γ | Negative electrode comparative mixture slurra 3γ | 1.6 | 10 |
| Comparative Example 14γ | Comparative negative electrode 4γ | Negative electrode comparative mixture slurry 4γ | 1.6 | 10 |
| Comparative Example 15γ | Comparative negative electrode 5γ | Negative electrode comparative mixture slurry 5γ | 1.6 | 10 |
| Example 67γ | Negative electrode 21γ | Negative electrode mixture slurry 21γ | 1.6 | 10 |
| Example 68γ | Negative electrode 22γ | Negative electrode mixture siurry 22γ | 1.6 | 10 |
| Example 69γ | Positive electrode 23γ | Positive electrode mixture slurry 23γ | 3.1 | 20 |

<Production of non-aqueous electrolyte secondary battery>

The negative electrode and the positive electrode shown in Table 6γ were punched out into 50 mm×45 mm and 45 mm×40 mm, respectively, and a separator (porous polypropylene film) inserted therebetween was inserted into an aluminum laminate bag and dried in an electric oven at 70°C for 1 hour. Then, 2 mL of an electrolyte solution (a non-aqueous electrolyte solution obtained by preparing a mixed solvent obtained by mixing ethylene carbonate, dimethyl carbonate, and diethyl carbonate at a ratio of 1:1:1 (volume ratio), additionally adding 1 part by mass of VC (vinylene carbonate) with respect to 100 parts by mass as an additive, and then dissolving LiPF$_6$ at a concentration of 1 M) was injected into a glove box filled with argon gas, and the aluminum laminate was then sealed to produce non-aqueous electrolyte secondary batteries 1γ to 23γ, and comparative non-aqueous electrolyte secondary batteries 1γ to 4γ.

(Examples 70γ, 84γ, 88γ, 89γ, 91γ and 92γ are not according to the present invention)

[Table 21]

| Table 6γ | Non-aqueous electrolyte secondary battery | Positive electrode | Negative Electrode | Rate properties | Cycle properties |
|---|---|---|---|---|---|
| Example 70γ | Non-aqueous electrolyte secondary battery 1γ | Standard positive electrode | Negative electrode 1γ | O | O |
| Example 71γ | Non-aqueous electrolyte secondary battery 2γ | Standard positive electrode | Negative electrode 2γ | ⊙ | ⊙ |
| Example 72γ | Non-aqueous electrolyte secondary battery 3γ | Standard positive electrode | Negative electrode 3γ | ⊙ | ⊙ |
| Example 73γ | Non-aqueous electrolyte secondary battery 4γ | Standard positive electrode | Negative electrode 4γ | O | O |
| Example 74γ | Non-aqueous electrolyte secondary battery 5γ | Standard positive electrode | Negative electrode 5γ | O | ⊙ |

80

(continued)

| Table 6γ | Non-aqueous electrolyte secondary battery | Positive electrode | Negative Electrode | Rate properties | Cycle properties |
|---|---|---|---|---|---|
| Example 75γ | Non-aqueous electrolyte secondary battery 6γ | Standard positive electrode | Negative electrode 6γ | O | ⊙ |
| Example 76γ | Non-aqueous electrolyte secondary battery 7γ | Standard positive electrode | Negative electrode 7γ | O | O |
| Example 77γ | Non-aqueous electrolyte secondary battery 8γ | Standard positive electrode | Negative electrode 8γ | O | O |
| Example 78γ | Non-aqueous electrolyte secondary battery 9γ | Standard positive electrode | Negative electrode 9γ | O | O |
| Example 79γ | Non-aqueous electrolyte secondary battery 10γ | Standard positive electrode | Negative electrode 10γ | O | O |
| Example 80γ | Non-aqueous electrolyte secondary battery 11γ | Standard positive electrode | Negative electrode 11γ | O | O |
| Example 81γ | Non-aqueous electrolyte secondary battery 12γ | Standard positive electrode | Negative electrode 12γ | O | O |
| Example 82γ | Non-aqueous electrolyte secondary battery 13γ | Standard positive electrode | Negative electrode 13γ | ⊙ | O |
| Example 83γ | Non-aqueous electrolyte secondary battery 14γ | Standard positive electrode | Negative electrode 14γ | ⊙ | ⊙ |
| Example 84γ | Non-aqueous electrolyte secondary battery 15γ | Standard positive electrode | Negative electrode 15γ | O | ⊙ |
| Example 85γ | Non-aqueous electrolyte secondary battery 16γ | Standard positive electrode | Negative electrode 16γ | ⊙ | ⊙ |
| Example 86γ | Non-aqueous electrolyte secondary battery 17γ | Standard positive electrode | Negative electrode 17γ | ⊙ | ⊙ |
| Example 87γ | Non-aqueous electrolyte secondary battery 18γ | Standard positive electrode | Negative electrode 18γ | O | O |
| Example 88γ | Non-aqueous electrolyte secondary battery 19γ | Positive electrode 19γ | Negative electrode 3γ | ○ | ⊙ |
| Example 89γ | Non-aqueous electrolyte secondary battery 20γ | Positive electrode 20γ | Negative electrode 3γ | ⊙ | ⊙ |

(continued)

| Table 6γ | Non-aqueous electrolyte secondary battery | Positive electrode | Negative Electrode | Rate properties | Cycle properties |
|---|---|---|---|---|---|
| Comparative Example 16γ | Comparative non-aqueous electrolyte secondary battery 1γ | Standard positive electrode | Comparative negative electrode 1γ | × | × |
| Comparative Example 17γ | Comparative non-aqueous electrolyte secondary battery 2γ | Standard positive electrode | Comparative negative electrode 3γ | ○ | × |
| Comparative Example 18γ | Comparative non-aqueous electrolyte secondary battery 3γ | Standard positive electrode | Comparative negative electrode 4γ | × | × |
| Comparative Example 19γ | Comparative non-aqueous electrolyte secondary battery 4γ | Standard positive electrode | Comparative negative electrode 5γ | ○ | × |
| Example 90γ | Non-aqueous electrolyte secondary battery 21γ | Standard positive electrode | Negative electrode 21γ | ⊙ | ⊙ |
| Example 91γ | Non-aqueous electrolyte secondary battery 22γ | Standard positive electrode | Negative electrode 22γ | ⊙ | ⊙ |
| Example 92γ | Non-aqueous electrolyte secondary battery 23γ | Positive electrode 23γ | Negative electrode 3γ | ⊙ | ⊙ |

In the above examples, the dispersant was a copolymer containing a (meth)acrylonitrile-derived unit, and one or more monomer units selected from the group consisting of an active hydrogen group-containing monomer, a basic monomer, and a (meth)acrylic acid alkyl ester, and in the copolymer, a conductive material dispersed material containing 40 to 99% by mass of the (meth)acrylonitrile-derived unit and having a weight average molecular weight of 5,000 to 50,000 was used. In the examples, non-aqueous electrolyte secondary batteries having better cycle properties than those of comparative examples were obtained. In particular, in the conductive material dispersed material containing 75% by mass of the (meth)acrylonitrile-derived unit and having a weight average molecular weight of 5,000 to 50,000, since the acrylonitrile-derived unit had a cyclic structure, non-aqueous electrolyte secondary batteries having better cycle properties than those of comparative examples were obtained. Therefore, it can be clearly understood that the present invention can provide a non-aqueous electrolyte secondary battery having cycle properties that cannot be realized with a conventional conductive material dispersed material.

[Example group δ]

<Method of measuring molecular weight, and method of calculating molecular weight distribution and proportion of components having molecular weight of 1,000 or less>

The weight average molecular weight (Mw) and the number average molecular weight (Mn) were measured by a gel permeation chromatographic (GPC) device including an RI detector, and based on the obtained Mw and Mn, the molecular weight distribution (Mw/Mn) and the proportion of components having a molecular weight of 1,000 or less were calculated. For the device, HLC-8320GPC (commercially available from Tosoh Corporation) was used, and three separation columns were connected in series, "TSK-GELSUPER AW-4000," "AW-3000," and "AW-2500" (commercially available from Tosoh Corporation) were used as fillers in order, and the measurement was performed at an oven temperature of 40°C using an N,N-dimethylformamide solution containing 30 mM trimethylamine and 10 mM LiBr as an eluent at a flow rate of 0.6 ml/min. The sample was prepared in a solvent including the above eluent at a concentration of 1 wt%, and 20 microliters thereof was injected. The molecular weight was a polystyrene conversion value.

<Infrared spectroscopic analysis according to total reflection measurement method>

The infrared spectroscopic analysis of the dispersant was performed using an infrared spectrophotometer (Nicolet iS5 FT-IR spectrometer, commercially available from Thermo Fisher Scientific). In addition, in the case of the conductive material dispersed material, the conductive material was separated by centrifugation, and the separated supernatant was dried with hot air at 100°C to prepare a measurement sample.
Measurement of the viscosity of the conductive material dispersed material, and evaluation of the stability of the dispersed material; evaluation of the electrical conductivity and evaluation of the adhesiveness of the electrode film using the positive electrode mixture slurry; and evaluation of rate properties and evaluation of cycle properties of the non-aqueous electrolyte secondary battery were performed according to the same method and criteria as in Example group γ.

<Measurement of complex modulus of elasticity and phase angle of conductive material dispersed material>

For the complex modulus of elasticity and the phase angle of the conductive material dispersed material, dynamic viscoelasticity measurement was performed in a distortion rate range from 0.01% to 5% using a rheometer (RheoStress1 rotary rheometer, commercially available from Thermo Fisher) with a 2° cone having a diameter of 60 mm, at 25°C and a frequency of 1 Hz, for evaluation. If the obtained complex modulus of elasticity was smaller, the dispersibility was better, and if the obtained complex modulus of elasticity was higher, the dispersibility was poorer. In addition, if the obtained phase angle was larger, the dispersibility was better, and if the obtained phase angle was smaller, the dispersibility was poorer.
Determination criteria for complex modulus of elasticity

⊙: less than 5 Pa (very good)
O: 5 Pa or more and less than 20 Pa (fair)
×: 20 Pa or more (poor)
××: 100 Pa or more (very poor)

Determination criteria for phase angle

⊙: 45° or more (very good)
O: 30° or more and less than 45° (good)
△: 19° or more and less than 30° (fair)
×: less than 19° (poor)

(Production Example 1) Production of dispersant (C-1δ)

100 parts of acetonitrile was put into a reaction container including a gas inlet pipe, a thermometer, a condenser, and a stirrer, and the inside was purged with nitrogen gas. The inside of the reaction container was heated to 70°C and a mixture containing 100.0 parts of acrylonitrile, 4.0 parts of 3-mercapto-1,2-propanediol and 1.0 part of 2,2'-azobis(2,4-dimethylvaleronitrile) (V-65, commercially available from NOF Corporation) was added dropwise over 3 hours, and a polymerization reaction was performed. After dropwise addition was completed, the reaction was additionally performed at 70°C for 1 hour and 0.5 parts of V-65 was then added, and the reaction was additionally continued at 70°C for 1 hour to obtain a desired product as a precipitate. Then, the non-volatile content was measured and it was confirmed that the conversion ratio exceeded 95%. The product was filtered off under a reduced pressure and washed with 100 parts of acetonitrile, and the solvent was then completely removed by performing drying under a reduced pressure to obtain a dispersant (C-1δ). The weight average molecular weight (Mw) of the dispersant (C-1δ) was 5,000, the molecular weight distribution (Mw/Mn) was 1.8, and the proportion of components having a molecular weight of 1,000 or less was 3.5%.

(Production Examples 2δ to 5δ) Production of dispersants (C-2δ) to (C-5δ)

Dispersants (C-2δ) to (C-5δ) were produced in the same manner as in Production Example 1δ except that monomers used were changed according to Table 1δ. The weight average molecular weights (Mw) of the dispersants were as shown in Table 1δ.

[Table 22]

| Table 1δ | | | | | | |
|---|---|---|---|---|---|---|
| | Dispersant | Monomer | | Weight average molecular weight (Mw) | Proportion of component having a molecular weight of 1,000 or less | Molecular weight distribution |
| | | AN | HEA | | | |
| Production Example 1δ | C-1δ | 100 | - | 5,000 | 3.5% | 1.8 |
| Production Example 2δ | C-2δ | 100 | - | 30,000 | 0.8% | 1.9 |
| Production Example 3δ | C-3δ | 100 | - | 150,000 | 0.7% | 2.2 |
| Production Example 4δ | C-4δ | 100 | - | 450,000 | 0.2% | 2.7 |
| Production Example 5δ | C-5δ | 99.5 | 0.5 | 30,000 | 0.8% | 1.9 |

The monomers shown in Table 1δ are abbreviated as follows.

AN: acrylonitrile
HEA: hydroxyethyl acrylate

(Production Example 6δ) Production of dispersant (C-6δ)

50 parts of the dispersant (C-2δ) obtained in Production Example 2δ was added to 198 parts of purified water, and the mixture was stirred with a disper to prepare a slurry. Next, 2.0 parts of a 1 N sodium hydroxide aqueous solution was added dropwise at 25°C, and the mixture was stirred with a disper for 2 hours while heating in a water bath. In IR measurement (device: FT/IR-410, commercially available from JASCO Corporation), it was confirmed that the intensity of the peak derived from the cyano group was reduced to 80% or less and it was conformed that the cyclic structure was formed (Fig. 1). Next, washing with purified water was performed, and filtering and drying were performed to obtain a dispersant (C-6δ). The weight average molecular weight (Mw) of the dispersant (C-6δ) was 29,000, the molecular weight distribution was 1.9, and the proportion of components having a molecular weight of 1,000 or less was 0.8%.
The molecular weight distributions (Mw/Mn) of the dispersant (C-1δ) to the dispersant (C-6δ) were all in a range of 1.0 to 3.0. In addition, the proportions of the components having a molecular weight of less than 1,000 were all 4% or less.

<Production of conductive material dispersed material>

(Examples 1δ to 9δ being not according to the present invention and Comparative Examples 1δ to 3δ)

According to the compositions and dispersion times shown in Table 2δ, a dispersant, an additive, and a dispersion medium were put into a glass bottle (M-225, commercially available from Hakuyo Glass Co., Ltd.) and sufficiently mixed and dissolved or mixed and a conductive material was then added thereto and the mixture was dispersed with a paint conditioner using zirconia beads (with a bead diameter of 0.5 mmφ) as media to obtain conductive material dispersed materials (dispersed material 1δ to dispersed material 9δ, and comparative dispersed materials 1δ to 3δ). As shown in Table 2δ, the conductive material dispersed materials (dispersed material 1δ to dispersed material 9δ) of the present invention all had low viscosity and good storage stability.

[Table 23]

| Table 2δ | | | | | | | | | | | | |
|---|---|---|---|---|---|---|---|---|---|---|---|---|
| Example | Conductive material dispersed material | Conductive material | | Dispersant | | Additive | | Dispersion time | Initial viscosity | Stability | Complex modulus of elasticity (Pa) | Phase angle (°) |
| | | Type | Addition amount (parts) | Type | Addition amount (parts) | Type | Addition amount (parts) | (hour) | | | | |
| Example 1-1δ | Dispersed material 1δ | 8S | 2 | C-1δ | 0.8 | NaOH | 0.04 | 8 | ○ | ○ | ○ | ○ |
| Example 1-2δ | Dispersed material 2δ | 8S | 2 | C-2δ | 0.8 | NaOH | 0.04 | 8 | ⊙ | ○ | ⊙ | ⊙ |
| Example 1-3δ | Dispersed material 3δ | 8S | 2 | C-3δ | 0.8 | NaOH | 0.04 | 8 | ⊙ | ○ | ⊙ | ⊙ |
| Example 1-4δ | Dispersed material 4δ | 8S | 2 | C-4δ | 0.8 | NaOH | 0.04 | 8 | ○ | ○ | ○ | ○ |
| Example 1-5δ | Dispersed material 5δ | 8S | 2 | C-5δ | 0.8 | NaOH | 0.04 | 8 | ⊙ | ○ | ⊙ | ⊙ |
| Example 1-6δ | Dispersed material 6δ | 8S | 2 | C-6δ | 0.8 | NaOH | 0.04 | 8 | ⊙ | ○ | ⊙ | ⊙ |
| Example 1-7δ | Dispersed material 7δ | 8S | 2 | C-2δ | 0.8 | - | 0 | 8 | ○ | ○ | ○ | ○ |
| Example 1-8δ | Dispersed material 8δ | 100T | 3 | C-2δ | 0.6 | NaOH | 0.03 | 3 | ⊙ | ○ | ⊙ | ⊙ |
| Example 1-9δ | Dispersed material 9δ | HS-100 | 20 | C-2δ | 0.6 | NaOH | 0.03 | 1 | ⊙ | ○ | ⊙ | ⊙ |
| Comparative Example 1-1δ | Comparative dispersed material 1δ | 8S | 2 | PVP | 0.8 | NaOH | 0.04 | 8 | × | × | × | × |
| Comparative Example 1-2δ | Comparative dispersed material 2δ | 8S | 2 | PVA | 0.8 | NaOH | 0.04 | 8 | × | × | × | × |

| Table 2δ | | | | | | | | | | | | |
|---|---|---|---|---|---|---|---|---|---|---|---|---|
| Example | Conductive material dispersed material | Conductive material | | Dispersant | | Additive | | Dispersion time | Initial viscosity | Stability | Complex modulus of elasticity (Pa) | Phase angle (°) |
| | | Type | Addition amount (parts) | Type | Addition amount (parts) | Type | Addition amount (parts) | (hour) | | | | |
| Comparative Example 1-3δ | Comparative dispersed material 3δ | 8S | 2 | PVB | 0.8 | NaOH | 0.04 | 8 | × | × | × | × |

The materials shown in Table 2$\delta$ are abbreviated as follows.

•HS-100: Denka Black HS-100 (acetylene black, an average primary particle size of 48 nm, a specific surface area of 39 m$^2$/g, commercially available from Denka Co., Ltd.)

·8S: JENOTUBE8S (multi-walled CNT, an outer diameter of 6 to 9 nm, commercially available from JEIO)

·100T: K-Nanos 100T (multi-walled CNT, an outer diameter of 10 to 15 nm, commercially available from Kumho Petrochemical)

·PVP: polyvinylpyrrolidone K-30 (a non-volatile content of 100%, commercially available from Nippon Shokubai Co., Ltd.)

·PVA: Kuraray POVAL PVA403 (a non-volatile content of 100%, commercially available from Kuraray Co., Ltd.)

·PVB: S-LEC BL-10 (a non-volatile content of 100%, commercially available from Sekisui Chemical Co., Ltd.)

·NMP: N-methylpyrrolidone

As shown in Fig. 1, it can be inferred that the dispersant C-6$\delta$ obtained by treating the dispersant C-2$\delta$ with a 1 N sodium hydroxide aqueous solution formed a ring structure because the intensity of the peak derived from the cyano group observed at about 2,250 cm$^{-1}$ was reduced to 80% or less. In addition, it is considered that, similarly, the dispersants obtained by centrifuging and collecting conductive materials of the conductive material dispersed materials 1$\delta$ to 6$\delta$, 8$\delta$, and 9$\delta$ also had a reduced peak derived from the cyano group and cyclized.

(Example 2-1$\delta$)

<Production of positive electrode mixture slurry>

According to the composition shown in Table 3$\delta$, the conductive material dispersed material (dispersed material 1$\delta$) and NMP in which 8% by mass PVDF was dissolved were put into a plastic container having a volume of 150 cm$^3$ and the mixture was then stirred at 2,000 rpm for 30 seconds using a rotation/revolution mixer (Awatori Rentaro, ARE-310, commercially available from Thinky Corporation) to obtain a conductive material-containing resin composition. Then, an active material was added thereto and the mixture was stirred at 2,000 rpm for 150 seconds using a rotation/revolution mixer (Awatori Rentaro, ARE-310, commercially available from Thinky Corporation). In addition, NMP was then added thereto and the mixture was stirred at 2,000 rpm for 30 seconds using a rotation/revolution mixer (Awatori Rentaro, ARE-310, commercially available from Thinky Corporation) to obtain a positive electrode mixture slurry. The non-volatile content of the positive electrode mixture slurry was 75% by mass.

<Production of positive electrode>

Subsequently, the positive electrode mixture slurry was applied to an aluminum foil using an applicator so that the basis weight per unit of the electrode was 20 mg/cm$^2$ and the coating film was then dried in an electric oven at 120°C±5°C for 25 minutes to produce an electrode film. Then, the electrode film was rolled by a roll press (3t hydraulic roll press, commercially available from Thank Metal Co., Ltd.) so that the density was 3.1 g/cc to obtain a positive electrode 1$\delta$.

<Production of non-aqueous electrolyte secondary battery>

Next, the positive electrode 1$\delta$ and the standard negative electrode were punched out into 50 mm×45 mm and 45 mm×40 mm, respectively, and a separator (porous polypropylene film) inserted therebetween was inserted into an aluminum laminate bag and dried in an electric oven at 70°C for 1 hour. Then, 2 mL of an electrolyte solution (a non-aqueous electrolyte solution obtained by preparing a mixed solvent obtained by mixing ethylene carbonate, dimethyl carbonate, and diethyl carbonate at a ratio of 1:1:1 (volume ratio), additionally adding 1 part by mass of VC (vinylene carbonate) with respect to 100 parts by mass as an additive, and then dissolving LiPF$_6$ at a concentration of 1 M) was injected into a glove box filled with argon gas, and the aluminum laminate bag was then sealed to produce a battery 10.

<Production Example 7$\delta$ Production of standard negative electrode mixture slurry>

Acetylene black (Denka Black (registered trademark) HS100, commercially available from Denka Co., Ltd.,), CMC, and water were put into a plastic container having a volume of 150 ml and then stirred at 2,000 rpm for 30 seconds using a rotation/revolution mixer (Awatori Rentaro, ARE-310, commercially available from Thinky Corporation). In addition, artificial graphite was added as an active material, and the mixture was stirred at 2,000 rpm for 150 seconds using a rotation/revolution mixer (Awatori Rentaro, ARE-310, commercially available from Thinky Corporation). Subsequently, SBR was added thereto and the mixture was stirred at 2,000 rpm for 30 seconds using a rotation/revolution mixer (Awatori Rentaro, ARE-310, commercially available from Thinky Corporation) to obtain a standard negative electrode mixture slurry. The non-volatile content of the standard negative electrode mixture slurry was 48% by mass. The non-volatile content ratio of the active material :conductive material: CMC:SBR in the standard negative electrode mixture slurry was 97:0.5:1:1.5.

- HS-100: Denka Black HS-100 (acetylene black, an average primary particle size of 48 nm, a specific surface area of 39 m$^2$/g, commercially available from Denka Co., Ltd.)
- Artificial graphite: CGB-20 (commercially available from Nippon Graphite Industries, Co., Ltd.), a non-volatile content of 100%
- CMC: #1190 (commercially available from Daicel FineChem Co., Ltd.), a non-volatile content of 100%
- SBR: TRD2001 (commercially available from JSR), a non-volatile content of 48%

<Production Example 8δ Production of standard negative electrode>

The negative electrode mixture slurry was applied to a copper foil having a thickness of 20 μm as a current collector using an applicator and then dried in an electric oven at 80°C±5°C for 25 minutes. The basis weight per unit area of the electrode was adjusted to 10 mg/cm$^2$. In addition, the sample was rolled by a roll press (3t hydraulic roll press, commercially available from Thank Metal Co., Ltd.) to produce a negative electrode having a mixture layer density of 1.6 g/cm$^3$.

(Examples 2-2δ to 2-9δ being not according to the present invention and Comparative Examples 1δ to 3δ)

Positive electrode mixture slurries were produced according to the same method as in Example 2-1δ except that the type of the conductive material dispersed material and/or the composition of the mixture slurry was changed according to Table 3δ. Positive electrodes 2δ to 9δ, comparative positive electrodes 1δ to 3δ, batteries 2δ to 9δ, and comparative batteries 1δ to 3δ were produced using the obtained positive electrode mixture slurries.

[Table 24]

| Table 3δ | | | | | | | | |
|---|---|---|---|---|---|---|---|---|
| Example | Conductive material dispersed material | Positive electrode active material | | Conductive material | | Dispersant | | PVDF |
| | | Type | Addition amount (parts) | Type | Addition amount (parts) | Type | Addition amount (parts) | Addition amount (parts) |
| Example 2-1δ | Dispersed material 1δ | NMC | 98.1 | 8S | 0.3 | C-1δ | 0.12 | 1.5 |
| Example 2-2δ | Dispersed material 2δ | NMC | 98.1 | 8S | 0.3 | C-2δ | 0.12 | 1.5 |
| Example 2-3δ | Dispersed material 3δ | NMC | 98.1 | 8S | 0.3 | C-3δ | 0.12 | 1.5 |
| Example 2-4δ | Dispersed material 4δ | NMC | 98.1 | 8S | 0.3 | C-4δ | 0.12 | 1.5 |
| Example 2-5δ | Dispersed material 5δ | NMC | 98.1 | 8S | 0.3 | C-55 | 0.12 | 1.5 |
| Example 2-6δ | Dispersed material 6δ | NMC | 98.1 | 8S | 0.3 | C-6δ | 0.12 | 1.5 |
| Example 2-7δ | Dispersed material 7δ | NMC | 98.1 | 8S | 0.3 | C-2δ | 0.12 | 1.5 |
| Example 2-8δ | Dispersed material 8δ | NMC | 97.9 | 100T | 0.5 | C-2δ | 0.10 | 1.5 |

(continued)

| Table 3δ | | | | | | | | |
|---|---|---|---|---|---|---|---|---|
| Example | Conductive material dispersed material | Positive electrode active material | | Conductive material | | Dispersant | | PVDF |
| | | Type | Addition amount (parts) | Type | Addition amount (parts) | Type | Addition amount (parts) | Addition amount (parts) |
| Example 2-9δ | Dispersed material 9δ | NMC | 95.4 | HS-100 | 3.0 | C-2δ | 0.09 | 1.5 |
| Comparative Example 2-1δ | Comparative dispersed material 1δ | NMC | 98.1 | 8S | 0.3 | PVP | 0.12 | 1.5 |
| Comparative Example 2-2δ | Comparative dispersed material 2δ | NMC | 98.1 | 8S | 0.3 | PVA | 0.12 | 1.5 |
| Comparative Example 2-3δ | Comparative dispersed material 3δ | NMC | 98.1 | 8S | 0.3 | PVB | 0.12 | 1.5 |

·NMC: NCM523 (composition: $LiNi_{0.5}Co_{0.2}Mn_{0.32A}O_2$, a non-volatile content of 100%, commercially available from Nippon Chemical Industrial Co., Ltd.)

·PVDF: Solef#5130 (a non-volatile content of 100%, commercially available from Solvey)

Table 4δ being not according to the present invention shows the volume resistivity and peeling strength of the positive electrodes 1δ to 9δ and the comparative positive electrodes 1δ to 3δ, and rate properties and cycle properties of the batteries 1δ to 9δ and the comparative batteries 1δ to 3δ.

[Table 25]

| Table 4δ | | | | | |
|---|---|---|---|---|---|
| Positive electrode | Electrical conductivity | Adhesiveness | Battery | Rate properties | Cycle properties |
| Positive electrode 1δ | ○ | ○ | Battery 1δ | ○ | ○ |
| Positive electrode 2δ | ⊙ | ⊙ | Battery 2δ | ⊙ | ⊙ |
| Positive electrode 3δ | ⊙ | ⊙ | Battery 3δ | ⊙ | ⊙ |
| Positive electrode 4δ | ○ | ⊙ | Battery 4δ | ○ | ○ |
| Positive electrode 5δ | ⊙ | ⊙ | Battery 5δ | ⊙ | ⊙ |
| Positive electrode 6δ | ⊙ | ⊙ | Battery 6δ | ⊙ | ⊙ |
| Positive electrode 7δ | ○ | ○ | Battery 7δ | ○ | ○ |
| Positive electrode 8δ | ⊙ | ⊙ | Battery 8δ | ⊙ | ⊙ |
| Positive electrode 9δ | ⊙ | ⊙ | Battery 9δ | ⊙ | ⊙ |
| Comparative positive electrode 1δ | × | × | Comparative battery 1δ | × | - |
| Comparative positive electrode 2δ | × | × | Comparative battery 2δ | × | - |
| Comparative positive electrode 3δ | × | × | Comparative battery 3δ | × | - |

The positive electrodes 1δ to 9δ had better electrical conductivity and adhesiveness than the comparative positive electrodes 1δ to 3δ. In addition, the batteries obtained using these positive electrodes had better rate properties and cycle properties than the comparative batteries. According to the present invention, it was possible to provide a non-aqueous electrolyte secondary battery having rate properties and cycle properties that were difficult to realize with conventional conductive material dispersed materials.

Priority is claimed on Japanese Patent Application No. 2019-66507 filed March 29, 2019, Japanese Patent Application No. 2019-89540 filed May 10, 2019, Japanese Patent Application No. 2019-114283 filed June 20, 2019, Japanese Patent Application No. 2019-138688 filed July 29, 2019, Japanese Patent Application No. 2020-4142, filed January 15, 2020, and Japanese Patent Application No. 2020-10631, filed January 27, 2020.

**Claims**

1. A dispersed material, comprising a dispersion medium, a dispersant, an object to be dispersed, and one selected from the group consisting of an inorganic base, an inorganic metal salt, and an organic base,

   wherein the dispersant is a polymer containing a (meth)acrylonitrile-derived unit and a unit derived from one or more monomers selected from the group consisting of an active hydrogen group-containing monomer, a basic monomer, and a (meth)acrylic acid alkyl ester,

      wherein the polymer contains 65 to 99% by mass of a (meth)acrylonitrile-derived unit, has a weight average molecular weight of 5,000 to 100,000, and
      the active hydrogen group-containing monomer is selected from the group consisting of a hydroxy group-containing monomer (a1) and a carboxyl group-containing monomer (a2),

   wherein the carboxyl-group containing monomer (a2) is (meth)acrylic acid,
   the (meth)acrylic acid-derived unit is 1 to 35% by mass,
   the dispersion medium is water alone or a mixed solvent containing water and a water-soluble solvent, and
   the object to be dispersed is a conductive carbon material.

2. The dispersed material of claim 1,
   wherein the acrylonitrile-derived unit in the dispersant comprises a cyclic structure.

3. A resin composition, comprising the dispersed material according to claim 1 or 2 and a binder resin.

4. A mixture slurry, comprising the resin composition according to claim 3 and an active material, wherein the active material for a positive electrode comprises an oxide of a transition metal, a composite oxide with lithium, a transition metal sulfide, or a combination thereof, and the active material for a negative electrode comprises metal Li, alloys, $Li_xFe_2O_3$, $Li_xFe_3O_4$, $Li_xWO_2$, lithium titanate, lithium vanadium, lithium siliconate, conductive polymers, artificial graphite, natural graphite, resin-baked carbon materials, or a combination thereof, wherein the alloys comprise tin alloys, silicon alloys or lead alloys, and x in $Li_xFe_2O_3$, $LixFe_3O_4$, $Li_xWO_2$ is a number of 0<x<1.

5. An electrode film, obtained by forming the mixture slurry according to claim 4 into a film.

6. A non-aqueous electrolyte secondary battery, comprising a positive electrode, a negative electrode, and a non-aqueous electrolyte,
   wherein at least one of the positive electrode and the negative electrode comprises the electrode film according to claim 5.

**Patentansprüche**

1. Dispergiertes Material, umfassend ein Dispersionsmedium, ein Dispergiermittel, einen zu dispergierenden Gegenstand und Eines, ausgewählt aus der Gruppe bestehend aus einer anorganischen Base, einem anorganischen Metallsalz und einer organischen Base,
   wobei das Dispergiermittel ein Polymer ist, das eine von (Meth)acrylnitril abgeleitete Einheit und eine Einheit enthält, die von einem oder mehreren Monomeren abgeleitet ist, ausgewählt aus der Gruppe bestehend aus einem aktiven Wasserstoff enthaltenden Monomer, einem basischen Monomer und einem (Meth)acrylsäure-Alkylester,

wobei das Polymer 65 bis 99 Masse-% von einer (Meth)acrylnitril abgeleiteten Einheit enthält, ein gewichtsmittleres Molekulargewicht von 5.000 bis 100.000 aufweist und

das aktive Wasserstoffgruppen enthaltende Monomer ausgewählt ist aus der Gruppe bestehend aus einem Hydroxygruppen enthaltenden Monomer (a1) und einem Carboxylgruppen enthaltenden Monomer (a2), wobei das carboxylgruppenhaltige Monomer (a2) (Meth)acrylsäure ist, die von (Meth)acrylsäure abgeleitete Einheit 1 bis 35 Masseprozent beträgt,

das Dispersionsmedium Wasser allein oder ein gemischtes Lösungsmittel ist, das Wasser und ein wasserlösliches Lösungsmittel enthält, und

der zu dispergierende Gegenstand ein leitfähiges Kohlenstoffmaterial ist.

2. Dispergiertes Material gemäß Anspruch 1,
wobei die von Acrylnitril abgeleitete Einheit in dem Dispersionsmittel eine zyklische Struktur umfasst.

3. Harzzusammensetzung, umfassend das dispergierte Material gemäß Anspruch 1 oder 2 und ein Bindemittelharz.

4. Mischungsaufschlämmung, umfassend die Harzzusammensetzung gemäß Anspruch 3 und ein aktives Material, wobei das aktive Material für eine positive Elektrode ein Oxid eines Übergangsmetalls, ein Mischoxid mit Lithium, ein Übergangsmetallsulfid oder eine Kombination davon umfasst, und das aktive Material für eine negative Elektrode Metall-Li, Legierungen, $Li_xFe_2O_3$, $LixFe_3O_4$, $Li_xWO_2$, Lithiumtitanat, Lithiumvanadium, Lithiumsilikonat, leitfähige Polymere, künstlichen Graphit, natürlichen Graphit, harzgebrannte Kohlenstoffmaterialien oder eine Kombination davon, wobei die Legierungen Zinnlegierungen, Siliziumlegierungen oder Bleilegierungen umfassen und x in $Li_xFe_2O_3$, $LixFe_3O_4$, $Li_xWO_2$ eine Zahl von 0<x<1 ist.

5. Elektrodenfilm, erhalten durch Verformen der Mischungsaufschlämmung gemäß Anspruch 4 zu einem Film.

6. Sekundärbatterie mit wasserfreiem Elektrolyt, umfassend eine positive Elektrode, eine negative Elektrode und einen wasserfreien Elektrolyten,
wobei wenigstens eine der positiven Elektrode und der negativen Elektrode den Elektrodenfilm gemäß Anspruch 5 umfasst.

**Revendications**

1. Matériau dispersé contenant un milieu de dispersion, un dispersant, un objet à disperser et un élément choisi dans le groupe constitué par une base inorganique, un sel de métal inorganique et une base organique,

dans lequel le dispersant est un polymère contenant un motif dérivé de (méth)acrtylonitrile et un motif dérivé d'un ou plusieurs monomères sélectionnés dans le groupe constitué par un monomère contenant un groupe hydrogène actif, un monomère basique et un ester alkylique d'acide (méth)acrylique,

dans lequel le polymère contient de 65 à 99 % en masse d'un motif dérivé de (méth)acrylonitrile, a un poids moléculaire moyen en poids de 5 000 à 100 000, et

le un monomère contenant un groupe hydrogène actif est sélectionné dans le groupe constitué par un monomère contenant un groupe hydroxy (a1) et un monomère contenant un groupe carboxyle (a2),

dans lequel le monomère contenant un groupe carboxyle (a2) est l'acide (méth)acrylique,

le motif dérivé de l'acide méth(acrylique) est de 1 à 35 % en masse,

le milieu de dispersion est de l'eau seule ou un solvant mixte contenant de l'eau et un solvant soluble dans l'eau, et

l'objet à disperser est un matériau carboné conducteur.

2. Matériau dispersé selon la revendication 1,
dans lequel le motif dérivé d'acrylonitrile dans le dispersant comprend une structure cyclique.

3. Composition de résine, comprenant le matériau dispersé selon la revendication 1 ou 2 et une résine de liant.

4. Suspension de mélange, comprenant la composition de résine selon la revendication 3 et un matériau actif, dans laquelle le matériau actif pour une électrode positive comprend un oxyde d'un métal de transition, un oxyde composite avec du lithium, un sulfure de métal de transition, ou une combinaison de ceux-ci, et le matériau actif pour une électrode négative comprend du Li métallique, des alliages, $Li_xFe_2O_3$, $LixFe_3O_4$, $Li_xWO_2$, du titanate de lithium, du vanadium de lithium, du siliconate de lithium, des polymères conducteurs, du graphite artificiel, du graphite naturel, des matériaux carbonés cuit en résine, ou des combinaisons de ceux-ci, dans laquelle les alliages comprennent des alliages d'étain, des alliages de silicone ou des alliages de plomb, et x dans $Li_xFe_2O_3$, $LixFe_3O_4$, $Li_xWO_2$ est un nombre de $0<x<1$.

**5.** Film d'électrode, obtenu en transformant la suspension de mélange selon la revendication 4 en un film.

**6.** Batterie secondaire à électrolyte non aqueux, comprenant une électrode positive, une électrode négative et un électrolyte non aqueux,
dans laquelle au moins l'une parmi l'électrode positive et l'électrode négative comprend le film d'électrode selon la revendication 5.

FIG. 1

**EP 3 950 108 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014193986 A
- JP 2003157846 A
- WO 2012091001 A
- WO 2018235722 A
- JP 2019066507 A
- JP 2019089540 A
- JP 2019114283 A
- JP 2019138688 A
- JP 2020004142 A
- JP 2020010631 A